# EUROPÄISCHE PATENTSCHRIFT

(11) **EP 2 305 383 B1**
(45) Veröffentlichungstag und Bekanntmachung des Hinweises auf die Patenterteilung: **27.04.2016**
(21) Anmeldenummer: 10179918.7
(22) Anmeldetag: 09.11.2005
(51) Int. Cl.: B01L 3/00, B01J 19/00, C12Q 1/68, G01N 1/00

(54) **VORRICHTUNGEN FÜR DIE DURCHFÜHRUNG UND ANALYSE VON MIKROARRAY-EXPERIMENTEN**
DEVICES FOR CARRYING OUT AND DIAGNOSING MICROARRAY EXPERIMENTS
DISPOSITIFS POUR EXECUTER ET ANALYSER DES EXPERIENCES A JEU ORDONNE DE MICRO-ECHANTILLONS

(30) Priorität: 09.11.2004 DE 102004054094; 24.11.2004 DE 102004056735
(43) Veröffentlichungstag der Anmeldung: 06.04.2011
(62) Teilanmeldung aus: 05813339.8
(73) Patentinhaber: Clondiag GmbH, 07749 Jena (DE)
(72) Erfinder: Ermantraut, Eugen, 07749 Jena (DE); Schulz, Torsten, 07749 Jena (DE); Woestemeyer, Anke, 07743 Jena (DE)
(74) Vertreter: Huenges, Martin

(56) Entgegenhaltungen:
- WO-A1-03/059516
- US-A1- 2003 134 320
- US-A1- 2004 038 388

## Beschreibung

Die vorliegende Erfindung betrifft Vorrichtungen für die parallele Durchführung von Mikroarray-Experimenten zum Nachweis von spezifischen Wechselwirkungen zwischen Sonden- und Targetmolekülen in einer Mikrotiterplatte sowie Verfahren zur Herstellung derartiger Vorrichtungen. Des Weiteren betrifft die Erfindung die Verwendung derartiger Vorrichtungen in einem Verfahren zum qualitatitven und/oder quantitativen Nachweis von spezifischen Wechselwirkungen zwischen Sonden- und Targetmolekülen.

Biomedizinische Tests basieren häufig auf dem Nachweis einer Wechselwirkung zwischen einem Molekül, das in bekannter Menge und Position vorhanden ist (der molekularen Sonde) und einem nachzuweisenden, unbekannten Molekül bzw. nachzuweisenden, unbekannten Molekülen (den molekularen Ziel- oder Targetmolekülen). Bei modernen Tests sind die Sonden in Form einer Substanzbibliothek auf Trägern, den so genannten Mikroarrays oder Chips abgelegt, so dass eine Probe parallel an mehreren Sonden gleichzeitig analysiert werden kann (D. J. Lockhart, E. A. Winzeler, Genomics, gene expression and DNA arrays; Nature 2000, 405, 827-836). Für die Herstellung der Mikroarrays werden die Sonden dabei üblicherweise in vorgegebener Art und Weise auf einer geeigneten, beispielsweise in WO 00/12575 beschriebenen Matrix immobilisiert (siehe z.B. US 5,412,087, WO 98/36827) bzw. synthetisch erzeugt (siehe z.B. US 5,143,854).

Der Nachweis einer Wechselwirkung zwischen der Sonde und dem Targetmolekül erfolgt üblicherweise folgendermaßen: Nach der Fixierung der Sonde bzw. der Sonden in vorgegebener Art und Weise an einer bestimmten Matrix in Form eines Mikroarrays werden die Targets in einer Lösung mit den Sonden in Kontakt gebracht und unter definierten Bedingungen inkubiert. Infolge der Inkubation findet zwischen Sonde und Target eine spezifische Wechselwirkung statt. Die dabei auftretende Bindung ist deutlich stabiler als die Bindung von Targetmolekülen an Sonden, die für das Targetmolekül nicht spezifisch sind. Zum Entfernen von Targetmolekülen, die nicht spezifisch gebunden worden sind, wird das System mit entsprechenden Lösungen gewaschen oder erwärmt.

Der Nachweis der spezifischen Wechselwirkung zwischen einem Target und seiner Sonde kann dann durch eine Vielzahl von Verfahren erfolgen, die in der Regel von der Art des Markers abhängen, der vor, während oder nach der Wechselwirkung des Targetmoleküls mit dem Mikroarray in Targetmoleküle eingebracht worden ist. Typischerweise handelt es sich bei solchen Markern um fluoreszierende Gruppen, so dass spezifische Target-Sonden-Wechselwirkungen mit hoher Ortsauflösung und im Vergleich zu anderen herkömmlichen Nachweismethoden, vor allem massensensitiven Methoden, mit geringem Aufwand fluoreszenzoptisch ausgelesen werden können (A. Marshall, J. Hodgson, DNA chips: An array of possibilities, Nature Biotechnology 1998, 16, 27-31; G. Ramsay, DNA Chips: State of the art, Nature Biotechnology 1998, 16, 40-44).

Abhängig von der auf dem Mikroarray immobilisierten Substanzbibliothek und der chemischen Natur der Targetmoleküle können anhand dieses Testprinzips Wechselwirkungen zwischen Nukleinsäuren und Nukleinsäuren, zwischen Proteinen und Proteinen sowie zwischen Nukleinsäuren und Proteinen untersucht werden (zur Übersicht siehe F. Lottspeich, H. Zorbas, 1998, Bioanalytik, Spektrum Akademischer Verlag, Heidelberg Berlin).

Als Substanzbibliotheken, die auf Mikroarrays oder Chips immobilisiert werden können, kommen z.B. Antikörper-Bibliotheken, Rezeptor-Bibliotheken, Peptid-Bibliotheken und Nukleinsäure-Bibliotheken in Frage. Die Nukleinsäure-Bibliotheken nehmen die mit Abstand wichtigste Rolle ein. Es handelt sich dabei um Mikroarrays, auf denen Desoxyribonukleinsäure- (DNA) Moleküle oder Ribonukleinsäure- (RNA) Moleküle immobilisiert sind.

Voraussetzung für die Bindung eines beispielsweise mit einer Fluoreszenzgruppe markierten Targetmoleküls in Form eines DNA- oder RNA-Moleküls an eine Nukleinsäuresonde des Mikroarrays ist, dass sowohl Targetmolekül als auch Sondenmolekül in Form einer einzelsträngigen Nukleinsäure vorliegen. Nur zwischen solchen Molekülen kann eine effiziente und spezifische Hybridisierung stattfinden. Einzelsträngige Nukleinsäureziel- und Nukleinsäuresondenmoleküle erhält man in der Regel durch Hitzedenaturierung und optimale Wahl von Parametern wie Temperatur, Ionenstärke und Konzentration helixdestabilisierender Moleküle. Somit wird gewährleistet, dass nur Sonden mit nahezu perfekt komplementären, d.h. einander entsprechenden Sequenzen mit der Zielsequenz gepaart bleiben (A.A. Leitch, T. Schwarzacher, D. Jackson, I. J. Leitch, 1994, In vitro Hybridisierung, Spektrum Akademischer Verlag, Heidelberg Berlin Oxford).

Zur praktischen Durchführung dieser Tests werden die Mikroarrays oder Chips z.B. in geschlossenen Kammern fixiert, die über Ein- und Auslässe zum Wechsel der für die Waschschritte und Hybridisierungsschritte notwendigen Flüssigkeiten verfügen. Solche Systeme sind z.B. in US 6,287,850 und WO 01/02094 beschrieben. In DE 199 40 750 ist ein Träger für Analytbestimmungsverfahren beschrieben, der sich nach leichten konstruktiven Änderungen zur Verwendung für Array-Anwendungen auch im Rahmen dieser Erfindung eignet.

Zur Sequenzanalyse von DNA werden üblicherweise oberflächengebundene DNA-Bibliotheken verwendet, die auf Objektträgern aufgebracht sind. Zur Durchführung der Hybridisierungsreaktion auf diesen Objektträgern werden bislang spezielle Hybridisierungskammern oder Inkubationskammern verwendet. Um die Temperierung und das Vermischen der Hybridisierungslösung in diesen bislang bekannten Kammern zu gewährleisten, ist eine für die verwendete Vorrichtung speziell angepasste und deshalb aufwändige und teure Ausstattung erforderlich.

In DE 101 49 684 A1 ist eine Durchflusszelle beschrieben, die zur Durchführung einer PCR sowie von Hybridisierungsreaktionen auf DNA-Chips geeignet ist. Die dort beschriebene Durchflusszelle ist ein komplexes Bauteil, welches mit einer Reihe von technischen Merkmalen versehen ist, die eine Benutzung einer üblicherweise in Laboratorien verwendeten Ausstattung wie beispielsweise Geräten für die Handhabung von Mikrotiterplatten ausschließen.

In WO 01/02094 ist eine Kartusche beschrieben, die einen DNA-Chip umfasst. In dieser Kartusche kann sowohl eine PCR als auch eine Hybridisierungsreaktion auf einem DNA-Chip durchgeführt werden.

In WO 95/33846 ist ein Körper mit einer Vertiefung beschrieben, in die ein Substrat mit Nukleinsäuremolekülen bekannter Sequenz auf definierten Bereichen eingebaut wird. Der Körper weist einen abgeschlossenen Hohlraum auf, in den die Probenflüssigkeit injiziert werden kann. Die Einfüllkanäle werden über Septen abgedichtet und mit geeigneten Einstechkanülen geöffnet, um den Körper bzw. die Kartusche zu befüllen. Die Verwendung der vorstehend beschriebenen Kartuschen erfordert ebenfalls speziell dafür vorgesehene Vorrichtungen.

In WO 03/059516 ist ein Reaktionsgefäß, eine Vorrichtung sowie ein Verfahren zum Nachweis von spezifischen Wechselwirkungen zwischen molekularen Target- und Sondenmolekülen beschrieben. Die Anmeldung betrifft insbesondere ein Reaktionsgefäß, welches eine für ein Laborreaktionsgefäß typische Form und Größe aufweist und bei dem auf einer seiner Grundflächen ein Träger-Element mit darauf auf vorbestimmten Bereichen immobilisierten Sonden-Molekülen angeordnet ist.

In US 5,856,174 ist eine miniaturisierte integrierte Nukleinsäurediagnostik-Vorrichtung beschrieben. Diese Vorrichtung ermöglicht das Sammeln einer oder mehrerer Proben, deren Präparierung und die anschließende Durchführung mehrerer Probenanalysen. Eine derartige Vorrichtung dient zur automatischen Durchführung einer DNA-Chip-basierten Analyse durch Vereinigung und Miniaturisierung aller anfallenden Schritte auf einer Kartusche. Die Bereitstellung einer derartigen Vorrichtung ist äußerst aufwändig und teuer.

Anhand des vorstehend beschriebenen Standes der Technik wird deutlich, dass ein großer Bedarf an Vorrichtungen besteht, die zum einen auf einfache und kostengünstige Weise bereitgestellt werden können und zum anderen eine einfache parallele Durchführung von auf Mikroarrays basierenden Nachweistests ermöglichen. Insbesondere besteht ein Bedarf an Vorrichtungen zur Durchführung von auf Mikroarrays basierenden Tests, die die Verwendung von typischen im Laboralltag verwendeten Geräten und Instrumenten erlaubt. Allgemein besteht ein Bedarf an Geräten zur Durchführung von auf Mikroarrays basierenden Tests, die sich durch eine einfache Konstruktion, eine leichte Handhabbarkeit, das Vermeiden von Kontaminationsquellen, eine reproduzierbare Durchführbarkeit der Tests und niedrige Herstellungskosten auszeichnen.

In US 5,545,531, US 2004/0038388 und US 5,874,219 sind Verfahren zur parallelen Durchführung von Reaktionen mit Mikroarrays beschrieben. Die dabei eingesetzten Vorrichtungen umfassen einen mehrere Mikroarrays tragenden Wafer, der den Boden einer Multigefäßplatte bildet, wobei sich in jeder Vertiefung der Multigefäßplatte ein Mikroarray befindet. Die Detektion der Sonden-Target-Wechselwirkungen auf den Arrays erfolgt durch Auslesen der Signale von fluoreszierenden, Licht streuenden oder radioaktiven Markierungen. Die Ausgestaltung eines vollständigen Wafers als Boden einer Multigefäßplatte weist den Nachteil auf, dass bereits ein fehlerhaftes Array auf dem Wafer zu einer fehlerhaften Multigefäßplatte führt. Eine Qualitätskontrolle einzelner Mikroarrays auf dem Wafer ist nicht möglich.

Zwar wird in US 5,545,531 und US 5,874,219 auch die Möglichkeit erwähnt, einzelne Mikroarrays in Wells von Mikrotiterplatten anzuordnen. Bei den dort gezeigten Mikrotiterplatten bilden sich jedoch Leerräume zwischen den Seitenwänden der Wells und den Seitenflächen der Biochips. In derartige Leerräume können Analyt- sowie Waschlösungen verschleppt werden, so dass ein exakter Nachweis nicht mehr gewährleistet ist.

Nachteilig an den in US 5,545,531 und US 5,874,219 beschriebenen Detektionsverfahren ist schließlich der teilweise erhebliche technische Aufwand sowie die hohen Kosten, die mit den Nachweisverfahren verbunden sind. Ferner ist die Detektion der Labels nur von unten, d.h. durch den Boden der Mikrotiterplatte möglich, da mit den dort beschriebenen Detektionsverfahren eine Detektion durch die Inhomogenität des Flüssigkeitsspiegels der über dem Bioarray befindlichen Lösung nicht möglich ist. Selbst bei aufwändiger Entfernung der Lösung über dem Array würden Lösungsrückstände zurückbleiben, die die Detektion erschweren.

In WO 04/065009 wird ebenfalls eine Vorrichtung zur parallelen Durchführung von Mikroarrayverfahren beschrieben. Die Vorrichtung umfasst einen Träger mit mindestens einer Reaktionskammer, in welcher biologisch aktive Moleküle immobilisiert sind. Die Reaktionskammer weist ein Verhältnis von Bodenfläche zu Wandhöhe von mindestens 30 zu 1 auf. Durch diese verglichen mit Wells von herkömmlichen Mikrotiterplatten extrem niedrige Wand soll ein störender Einfluss der Begrenzung der Reaktionskammer auf die Detektion verhindert werden. Außerdem soll das Aufbringen der biologisch aktiven Moleküle auf einer Fläche innerhalb der Reaktionskammer durch die niedrige Wand erleichtert werden. Für die Nachweisreaktion auf dem Mikroarray und eventuelle Waschschritten ist ein Aufsatz in Form einer Volumenvergrößerungseinrichtung auf den Biochipträger erforderlich. Die Detektion kann durch verschiedene Verfahren wie Fluoreszenz, Lumineszenz oder spektroskopische Verfahren erfolgen. Nachteilig an den in WO 04/065009 beschriebenen Vorrichtungen ist der hohe technische Aufwand, der für die Detektion erforderlich ist, sowie die erschwerte Handhabung der Vorrichtung aufgrund der einzusetzenden Volumenvergrößerungseinrichtungen.

Der vorliegenden Erfindung liegt somit die Aufgabe zugrunde, eine Vorrichtung zur parallelen Durchführung von Array-Experimenten bereitzustellen, die sich durch einfache Konstruktion, leichte Handhabbarkeit und damit kostengünstige Herstellung auszeichnet. Eine weitere Aufgabe der vorliegenden Erfindung ist es, eine Vorrichtung für die parallele Durchführung von Mikroarray-Experimenten zur Verfügung zu stellen, die kompatibel mit gängigen Laborgeräten für die Prozessierung von Mikrotiterplatten ist und die die parallele Durchführung von Mikroarray-basierten Tests unter Vermeidung von Kontaminationsquellen erlaubt. Schließlich ist eine Aufgabe der vorliegenden Erfindung, eine Vorrichtung zur Durchführung von Array-Verfahren bereitzustellen, die den Einsatz von Detektionsverfahren mit relativ geringem technischem Aufwand erlaubt.

Diagnostische Tests auf Basis von Multiparameteranalysen mit oberflächengebundenen Substanzbibliotheken, d.h. auf der Basis von Mikroarrays, konnten sich bislang kaum durchsetzen, da einerseits die Validierung der Tests aufgrund ihrer Komplexität für einzelne diagnostische Laboratorien zu aufwändig war und andererseits die notwendigen Hilfsmittel bzw. Geräte nicht zur Verfügung standen, um standardisierte Testverfahren auf der Basis von Mikroarrays so bereitzustellen, dass ein Benutzer in die Lage versetzt wird, dieses Testverfahren ohne weitreichende Einweisungen durchführen zu können. Besonders problematisch war es bislang, validierte und der jeweiligen Medizinproduktegesetzgebung entsprechende Tests auf Array-Basis bereitzustellen, da aufgrund der Vielzahl der Handlungsanweisungen und Parametern für einen derartigen Test eine standardisierte Durchführung und Auswertung an unterschiedlichen Betriebstellen wirtschaftlich nicht möglich war. Dies gilt umso mehr, wenn ein hoher Durchsatz an Tests erreicht werden soll.

Eine weitere Aufgabe der vorliegenden Erfindung besteht somit in der Bereitstellung einer Vorrichtung, die eine einfache Durchführung von Mikroarray-basierten Tests insbesondere für diagnostische Zwecke gewährleistet. Ferner ist es eine weitere Aufgabe der vorliegenden Erfindung, standardisierte und ggf. validierte Test auf Mikroarray-Basis bereitzustellen, die unabhängig von Betreiber und Ort des Tests auf einfache Weise durchgeführt werden können.

Diese und weitere Aufgaben der vorliegenden Erfindung werden durch die Bereitstellung der in den Patentansprüchen angegebenen Gegenstände gelöst. Bevorzugte Ausführungsformen sind in den Unteransprüchen definiert.

Die Aufgaben werden erfindungsgemäß insbesondere dadurch gelöst, dass eine Anordnung zur Durchführung und zur Analyse von Mikroarray-Experimenten zum Nachweis einer spezifischen Wechselwirkung zwischen Sonden- und Targetmolekülen bereitgestellt wird, umfassend:
- einen Detektor, eingerichtet zum Erfassen einer spezifischen Wechselwirkung zwischen auf vorbestimmten Bereichen eines Mikroarrays angeordneten Sondenmolekülen und Targetmolekülen;
- eine Verarbeitungseinrichtung, eingerichtet zum Verarbeiten der mittels der Detektorvorrichtung erfassten spezifischen Wechselwirkung basierend auf einer extern selektiv vorgebbaren, validierten, Verarbeitungsanweisung. welche Informationen bereitstellt, unter welchen experimentellen Bedingungen, ausgewählt aus der Liste bestehend aus Art des verwendeten Mikroarrays, Art der zu verwendenden Wasch- und Pufferlösungen, Multiplexinggrad, Array-Layout, Zuordnungstabelle zur Zuordnung von auf einem vorbestimmten Bereich angeordneten Sondenspezies zu detektierten Signalen, zur Korrelation der Signale zueinander, und/oder zur Zuordnung der Signale zu der zu analysierenden Fragestellung, und Schwellwerttabelle, die angibt, ab welchem Messwert auf einem vorbestimmten Bereich ein detektiertes Signal als positives Signal eingestuft wird, ein oder mehrere Mikroarray-Experimente in dem Reaktionsgefäß oder auf der Mikrotiterplatte durchzuführen und/oder zu analysieren sind; und
- eine Schnittstelleneinrichtung, wobei mittels der Schnittstelleneinrichtung die Verarbeitungsanweisung extern vorgebbar ist.

Die erfindungsgemäßen Vorrichtungen für den Nachweis von spezifischen Wechselwirkungen zwischen molekularen Target- und Sondenmolekülen bieten den wesentlichen Vorteil, dass die Anschaffung von zusätzlichen Geräten bzw. einer zusätzlichen Ausstattung für die Durchführung der Nachweisreaktionen nicht erforderlich ist, da die üblicherweise in Laboren, insbesondere in biologischen Laboren, verwendeten Geräte für die Handhabung von herkömmlichen Mikrotiterplatten, die für die parallele Durchführung von medizinischen oder biologischen Tests oder Reaktionen eingesetzt werden, zum Einsatz kommen können. So sind beispielsweise herkömmliche Geräte zum Befüllen, Bewegen oder Temperieren von Mikrotiterplatten mit Standard-Formaten mit den erfindungsgemäßen Vorrichtungen kompatibel.

Die Anordnung der Mikroarrays in einer Mikrotiterplatte ermöglicht die Detektion der Wechselwirkungsreaktion zwischen Target- und Sondenmolekülen durch übliche Verfahren wie beispielsweise durch Fluoreszenzdetektion oder radiochemische Methoden. Als besonders vorteilhaft hat sich die Anwendung von Absorptionsmessungen erwiesen, da diese besonders kostengünstig durchzuführen sind. Eine derartige Absorptionsmessung kann beispielsweise unter Verwendung einer katalytisch gesteuerten Reaktion erfolgen, bei der ortsspezifisch an den Oberflächenbereichen, an denen auch eine Wechselwirkungsreaktion stattgefunden hat, ein Niederschlag gebildet wird. Zum Nachweis dieser Präzipitate kann ein Detektionsgerät verwendet werden, das eine oder mehrere Leuchtdioden beliebiger Emissionswellenlänge als Lichtquelle verwendet und beispielsweise eine CCD-Kamera zur ortsaufgelösten Detektion der Wechselwirkungsreaktion auf den vorbestimmten Bereichen des Chips aufweist.

Die vorliegende Anmeldung beschreibt weiterhin ein Verfahren zur Herstellung einer Vorrichtung für die parallele Durchführung von Mikroarray-Experimenten zum Nachweis einer spezifischen Wechselwirkung zwischen Sonden- und Targetmolekülen auf einer Mikrotiterplatte. Die Wells der in dem Verfahren eingesetzten Mikrotiterplatten weisen jeweils ein Mikroarray mit auf vorbestimmten Bereichen des Mikroarrays angeordneten Sondenmolekülen auf. Das beschriebene Verfahren umfasst die folgenden Schritte:
a) Erzeugen von Mikroarrays mit auf vorbestimmten Bereichen des Mikroarrays angeordneten Sondenmolekülen;
b) Überprüfen der Qualität der in Schritt a) erzeugten Mikroarrays;
c) Auswählen geeigneter Mikroarrays; und/oder
d) Fixieren der in Schritt c) ausgewählten Mikroarrays in Wells der Mikrotiterplatte.

Das beschriebene Verfahren zur Herstellung der Vorrichtungen zum Nachweis von Biopolymeren auf Mikrotiterplatten weist den wesentlichen Vorteil auf, dass es die Durchführung einer Qualitätskontrolle umfasst und so die Auswahl derjenigen Mikroarrays bzw. Chips ermöglicht, die den Anforderungen an die Qualität genügen.

Die vorliegende Anmeldung beschreibt außerdem eine Anordnung zur Durchführung und zur Analyse von Mikroarray-Experimenten zum Nachweis einer spezifischen Wechselwirkung zwischen Sonden- und Targetmolekülen, umfassend:
- eine Mikrotiterplatte, wobei in Wells der Mikrotiterplatte jeweils ein einzelnes Mikroarray mit auf vorbestimmten Bereichen des Mikroarrays angeordneten Sondenmolekülen integriert ist; und
- eine Detektorvorrichtung, eingerichtet zum Erfassen einer spezifischen Wechselwirkung zwischen auf vorbestimmten Bereichen des Mikroarrays angeordneten Sondenmolekülen und Targetmolekülen.

Die vorliegende Anmeldung beschreibt weiterhin eine Anordnung zur Durchführung und zur Analyse von Mikroarray-Experimenten zum Nachweis einer spezifischen Wechselwirkung zwischen Sonden- und Targetmolekülen, umfassend:
- mindestens ein Reaktionsgefäß, in das ein Mikroarray mit auf vorbestimmten Bereichen des Mikroarrays angeordneten Sondenmolekülen integriert ist;
- eine Detektorvorrichtung, eingerichtet zum Erfassen einer spezifischen Wechselwirkung zwischen auf vorbestimmten Bereichen des Mikroarrays angeordneten Sondenmolekülen und Targetmolekülen;
- eine Verarbeitungseinrichtung, eingerichtet zum Verarbeiten der mittels der Detektorvorrichtung erfassten spezifischen Wechselwirkung basierend auf einer extern selektiv vorgebbaren, vorzugsweise validierten, Verarbeitungsanweisung.

Bei einem weiteren Aspekt der vorliegenden Erfindung wird ein Verfahren zum Verarbeiten von einer mittels einer Anordnung nach einem der Ansprüche 1 bis 16 zur Durchführung und zur Analyse von Mikroarray-Experimenten erfassten spezifischen Wechselwirkung zwischen Targetmolekülen und auf vorbestimmten Bereichen eines Mikroarrays angeordneten Sondenmolekülen bereitgestellt, wobei bei dem Verfahren eine mittels eines Detektors erfasste spezifische Wechselwirkung basierend auf einer extern selektiv vorgegebenen Verarbeitungsanweisung verarbeitet wird, und die Verarbeitungsanweisung Informationen bereitstellt, unter welchen experimentellen Bedingungen, ausgewählt aus der Liste bestehend aus
- Art des verwendeten Mikroarrays;
- Art der zu verwendenden Wasch- und Pufferlösungen;
- Multiplexinggrad;
- Array-Layout;
- Zuordnungstabelle zur Zuordnung von auf einem vorbestimmten Bereich angeordneten Sondenspezies zu detektierten Signalen, zur Korrelation der Signale zueinander, und/oder zur Zuordnung der Signale zu der zu analysierenden Fragestellung; und
- Schwellwerttabelle, die angibt, ab welchem Messwert auf einem vorbestimmten Bereich ein detektiertes Signal als positives Signal eingestuft wird,
ein oder mehrere Mikroarray-Experimente in dem Reaktionsgefäß oder auf der Mikrotiterplatte durchzuführen und/oder zu analysieren sind.

Die vorliegende Anmeldung beschreibt weiterhin ein computerlesbares Speichermedium, in dem ein Programm zum Verarbeiten von einer mittels einer Anordnung zur Durchführung und zur Analyse von Mikroarray-Experimenten erfassten spezifischen Wechselwirkung zwischen Targetmolekülen und auf vorbestimmten Bereichen eines Mikroarrays angeordneten Sondenmolekülen gespeichert ist, wobei bei dem Programm, wenn es von einem Prozessor ausgeführt wird, eine mittels einer Detektorvorrichtung erfasste spezifische Wechselwirkung basierend auf einer extern selektiv vorgegebenen Verarbeitungsanweisung verarbeitet wird.

Die vorliegende Anmeldung beschreibt weiterhin ein Programm-Element, in dem ein Programm zum Verarbeiten von einer mittels einer Anordnung zur Durchführung und zur Analyse von Mikroarray-Experimenten erfassten spezifischen Wechselwirkung zwischen Targetmolekülen und auf vorbestimmten Bereichen eines Mikroarrays angeordneten Sondenmolekülen gespeichert ist, wobei bei dem Programm, wenn es von einem Prozessor ausgeführt wird, eine mittels einer Detektorvorrichtung erfasste spezifische Wechselwirkung basierend auf einer extern selektiv vorgegebenen Verarbeitungsanweisung verarbeitet wird.

Schließlich betrifft die vorliegende Erfindung die Verwendung der vorstehend beschriebenen erfindungsgemäßen Vorrichtungen und/oder Anordnungen für die parallele Durchführung von Mikroarray-Experimenten in einem Verfahren zum qualitativen und/oder quantitativen Nachweis der spezifischen Wechselwirkung zwischen Sonden- und Targetmolekülen, das die folgenden Schritte umfasst:
a) Wechselwirkung der Targets mit auf vorbestimmten Bereichen (Array-Elementen) des Mikroarrays angeordneten Sonden; und
b) Detektion der Wechselwirkung.

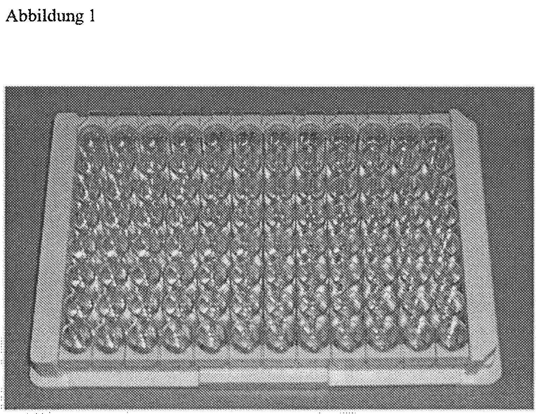

Zur Beschreibung der vorliegenden Erfindung werden ferner unter anderem folgende Definitionen verwendet:
Unter einer Mikrotiterplatte wird im Rahmen der vorliegenden Erfindung eine ein- oder zweidimensionale Anordnung bzw. ein Raster von separaten Reaktionsgefäßen bzw. Wells bzw. Kavitäten bzw. Vertiefungen auf einer Platte verstanden, die bzw. das für die parallele Durchführung von biologischen, chemischen und/oder labormedizinischen Tests bzw. Reaktionen eingesetzt wird. Mikrotiterplatten im Sinne der vorliegenden Erfindung weisen typische Formate und Dimensionen herkömmlicher Mikrotiterplatten auf, wie sie dem Fachmann bekannt sind und z.B. von den Herstellern Nunc (Roskilde, Dänemark,) Greiner Bio-One (Frickenhausen, Deutschland) oder VWR International (Wien, Österreich) angeboten werden Sie bestehen üblicherweise aus Polycarbonat oder Polypropylen. Beispielsweise umfassen die Mikrotiterplatten entsprechend sog. 96well- oder 384well-Mikrotiterplatten 8 x 12 oder 16 x 24 Kavitäten. Eine herkömmliche Mikrotiterplatte ist in Abbildung 1 gezeigt.

Die Außenabmessungen der erfindungsgemäßen Vorrichtungen entsprechen somit den für Mikrotiterplatten üblichen Standardmaßen von etwa 127,76 mm x etwa 85,48 mm Plattenlänge x Plattenbreite mit Wandhöhen der einzelnen Wells im Bereich von üblicherweise etwa 14 mm bis etwa 14,5 mm auf, so dass sie mit Standard-Laborgeräten für die Handhabung von Mikrotiterplatten z.B. befüllt, bewegt und temperiert werden können. Typische Befüll-Volumina der einzelnen Wells liegen wie bei Standard-Mikrotiterplatten-Formaten im Bereich von wenigen µl bis wenigen 100 µl, je nach Parallelitätsgrad der erfindungsgemäßen Vorrichtung.

Form und Geometrie der einzelnen Wells der erfindungsgemäßen Vorrichtung sind wie bei Standardformaten von Mikrotiterplatten und Strips beispielsweise zylinderförmig, konisch oder quaderförmig. Die Wells weisen vorzugsweise eine planare Bodengrundfläche auf, die üblicherweise eine rechteckige, quadratische oder kreisförmige Grundform besitzt.

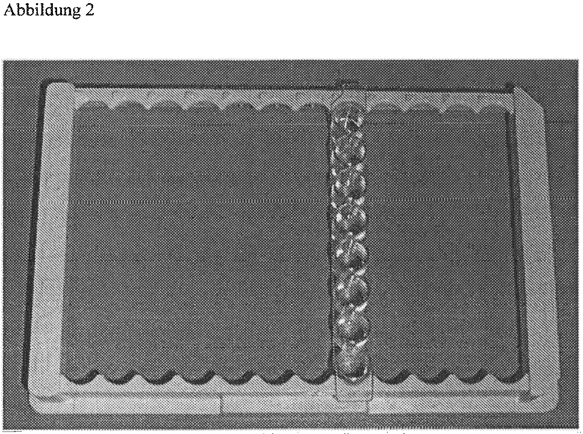

Der Begriff Mikrotiterplatte umfasst im Rahmen der vorliegenden Erfindung auch sog. Gefäßstreifen oder Strips oder ELISA-Strips. Unter einem derartigen Gefäßstreifen wird im Rahmen der vorliegenden Erfindung eine eindimensionale Anordnung von, z.B. acht oder zwölf, separaten Wells auf einer Platte bzw. einem Streifen, wie sie z.B. von den Herstellern Nunc und Greiner vertrieben werden. Ein herkömmlicher Gefäßstreifen ist in Abbildung 2 gezeigt.

Sind die Mikroarrays bei einer Ausführungsform der vorliegenden Erfindung in Wells eines derartigen Gefäßstreifens integriert, so können sie wie die herkömmlichen Strips in Standardform und -größe in Halterahmen mit Außenmaßen der Größe und Form von Mikrotiterplatten einzeln oder zusammengefasst zu einer Mikrotiterplatte bestehend aus bis zu zwölf oder mehr Streifen befestigt werden, um sie mit Standardgeräten zur Handhabung von Mikrotiterplatten zu prozessieren. Dies ermöglicht die individuelle Bereitstellung einer Mikrotiterplatte aus Strips mit Sondenarrays für verschiedene Anwendungen.

Unter einem Mikroarray bzw. einem Sonden-Array bzw. einem Bioarray wird im Rahmen der vorliegenden Erfindung eine Anordnung von molekularen Sonden bzw. einer Substanzbibliothek auf einem Träger verstanden, wobei die Position einer jeden Sondenspezies separat bestimmt ist. Vorzugsweise umfasst der Array definierte Stellen bzw. vorbestimmte Bereiche, so genannte Array-Elemente, die besonders bevorzugt in einem bestimmten Muster angeordnet sind, wobei jedes Array-Element üblicherweise nur eine Spezies an Sonden beinhaltet. Die Anordnung bzw. Immobilisierung der Moleküle bzw. Sonden auf dem Träger kann dabei durch kovalente oder nicht kovalente Wechselwirkungen erzeugt werden. Die Sonden sind dabei auf der dem Reaktionsraum dem Inneren der Wells zugewandten Seite des Trägers angeordnet. Eine Position innerhalb der Anordnung, d.h. des Arrays, wird üblicherweise als Spot bezeichnet.

Unter einer Sonde bzw. einem Sondenmolekül wird im Rahmen der vorliegenden Erfindung ein Molekül verstanden, das zum Nachweis anderer Moleküle durch ein bestimmtes, charakteristisches Bindungsverhalten bzw. eine bestimmte Reaktivität verwendet wird. Für die auf dem Array angeordneten Sonden kommt jede Art von Molekülen in Frage, die sich an feste Oberflächen koppeln lassen und eine spezifische Affinität aufweisen. In einer bevorzugten Ausführungsform handelt es sich um Biopolymere, insbesondere um Biopolymere aus den Klassen der Peptide, Proteine, Antigene, Antikörper, Kohlenhydrate, Nukleinsäuren und/oder deren Analoga und/oder Mischpolymere der vorstehend genannten Biopolymere. Besonders bevorzugt sind die Sonden Nukleinsäuren und/oder Nukleinsäureanaloga. Als Nukleinsäuren können sowohl DNA- als auch RNA-Moleküle verwendet werden. Beispielsweise kann es sich bei den Oligonukleotidsonden um Oligonukleotide mit einer Länge von 10 bis 100 Basen, vorzugsweise 15 bis 50 Basen und besonders bevorzugt von 20 bis 30 Basen Länge handeln, die auf der Array-Oberfläche immobilisiert sind.

Als Sonde werden insbesondere Nukleinsäuremoleküle definierter und bekannter Sequenz bezeichnet, die benutzt werden, um in Hybridisierungsverfahren Target-Moleküle nachzuweisen. Als Nukleinsäuren können sowohl DNA- als auch RNA-Moleküle verwendet werden. Beispielsweise kann es sich bei den Nukleinsäurensonden bzw. Oligonukleotidsonden um Oligonukleotide mit einer Länge von 10 bis 100 Basen, vorzugsweise 15 bis 50 Basen und besonders bevorzugt von 20 bis 30 Basen Länge handeln. Typischerweise handelt es sich erfindungsgemäß bei den Sonden um einzelsträngige Nukleinsäuremoleküle oder Moleküle von Nukleinsäureanaloga, bevorzugt einzelsträngige DNA-Moleküle oder RNA-Moleküle, die mindestens über einen Sequenzbereich verfügen, der zu einem Sequenzbereich der Target-Moleküle komplementär ist. Je nach Nachweisverfahren und Anwendung können die Sonden auf einem festen Träger in Form eines Mikroarrays immobilisiert sein. Darüber hinaus können sie je nach Nachweisverfahren radioaktiv oder nicht radioaktiv markiert sein, so dass sie über eine im Stand der Technik übliche Nachweisreaktion nachgewiesen werden können.

Unter einem Target bzw. einem Targetmolekül wird im Rahmen der vorliegenden Erfindung das mit einer molekularen Sonde nachzuweisende Molekül verstanden. Bei einer bevorzugten Ausführungsform der vorliegenden Erfindung handelt es sich bei den zu detektierenden Targets um Nukleinsäuren. Der erfindungsgemäße Sonden-Array kann jedoch analog auch zum Nachweis von Peptid/Sonden-Wechselwirkungen, Protein/Sonden-Wechselwirkungen, Kohlenhydrat/Sonden-Wechselwirkungen, Antikörper/Sonden-Wechselwirkungen, usw. eingesetzt werden.

Falls es sich im Rahmen der vorliegenden Erfindung bei den Targets um Nukleinsäuren bzw. Nukleinsäuremoleküle handelt, die durch eine Hybridisierung gegen auf einem Sondenarray angeordnete Sonden nachgewiesen werden, umfassen diese Target-Moleküle in der Regel Sequenzen mit einer Länge von 40 bis 10.000 Basen, bevorzugt von 60 bis 2.000 Basen, ebenfalls bevorzugt von 60 bis 1.000 Basen, insbesondere bevorzugt von 60 bis 500 Basen und am meisten bevorzugt von 60 bis 150 Basen. Ihre Sequenz beinhaltet gegebenenfalls die Sequenzen von Primern sowie die durch die Primer definierten Sequenzbereiche des Templates. Bei den Target-Molekülen kann es sich insbesondere um einzel- oder doppelsträngige Nukleinsäuremoleküle handeln, von denen ein Strang oder beide Stränge radioaktiv oder nicht radioaktiv markiert sind, so dass sie in einem der im Stand der Technik üblichen Nachweisverfahren nachgewiesen werden können.

Als Target-Sequenz wird erfindungsgemäß der Sequenzbereich des Targets bezeichnet, der durch Hybridisierung mit der Sonde nachgewiesen wird. Erfindungsgemäß wird auch davon gesprochen, dass dieser Bereich durch die Sonde adressiert wird.

Unter einer Substanzbibliothek wird im Rahmen der vorliegenden Erfindung eine Vielzahl von unterschiedlichen Sondenmolekülen verstanden, vorzugsweise mindestens zwei bis 1.000.000 unterschiedliche Moleküle, besonders bevorzugt mindestens 10 bis 10.000 unterschiedliche Moleküle und am meisten bevorzugt zwischen 100 und 1.000 unterschiedlichen Molekülen. Bei speziellen Ausgestaltungen kann eine Substanzbibliothek auch nur mindestens 50 oder weniger oder mindestens 30.000 unterschiedliche Moleküle umfassen. Die Substanzbibliothek ist vorzugsweise als Array auf einem Träger in der Reaktionskammer der erfindungsgemäßen Vorrichtung angeordnet. Die Anordnung der Substanzen bzw. Sondenmoleküle auf dem Träger erfolgt bevorzugt derart, dass jeder Substanz bzw. jeder Spezies von Sondenmolekülen ein bestimmter, eindeutig zu identifizierender Ort zugeordnet ist und dass jede Substanz bzw. jede Spezies von Sondenmolekülen getrennt von den anderen immobilisiert ist.

Unter einem Array-Element bzw. einem vorbestimmten Bereich bzw. einem Spot bzw. einem Array-Spot wird im Rahmen der vorliegenden Erfindung ein für die Deposition einer molekularen Sonde bestimmtes Areal auf einer Oberfläche verstanden, die Summe aller belegten Array-Elemente ist das Mikroarray bzw. das Sonden-Array.

Unter einem Trägerelement bzw. Träger bzw. Substanzbibliothekenträger bzw. Substrat wird im Rahmen der vorliegenden Erfindung ein Festkörper verstanden, auf dem das Sonden-Array aufgebaut ist. Bei dem Träger, der üblicherweise auch als Matrix bezeichnet wird, kann es sich z.B. um Objektträger oder Wafer oder aber auch keramische Materialien handeln.

Die Gesamtheit aus in Array-Anordnung auf dem Substrat abgelegten Molekülen bzw. der in Array-Anordnung auf dem Substrat bzw. der Detektionsfläche abgelegten Substanzbibliothek und dem Träger bzw. Substrat wird häufig auch als "Chip", "Biochip", "Mikroarray", "Microarray", "DNA-Chip", Sondenarray" etc. bezeichnet.

Herkömmliche Arrays bzw. Mikroarrays im Rahmen der vorliegenden Erfindung umfassen etwa 2 bis 10.000, vorzugsweise 10 bis 2.000 und besonders bevorzugt mindestens 30 oder mindestens 100 unterschiedliche Spezies von Sondenmolekülen bzw. Biopolymeren auf einer, vorzugsweise quadratischen, Fläche von z.B. 1 mm bis 5 mm x 1 mm bis 5 mm, vorzugsweise von 2 mm x 2 mm oder etwa 17,64 mm². In weiteren Ausgestaltungen umfassen Mikroarrays im Rahmen der vorliegenden Erfindung etwa 50 bis etwa 80.000, vorzugsweise etwa 100 bis etwa 65.000, besonders bevorzugt etwa 1.000 bis etwa 10.000 unterschiedliche Spezies von Sondenmolekülen auf einer Fläche von mehreren mm² bis mehreren cm², vorzugsweise etwa 1 mm² bis 10 cm², besonders bevorzugt etwa 2 mm² bis etwa 1 cm² und am meisten bevorzugt etwa 4 mm² bis etwa 6,25 mm². Beispielsweise weist ein herkömmliches Mikroarray von 100 bis 65.000 unterschiedliche Spezies von Sondenmolekülen auf einer Fläche von etwa 4,2 mm x etwa 4,2 mm auf. Weitere beispielhafte Größen der Flächen des Mikroarrays bzw. der Flächen für die Synthese der Biopolymere sind etwa 1 bis 10 mm x etwa 1 bis 10 mm, vorzugsweise etwa 2 bis 5 mm x etwa 2 bis 5 mm und besonders bevorzugt etwa 3,5 bis 4,5 mm x etwa 3,5 x 4,5 mm.

Unter einem Biochip-Array bzw. einer Biochip-Mikrotiterplatte wird im Rahmen der vorliegenden Erfindung eine Anordnung von Bioarrays bzw. Mikroarrays auf einer Mikrotiterplatte bzw. einem Gefäßstreifen verstanden, wobei die Bioarrays in den Wells der Mikrotiterplatte bzw. des Gefäßstreifens integriert sind. Die Mikrotiterplatte bzw. der Gefäßstreifen der erfindungsgemäßen Vorrichtung wird im Folgenden auch als Array-, Mikroarray-, Bioarray- oder Biochipträger bezeichnet.

Unter einer im Wesentlichen stufenlosen Integrierung eines Mikroarrays in ein Well wird im Rahmen der vorliegenden Erfindung verstanden, dass das Mikroarray derart in dem Well angeordnet ist, dass die Oberfläche des Bodens bzw. der Seitenwand bzw. des Deckels des Wells mit dem darauf bzw. darin angeordneten Mikroarray im Wesentlichen planar ist. Dadurch, dass das Mikroarray im Wesentlichen stufenlos in das Well integriert ist, liegen im Wesentlichen keine Leerräume zwischen den Seitenwänden des Mikroarrays und den benachbarten Wänden des Wells, die sich daraus ergeben können, dass die Grundfläche des Mikroarrays kleiner ist als die Grundfläche des Wells, auf dem das Mikroarray angeordnet ist, vor.

Unter einem einzelnen Mikroarray wird im Rahmen der vorliegenden Erfindung verstanden, dass auf dem Träger des Mikroarrays nur eine Substanzbibliothek angeordnet ist. D.h., die erfindungsgemäß in Wells einer Mikrotiterplatte integrierten Mikroarrays weisen keinen zusammenhängenden Träger auf. In ein Well ist somit ein separates Mikroarray integriert. Ein einzelnes Mikroarray ist nicht mit anderen Mikroarrays über einen gemeinsamen Träger verbunden.

Eine Markierung bezeichnet im Rahmen der vorliegenden Erfindung eine detektierbare Einheit, beispielsweise ein Fluorophor oder eine Ankergruppe, an die eine detektierbare Einheit oder ein die Umsetzung eines löslichen Edukts bzw. Substrats in ein unlösliches Produkt katalysierender Katalysator oder Kristallisationskeim gekoppelt werden kann.

Unter einem Edukt bzw. Substrat (im Sinne eines enzymatischen Substrats) wird im Rahmen der vorliegenden Erfindung ein im Reaktionsmedium gelöst vorliegendes Molekül bzw. eine Kombination von Molekülen verstanden, das bzw. die mit Hilfe eines Katalysators bzw. eines Kristallisationskeimes und/oder eines umsetzenden Agens lokal abgeschieden wird. Das umsetzende Agens kann beispielsweise ein reduzierenden Agens wie bei der Silberabscheidung oder ein oxidierendes Agens wie bei der Erzeugung eines Farbstoffs durch enzymatische Oxidation sein.

Als Probe bzw. Probenlösung bzw. Analyt wird im Rahmen der vorliegenden Erfindung die zu analysierende Flüssigkeit mit den nachzuweisenden und ggf. zu amplifizierenden Targetmolekülen bezeichnet.

Eine Vervielfältigungsreaktion bzw. eine Amplifikationsreaktion umfasst im Rahmen der vorliegenden Erfindung üblicherweise 10 bis 50 oder mehr Amplifikationszyklen, vorzugsweise etwa 25 bis 45 Zyklen, besonders bevorzugt etwa 40 Zyklen. Eine zyklische Amplifikationsreaktion ist im Rahmen der vorliegenden Erfindung vorzugsweise eine Polymerase-Kettenreaktion (polymerase chain reaction, PCR).

Unter einer molekularen Wechselwirkung bzw. einer Wechselwirkung wird im Rahmen der vorliegenden Erfindung insbesondere eine spezifische, kovalente oder nicht-kovalente Bindung zwischen einem Targetmolekül und einem immobilisierten Sondenmolekül verstanden. Bei einer bevorzugten Ausführungsform der vorliegenden Erfindung ist die Wechselwirkung zwischen Sonden- und Targetmolekülen eine Hybridisierung.

Als Hybridisierung wird die Bildung von doppelsträngigen Nukleinsäuremolekülen oder Duplexmolekülen aus komplementären einzelsträngigen Nukleinsäuremolekülen bezeichnet. Dabei findet die Assoziation vorzugsweise immer zu Paaren von A und T bzw. G und C statt. Eine Assoziation kann vorzugsweise auch über nicht klassische Basenpaarungen wie Wobbelbasenpaarungen z.B. zwischen Inosin und G bzw. Inosin und C erfolgen. Im Rahmen einer Hybridisierung können z.B. DNA-DNA-Duplexes, DNA-RNA- oder RNA-RNA-Duplexes gebildet werden. Durch eine Hybridisierung können auch Duplexes mit Nukleinsäureanaloga gebildet werden, wie z.B. DNA-PNA-Duplexes, RNA-PNA-Duplexes, DNA-LNA-Duplexes und RNA-LNA-Duplexes. Hybridisierungsexperimente werden üblicherweise benutzt, um die Sequenzkomplementarität und damit die Identität zwischen zwei verschiedenen Nukleinsäuremolekülen nachzuweisen.

Unter Verarbeitung bzw. Prozessierung werden im Rahmen der vorliegenden Erfindung insbesondere Probentransfer-, Inkubations-, Aufreinigungs-, Aufkonzentrierungs-, Markierungs-, Amplifikations-, Wechselwirkungs- bzw. Hybridisierungs- und/oder Wasch- und Spülschritte, sowie weitere zum Nachweis bzw. zur Detektion von Targets mit Hilfe von Substanzbibliotheken durchgeführte Verfahrensschritte verstanden.

Unter einem validierten Test bzw. einem validierten Experiment wird im Rahmen der vorliegenden Erfindung ein, insbesondere Mikroarray-basierter, Test verstanden, der unter denselben Bedingungen wie z.B. derselben Temperatur, ein definiertes Ergebnis liefert.

Unter einem Arraylayout wird im Rahmen der vorliegenden Erfindung die Anordnung der Spots auf einem Array, d.h. insbesondere die räumliche Verteilung der Spots auf einem Array, sowie ggf. die Anordnung und Art von Referenzspots verstanden.

Unter einer Zuordnungstabelle wird im Rahmen der vorliegenden Erfindung die Zuordnung der Spots bzw. der entsprechenden Signale zu den darauf angeordneten Sondenspezies, eine Korrelation von Spots bzw. der entsprechenden Signale zueinander wie z.B. die Korrelation von Spots mit Sonden, die gegen Wildtyp und Mutante gerichtet sind, und/oder die Zuordnung der Sonden-Spezies bzw. des entsprechenden Signals zu der zu analysierenden, insbesondere diagnostischen, Fragestellung verstanden.

Unter einer Schwellwerttabelle wird im Rahmen der vorliegenden Erfindung verstanden, ab welchem Messwert auf einem Spot ein Signal als positives Signal eingestuft wird.

Ein erster Gegenstand der vorliegenden Erfindung ist somit insbesondere eine Anordnung zur Durchführung und zur Analyse von Mikroarray-Experimenten zum Nachweis einer spezifischen Wechselwirkung zwischen Sonden- und Targetmolekülen, umfassend:
- einen Detektor, eingerichtet zum Erfassen einer spezifischen Wechselwirkung zwischen auf vorbestimmten Bereichen eines Mikroarrays angeordneten Sondenmolekülen und Targetmolekülen;
- eine Verarbeitungseinrichtung, eingerichtet zum Verarbeiten der mittels der Detektorvorrichtung erfassten spezifischen Wechselwirkung basierend auf einer extern selektiv vorgebbaren, validierten, Verarbeitungsanweisung. welche Informationen bereitstellt, unter welchen experimentellen Bedingungen, ausgewählt aus der Liste bestehend aus Art des verwendeten Mikroarrays, Art der zu verwendenden Wasch- und Pufferlösungen, Multiplexinggrad, Array-Layout, Zuordnungstabelle zur Zuordnung von auf einem vorbestimmten Bereich angeordneten Sondenspezies zu detektierten Signalen, zur Korrelation der Signale zueinander, und/oder der Zuordnung der Signale zu der zu analysierenden Fragestellung, und Schwellwerttabelle, die angibt, ab welchem Messwert auf einem vorbestimmten Bereich ein detektiertes Signal als positives Signal eingestuft wird, ein oder mehrere Mikroarray-Experimente in dem Reaktionsgefäß oder auf der Mikrotiterplatte durchzuführen und/oder zu analysieren sind; und
- eine Schnittstelleneinrichtung, wobei mittels der Schnittstelleneinrichtung die Verarbeitungsanweisung extern vorgebbar ist..

Die Erfindung bezieht sich weiterhin auf Anordnungen wie oben beschrieben, zusätzlich umfassend mindestens ein Reaktionsgefäß, in das ein Mikroarray mit auf vorbestimmten Bereichen des Mikroarrays angeordneten Sondenmolekülen integriert ist oder eine Mikrotiterplatte, wobei in Wells der Mikrotiterplatte jeweils ein einzelnes Mikroarray mit auf vorbestimmten Bereichen des Mikroarrays angeordneten Sondenmolekülen integriert ist.

Vorzugsweise ist in jedem Well der Mikrotiterplatte ein Mikroarray integriert. Es sind jedoch auch Ausführungsformen denkbar, in denen ein oder mehrere Wells keine Mikroarrays enthalten.

Die erfindungsgemäße Vorrichtung umfasst somit eine Anordnung von Standard-Reaktionsgefäßen bzw. Wells im Mikrotiterplatten-Format. Die erfindungsgemäße Vorrichtung, beispielsweise im 96well-Mikrotiterplatten-Format, unterscheidet sich von den herkömmlichen Standard-Mikrotiterplatten dadurch, dass in vorzugsweise jedem Well ein Mikroarray mit darauf auf vorbestimmten Bereichen angeordneten Sondenmolekülen zur Durchführung einer molekularen Analyse integriert ist. Ein derartiges Mikroarray mit darauf auf vorbestimmten Bereichen immobilisierten Sondenmolekülen wird im Folgenden auch als Chip oder Affinitätsmatrix bezeichnet. Die vorbestimmten Bereiche auf dem Träger werden im Folgenden auch als Array-Elemente bezeichnet.

Üblicherweise ist die Grundfläche eines Wells, auf der das Mikroarray bzw. das Trägerelement mit den darauf auf vorbestimmten Bereichen immobilisierten Sondenmolekülen angeordnet bzw. integriert ist, der Boden eines Wells der Mikrotiterplatte der erfindungsgemäßen Vorrichtung. Sollten es technische Gründe erfordern, so kann das Mikroarray bzw. der Chip auch in die Seitenwände eines Wells eingebaut bzw. integriert werden.

Bei einer alternativen Ausführungsform sind die Mikroarrays in einer Abdeckvorrichtung bzw. einem Deckel der Mikrotiterplatte integriert. Bei einem derartigen Abdeckvorrichtung handelt es sich üblicherweise um eine separate Einheit, mit denen die Wells der erfindungsgemäßen Vorrichtung während bestimmter Reaktionsschritte flüssigkeitsdicht abgeschlossen und die im Deckel befindlichen Arrays mit der jeweiligen Lösung in Kontakt gebracht werden können. Der Einbau des Trägerelements bzw. der Chipfläche in einen Deckel ist insbesondere dann vorteilhaft, wenn die Affinitätsmatrix empfindlich gegenüber den Bedingungen bei einem oder mehreren der Reaktionsschritte zur Vorbereitung und/oder Durchführung der Nachweisreaktion reagiert. Derartige Reaktionsschritte können in dieser Ausgestaltung der erfindungsgemäßen Vorrichtung in der aufrecht stehenden Vorrichtung durchgeführt werden, wodurch die Affinitätsmatrix bzw. der Chip nicht mit den Reaktions- und Probenlösungen in Kontakt kommt und so geschützt wird. Zur Durchführung der Nachweisreaktion wird die erfindungsgemäße Vorrichtung dann auf den Deckel gedreht bzw. gestellt, so dass die Probe mit den oberflächengebundenen Sonden in Berührung kommt. Auf diese Weise wird die thermische und chemische Belastung der Affinitätsmatrix bzw. des Chips verringert.

Die Mikroarrays der erfindungsgemäßen Vorrichtung sind im Wesentlichen stufenlos in das jeweilige Well integriert, so dass im Wesentlichen keine Leerräume bzw. keine Zwischenräume bzw. keine freien Bereiche zwischen den Seitenwänden des Mikroarrays und den benachbarten Wänden des Wells vorliegen.

Bei einer Ausführungsform der vorliegenden Erfindung wird dies dadurch erreicht, dass die Grundfläche eines zu integrierenden Mikroarrays exakt der Grundfläche des Wells entspricht, auf der das Mikroarray fixiert ist. Auf diese Weise kann das Mikroarray passgenau in ein Well integriert werden, ohne dass unerwünschte Leerräume an den Seiten der Mikroarrays entstehen.

Üblicherweise ist die Grundfläche des Mikroarrays jedoch kleiner ist als die Grundfläche des Wells, auf dem das Mikroarray angeordnet ist. Im Folgenden werden beispielhaft Ausführungsformen beschrieben, mit denen eine stufenlose Integration in einem solchen Fall erreicht werden kann.

Bei einer Ausführungsform kann die im Wesentlichen stufenlose Integration dadurch erreicht werden, dass das Mikroarray jeweils auf einer Grundfläche eines Wells fixiert ist und zwischen dem Mikroarray und den Seitenwänden des Wells ein Abstandshalter angeordnet ist. Ein derartiger Abstandshalter kann je nach Form bzw. Geometrie der Grundfläche des Wells beispielsweise ein Keil bzw. ein Ring bzw. eine härtbare Verbindung, die Leerräume zwischen dem Mikroarray und den Seitenwänden des Wells im Wesentlichen vollständig ausfüllt, sein. Der Abstandshalter ist aus einem gegenüber den bei den Nachweisreaktionen im Rahmen der vorliegenden Erfindung verwendeten Reagenzien inerten Material und vorzugsweise aus demselben Material wie die Wells bzw. die Mikrotiterplatte. Ebenfalls bevorzugt sind Materialien ausgewählt aus der Gruppe bestehend aus Glas, Glaskeramik, kunststoffbeschichtetem Glas und Kunststoffen bzw. organischen Polymeren wie Elastomeren, Polypropylen, Polyethylen, Polystyrol, Polycarbonat, PVC, Polymethylmethacrylat, Silikonkunststoff, Kautschuk, Polytetrafluorethylen und/oder Nylon. Für spezielle Ausgestaltungen sind als Materialien auch Metalle, insbesondere nicht rostende Stähle, Platin und/oder Aluminium, denkbar.

Vorzugsweise ist der Abstandshalter derart ausgestaltet, dass er Leerräume bzw. Zwischenräume bzw. freie Bereiche zwischen dem Mikroarray und den Seitenwänden eines Wells im Wesentlichen vollständig auffüllt.

Bei einer weiteren Ausführungsform weisen die Wells jeweils eine Aufnahme auf, in der die Mikroarrays fixiert sind. Eine derartige Aufnahme bzw. Einsparung bzw. Öffnung befindet sich vorzugsweise vorgefertigt innerhalb des Bodens bzw. der Bodenfläche eines Wells. In diese Öffnung greift das jeweilige Mikroarray ein. Das Eingreifen erfolgt vorzugsweise formschlüssig.

Bei einer weiteren Ausführungsform weisen die Wells jeweils eine Aussparung bzw. einen Durchbruch auf, in der bzw. dem die Mikroarrays fixiert sind. In eine derartige Aussparung kann der Mikroarray beispielsweise von innen und/oder von außen fixiert werden. Bei diesen Ausgestaltungen weist die erfindungsgemäße Vorrichtung eine für eine Mikrotiterplatte typische Form und Größe und in den Wells jeweils einen als Einfassung geformten Durchbruch zur Aufnahme der Mikroarrays bzw. Affinitätsmatrizen, insbesondere von oberflächengebundenen Substanzbibliotheken auf. Die Mikroarrays werden insbesondere dann in einem Durchbruch fixiert, wenn die Wells eine konische Form aufweisen.

Die Mikroarrays sind vorzugsweise klebend, klickend, klemmend und/oder magnetisch in den Wells fixiert. Alternativ erfolgt die Fixierung durch Schrauben und/oder Schweißen, insbesondere durch Laser-Schweißen, der Mikroarrays. Neben den vorgenannten Varianten sind selbstverständlich weitere Arten der Befestigung der Mikroarrays denkbar.

Der Einbau bzw. die Fixierung des Mikroarrays in die Wells von innen, z.B. durch Kleben auf die Bodenfläche der Wells, hat den Vorteil, dass der Mikroarray bzw. Chip auch bei höherem Innendruck, z.B. bei Verwendung in einer Zentrifuge bzw. bei Erwärmung der Probenflüssigkeit auf Temperaturen nahe des Siedepunktes, in der Mikrotiterplatte nicht aus seiner Befestigung nach außen gedrückt werden kann.

Klemmverbindungen bzw. Gewinde bzw. Rasterungen weisen den Vorteil auf, dass für eine kraftschlüssige und flüssigkeitsundurchlässige Verbindung zwischen Well und Träger bzw. Chip sorgen. Durch derartige Varianten werden die Vorteile des Einsetzen des Trägers bzw. Chips von innen in das Reaktionsgefäß mit denen einer vereinfachten Montage vereint.

Bei der Herstellung der erfindungsgemäßen Vorrichtung wird üblicherweise von einer Standard-Mikrotiterplatte bzw. Standard-Strips insbesondere von einem der vorstehend genannten Hersteller wie z.B. Greiner Bio-One ausgegangen, in deren Wells jeweils ein Mikroarray implementiert bzw. integriert wird. Alternativ können die Gefäßgrundkörper der erfindungsgemäßen Vorrichtung in Form einer Mikrotiterplatte in Standardformaten z.B. durch Spritzgussverfahren hergestellt werden.

Bei Fixierung der Mikroarrays in einer Aussparung der Wells werden diese üblicherweise an der Unterseite gekappt und dann umgeschmolzen. Ein derartiges Verfahren eignet sich insbesondere für kleinere Stückzahlen. Bei großen Stückzahlen bietet es sich an, die Mikrotiterplatte direkt in einer der vorstehend genannten Ausgestaltungen spritzzugießen.

Das Material der Mikrotiterplatte bzw. der Wells entspricht den üblicherweise für Mikrotiterplatten verwendeten Materialien. Vorzugsweise werden die Materialien derart ausgewählt, dass sich die erfindungsgemäßen Vorrichtungen bei typischen Reaktionsbedingungen für molekulare Nachweisreaktionen thermisch, mechanisch und thermomechanisch stabil verhalten. Das Material der Mikrotiterplatte bzw. der Wells sollte ferner vorzugsweise keinerlei Reaktionen mit den in molekularen Tests üblicherweise eingesetzten Materialien und Reagenzien eingehen, also chemisch bzw. biochemisch inert sein. Das Material der Mikrotiterplatte bzw. der Wells ist beispielsweise ausgewählt aus der Gruppe bestehend aus Glas, Glaskeramik, kunststoffbeschichtetem Glas und Kunststoffen bzw. organischen Polymeren wie Polypropylen, Polyethylen, Polystyrol, Polycarbonat, PVC, Polymethylmethacrylat, Silikonkunststoff, Kautschuk, Polytetrafluorethylen und/oder Nylon. Für spezielle Ausführungsformen sind als Materialien auch Metalle, insbesondere nicht rostende Stähle, Platin und/oder Aluminium, denkbar. Polypropylen und Polyethylen sind besonders bevorzugt.

Vorzugsweise sind die Materialien der Wells bzw. Mikrotiterplatten, in die die Sondenarrays eingebaut werden, zumindest im Bereich der Grundfläche des Wells, auf der das Mikroarray integriert ist, ausreichend transparent, um eine optische Detektion von Wechselwirkungen auf dem Mikroarray insbesondere durch Transmissionsmessungen im sichtbaren Wellenlängenbereich zu gewährleisten.

Die Wells der Mikrotiterplatten weist eine für Standard-Mikrotiterplatten typische Größe auf. Typische Füllvolumina eines Wells liegen im Bereich von etwa 5 µl bis etwa 350 µl, können aber bei speziellen Ausgestaltungen auch höher oder niedriger sein. Besonders bevorzugt haben die Wells ein für eine Standard-Mikrotiterplatte im 384er-Format übliches Füllvolumen von 5 µl bis 100 µl bzw. ein für eine Standard-Mikrotiterplatte im 96er-Format übliches Füllvolumen von 10 µl bis 350 µl. Weitere bevorzugte Füllvolumina eines Wells sind etwa 50 µl, etwa 150 µl oder etwa 250 µl.

Bei einer besonders bevorzugten Ausführungsform werden die Mikroarrays auf die Grundfläche, vorzugsweise den Boden, der Wells, geklebt, wobei vorzugsweise in jedem Well ein Mikroarray fixiert ist. Um bei dieser Ausführungsform eine stufenlose Integration der Mikroarrays in die Wells zu gewährleisten, füllt der zur klebenden Fixierung eines Mikroarrays auf der Grundfläche eines Wells verwendete Klebstoff vorzugsweise auch die Leerräume zwischen Mikroarray und den Seitenwänden des Wells im Wesentlichen vollständig auf. In dieser Ausführungsform dient der Klebstoff als Abstandshalter zwischen dem Mikroarray und den Seitenwänden des Wells. Auf diese Weise wird erreicht, dass die Detektionsfläche des Mikroarrays in eine planare Oberfläche auf dem Boden des Wells integriert ist. Das nachteilige Verschleppen von Analyt oder Waschlösungen in Zwischenräume zwischen dem Mikroarray und den Seitenwänden der Wells wird so vermieden.

Die hierfür verwendeten Klebstoffe verhalten sich vorzugsweise bei typischen Reaktionsbedingungen für molekulare Nachweisreaktionen thermisch, mechanisch und thermomechanisch stabil. Die für die Fixierung der Mikroarrays eingesetzten Klebstoffe eingesetzte Material gehen ferner vorzugsweise keine Reaktionen mit den in molekularen Tests üblicherweise eingesetzten Materialien und Reagenzien ein, sind also vorzugsweise chemisch bzw. biochemisch inert.

Werden die Mikroarrays in den erfindungsgemäßen Vorrichtungen durch Kleben fixiert, z. B. wenn sie auf die Bodenfläche eines Wells geklebt werden, werden die Klebstoffe üblicherweise mit handelsüblichen Dispensiergeräten aufgetragen. Als Klebstoff kommen vorzugsweise UV bzw. UV-VIS aushärtende Klebstoffe, z.B. Urethanacrylat wie NOA76 (Norland, New Jersey, USA) und Vitralit VBB-1 (Panacol-Elosol, Deutschland) und modifizierte Acrylate wie Photobond 4496, Photobond 4436 und Photobond 4442 (alle von Delo, Deutschland), und platinvernetzende Polydimethylsiloxane wie Sylgard 182 oder Sylgard 184 (Dow Corning, Midland, Michigan, USA) in Betracht. Alternativ können andere Klebstoffe wie beispielsweise Silikonkleber, Polyurethankleber, Epoxidharzkleber, Cyanacrylatkleber, Acrylkleber und/oder Heizkleber verwendet werden.

Beispiele für weitere geeignete Klebstoffe sind Ein-Komponenten-Silikon wie z.B. Elastosil E43 (Wacker-Chemie GmbH, München, Deutschland), Zwei-Komponenten-Silikon wie z.B. Sylgard 182 und 184 (Dow Corning Corporation, Wiesbaden, Deutschland); Polyurethanharz wie z.B. Wepuran VT 3402 KK (Lackwerke Peters GmbH & Co. KG, Kempen, Deutschland); Epoxidharze wie z.B. SK 201 (SurA Chemicals GmbH, Jena, Deutschland); und/oder Acrylate wie z.B. Scotch-Weld DP 8005 (3M Deutschland GmbH, Hilden, Deutschland).

Bei einer weiteren bevorzugten Ausführungsform sind ein zur klebenden Fixierung der Mikroarrays in den Wells verwendete Klebstoff und ein zur stufenlosen Integration des Mikroarrays in die Wells verwendeter Abstandhalter aus unterschiedlichen Materialien.

Besonders bevorzugt ist der Abstandshalter und/oder der verwendete Klebstoff ein Elastomer. Elastomere weisen den Vorteil auf, dass sie elastisch sind und somit Spannungen bei der Fixierung der Arrays vermieden werden. Beispiele für bevorzugte Elastomere sind die vorstehend genannten Silikon-Elastomere.

Als Dichtmaterialien bei der Fixierung von Mikroarrays in Aufnahmen und/oder Aussparungen können z.B. unterschiedliche Kautschuke wie Silikonkautschuk und/oder Gummimaterialen und dergleichen eingesetzt werden.

Alternativ ist ein Mikroarray durch Klemmen in eine Öffnung beispielsweise auf dem Boden eines Wells fixiert. Diese klebstofffreie Fixierung wird üblicherweise dadurch erreicht, dass das Material des Wells erwärmt wird. Durch die Erwärmung des Materials wird die Öffnung bedingt durch den Längenausdehnungskoeffizienten des Materials breiter. Dann wird das Mikroarray in die Aufnahme bzw. Öffnung gelegt. Durch Abkühlen und das dadurch resultierende Schrumpfen des Materials wird das Mikroarray fixiert. Somit enthält die erfindungsgemäße Vorrichtung bei einer weiteren bevorzugten Ausführungsform ein Material mit einem hohen Längenausdehnungskoeffizienten, insbesondere im Temperaturbereich von 20°C bis 100°C, besonders bevorzugt im Temperaturbereich von 25°C bis 80°C, besonders bevorzugt mit einem Längenausdehnungskoeffizienten im Bereich von 0,1 · 10⁻⁴ K⁻¹ bis 1,5 · 10⁻⁴ K⁻¹ und am meisten bevorzugt von 0,5 · 10⁻⁴ K⁻¹ bis 1,0 · 10⁻⁴ K⁻¹. Bei speziellen Ausgestaltungen können auch Materialien mit einem Längenausdehnungskoeffizienten von 0,05 · 10⁻⁴ K⁻¹ oder mehr bzw. von 2,0 · 10⁻⁴ K⁻¹ oder mehr eingesetzt werden Beispiele für besonders geeignete Materialien mit hohem Längenausdehnungskoeffizienten sind Phenylmethylmethacrylat mit einem Längenausdehnungskoeffizienten von 0,85 · 10⁻⁴ K⁻¹ im Bereich von 25°C bis 80°C und/oder Polycarbonat mit einem Längenausdehnungskoeffizienten von 0,7 · 10⁻⁴ K⁻¹ im Bereich von 25°C bis 80°C.

Bei einer weiteren bevorzugten Ausführungsform ist das zu integrierende Mikroarray magnetisch an ein Well fixiert. Zu diesem Zweck sind die die Kontaktflächen zwischen Well und Mikroarray bildenden Flächen magnetisch ausgestaltet.

Vorzugsweise ist die Mikrotiterplatte eine lineare Anordnung von acht bis zwölf Wells oder eine zweidimensionale Anordnung von beliebigen Vielfachen davon. So kann die Mikrotiterplatte eine zweidimensionale Anordnung von 8 x 12 Wells oder 16 x 24 Wells sein.

Die Wells weisen vorzugsweise eine rechteckige, quadratische und/oder kreisförmige Grundfläche auf.

Besonders bevorzugt sind die Wells der erfindungsgemäßen Vorrichtung in Reihen von acht, insbesondere zylinderförmigen, Wells, im folgenden auch als AT-Strips bezeichnet, oder in einer zweidimensionalen Anordnung von 8 x 12 = 96 zylinderförmigen Wells, im folgenden auch als AT-Mikroplatte bezeichnet, angeordnet.

Die einzelnen Wells der erfindungsgemäßen Vorrichtung weisen vorzugsweise an der Bodengrundfläche ein Sondenarray bzw. Mikroarray zur Durchführung von Array-Experimenten auf. Die Größe der eingesetzten Sondenarrays hängt von Größe und Geometrie der Wells der erfindungsgemäßen Vorrichtung ab. Bei zylinderförmigen Wells, in einer streifenförmigen oder zweidimensionalen Anordnung, mit einem Bodendurchmesser von beispielsweise etwa 6,5 mm werden vorzugsweise Sondenarrays mit einer Kantenlänge von etwa 4,5 mm x etwa 4.5 mm eingesetzt. Bei einer Anordnung von 384 parallelen Wells in Form einer 24 x 16 Well-Mikroplatte und quadratischer Bodenfläche der Wells mit einer Seitenlänge von etwa 3.6 mm werden vorzugsweise quadratische Sondenarrays einer Kantenlänge von etwa 3 mm eingesetzt. Weitere bevorzugte Dimensionen der Biochips sind etwa 2 x 2 mm bis 10 x 10 mm.

Das Trägerelement bzw. der Träger für die Sondenmoleküle in der erfindungsgemäßen Vorrichtung ist bei einer Ausführungsform der vorliegenden Erfindung im Bereich der Detektionsfläche optisch durchlässig und/oder oder nicht fluoreszierend. Unter Detektionsfläche ist der Bereich des Trägerelements zu verstehen, auf dem auf vorbestimmten Bereichen Sondenmoleküle immobilisiert sind.

In einer bevorzugten Ausführungsform der Erfindung sind die Sondenmoleküle direkt auf dem Trägerelement aufgebracht, ohne dass das Trägerelement ein weiteres Grundelement umfasst.

In anderen bevorzugten Ausführungsformen sind die Sondenmoleküle auf einem vorzugsweise optisch durchlässigen und/oder nicht fluoreszierenden Chip aufgebracht, der wiederum fest mit einem Grundelement, das vorzugsweise mindestens in dem durch den Chip definierten Detektionsbereich optisch durchlässig und/oder nicht fluoreszierend ist, verbunden ist. Die Dimensionen des Chips sind dabei kleiner als die Dimensionen des Grundelements. In diesem Fall bilden der die Sondenmoleküle tragende Chip und das Grundelement zusammen das Trägerelement.

Bei einer bevorzugten Ausgestaltung der erfindungsgemäßen Vorrichtung ist die der Detektionsfläche des Trägerelements gegenüberliegende Grundfläche in dem der Detektionsfläche entsprechenden Bereich ebenfalls optisch durchlässig und/oder nicht fluoreszierend.

Allgemein umfasst ein Sonden-Array bzw. Mikroarray gemäß der vorliegenden Erfindung einen Träger, der die Bildung von Arrays mit Sonden auf seiner Oberfläche erlaubt. Ein derartiger Träger kann unter anderem hergestellt werden aus Materialien, ausgewählt aus Glas, Filtern, elektronischen Vorrichtungen, Polymeren, metallischen Materialien u.dgl. und/oder beliebigen Kombinationen dieser Materialien. Besonders bevorzugt sind die Sondenmoleküle auf einer rauen bzw. porösen Trägeroberfläche angeordnet. Der Träger kann z.B. eine poröse Membran aufweisen, auf die Sonden aufgebracht bzw. in die sie eingebettet werden. Eine derartige poröse Membran kann eine Dicke von 100 nm bis 5 µm, vorzugsweise von 200 nm bis 2 µm oder von 400 nm bis 1 µm, aufweisen.

Das Trägerelement besteht bei einer Ausführungsform aus optisch durchlässigen und/oder nicht fluoreszierenden Materialien. Bei derartigen Materialien handelt es sich beispielsweise um Glas, Borofloat 33 (beispielsweise erhältlich von Schott, Jena, Deutschland), Quarzglas, einkristallines CaF₂ (beispielsweise erhältlich von Schott), einkristallines Silizium, Phenylmethylmethacrylat, Acryl und/oder Polycarbonat.

Neben den vorstehend beschriebenen optisch durchlässigen oder nicht fluoreszierenden Materialien für das Trägerelement bzw. den Chip sind bei einer weiteren Ausführungsform der vorliegenden Erfindung optisch nicht durchlässige bzw. optisch undurchlässige Materialien wie herkömmliche Filter-, Keramik-, Metall-, Halbmetall- und/oder Kunststoffmaterialien für das Trägerelement bzw. den Chip bevorzugt. So können beispielsweise speziell für DNA-Bibliotheken gefertigte Nylonmembranen als Trägermaterialien eingesetzt werden. Besonders bevorzugt als optisch nicht durchlässiges Material für das Trägerelement bzw. den Chip ist Silizium. Der Einsatz von optisch nicht durchlässigen Trägermaterialien ist insbesondere bevorzugt, wenn die Detektion von Sonde/Target-Wechselwirkungen auf dem Array durch Durchführung von Dunkelfeld- und/oder Reflektionsmessungen erfolgt und/oder die Lichtquelle oberhalb des Biochipträgers angeordnet ist.

Üblicherweise handelt es sich bei den immobilisierten Sondenmolekülen auf dem Trägerelement um eine Substanzbibliothek.

Bei den Substanzbibliotheken kann es sich um Proteinsubstanzbibliotheken, Peptidsubstanzbibliotheken und Nukleinsäuresubstanzbibliotheken handeln. Bei Proteinsubstanzbibliotheken kann es sich insbesondere um Antikörper-, Rezeptormolekül- und Membranproteinbibliotheken handeln. Denkbare Peptidbibliotheken sind insbesondere Rezeptorligandenbibliotheken, pharmakologisch aktive Peptidbibliotheken und Peptidhormonbibliotheken.

Nukleinsäuresubstanzbibliotheken sind insbesondere DNA- und RNA-Molekülbibliotheken. Bei DNA-Molekülbibliotheken können besonders bevorzugt ribosomale DNA-Sequenzen von Mikroorganismen auf dem Trägerelement angebracht sein. Ferner kann es sich um Nukleinsäuresubstanzbibliotheken zur SNP-Analyse handeln. Ebenfalls denkbar sind Protein- oder Nukleinsäuresubstanzbibliotheken, die ein so genanntes "expression profiling" erlauben. Eine weitere Alternative sind kombinatorische Substanzbibliotheken.

Die Substanzbibliotheken sind dabei so auf das Trägerelement aufgebracht, dass sie den Probenraum der Wells kontaktieren. Das Trägerelement ist somit vorzugsweise dadurch gekennzeichnet, dass es auf seiner Oberfläche eine Detektionsfläche mit einer Substanzbibliothek aufweist.

Vorzugsweise sind die in die erfindungsgemäße Vorrichtung integrierten Trägerelemente sog. DNA-Chips. Bei einem derartigen DNA-Chip handelt es sich um eine beispielsweise auf einer Glasoberfläche gebundene DNA-Bibliothek mit eindeutiger Zuordnung der DNA-Sequenzen zu vorbestimmten Bereichen der Oberfläche.

Bei einer weiteren Ausführungsform der vorliegenden Erfindung umfasst die erfindungsgemäße Vorrichtung zusätzlich ein optisches System mit einer Lichtquelle. Besonders bevorzugt sind Lichtquelle und Detektor auf gegenüberliegenden Seiten der Mikrotiterplatte angeordnet. Im Rahmen der vorliegenden Erfindung geeignete Lichtquellen und Detektoren sind nachstehend beschrieben.

Bei Verwendung einer reaktiv verstärkend wirkenden Färbemethode der Wechselwirkung wie der Immunogold/Silber-Anfärbung oder der enzymatischen Ausfällung eines organischen Niederschlags kann die Detektion im Gegensatz zu den üblicherweise eingesetzten Fluoreszenzmessungen durch einfache Absorptions- bzw. Reflexionsmessungen erfolgen, so dass die Gesamtkosten für die erfindungsgemäße Vorrichtung sehr niedrig sind.

Vorzugsweise wird die erfindungsgemäße Vorrichtung somit bei einem Nachweisverfahren eingesetzt, bei dem wie vorstehend beschrieben die Detektion über eine Reaktion erfolgt, die zu einem Niederschlag an den Array-Elementen führt, an denen eine Wechselwirkung zwischen Sonden und Targets stattgefunden hat. In den Wells bilden sich auf einigen Array-Elementen der dort integrierten Mikroarrays aufgrund der spezifischen Wechselwirkung der Probe bzw. des Targets mit den Sonden Wechselwirkungsprodukte in Form eines Niederschlags. Diese Wechselwirkungsprodukte weisen einen anderen Absorptionskoeffizienten als die reinen Substanzen auf. Durch geeignete Reaktionen kann dieser Effekt wie nachstehend beschrieben erheblich verstärkt werden.

Die Detektionsvorrichtung umfasst vorzugsweise eine Kamera, insbesondere eine CCD- oder CMOS-Kamera oder ähnliche Kameras, die üblicherweise den gesamten Bereich des Sonden-Arrays aufzeichnet. Alternativ können auch scannende Verfahren für die Detektionsvorrichtung zum Auslesen der erfindungsgemäßen Vorrichtung eingesetzt werden.

Bei speziellen Ausgestaltungen der erfindungsgemäßen Vorrichtung umfasst die Detektionsvorrichtung zusätzlich eine Beleuchtungs- und Abbildungs- bzw. Ausleseoptik.

Bei einer bevorzugten Ausführungsform umfasst die erfindungsgemäße Vorrichtungzusätzlich mindestens eine Lichtquelle. Eine Lichtquelle im Rahmen der vorliegenden Erfindung gewährleistet vorzugsweise eine homogene Beleuchtung eines Trägers eines Mikroarrays. Besonders bevorzugt wird die Lichtquelle ausgewählt aus der Gruppe, bestehend aus Lasern, Licht-emittierenden Dioden (LED), Flächenstrahlern und Hochdrucklampen.

Neben punktförmigen Lichtquellen können auch Lichtquellen in Form von Beleuchtungsarrays in der erfindungsgemäßen Vorrichtung Verwendung finden. Eine homogene Beleuchtung des Trägers kann in dieser Ausgestaltung beispielsweise dadurch gewährleistet werden, dass die Lichtquelle mehrere diffus strahlende Lichtquellen umfasst, deren Überlagerung in einer homogenen Beleuchtung resultiert. So ermöglichen beispielsweise diffus streuende LED, die matrixförmig angeordnet sind, auf kurze Entfernungen zur Probe eine homogene Beleuchtung.

Die Homogenität der Beleuchtung kann auch durch eine entsprechende Strukturierung der Wellböden oder des ggf. vorhandenen Deckels der erfindungsgemäßen Vorrichtung erreicht werden. Auf diese Weise übernehmen die Wellböden bzw. Deckel der erfindungsgemäßen Vorrichtung die Funktion einer Streuscheibe.

Ist das Mikroarray in dem Boden eines Wells integriert, ist der Boden des Chipträgers vorzugsweise gleichmäßig lichtdurchlässig. Bei Verwendung eines gleichmäßig lichtdurchlässigen Bodens ohne optische Eigenschaften ist die für die Transmissionsdetektion erforderliche Lichtquelle vorzugsweise unter dem Biochipträger, das Detektionsmodul dagegen oberhalb des Biochipträgers angeordnet.

Bei einem Biochipträger aus Materialien mit optischen Eigenschaften kann die Anordnung von Beleuchtungs- und Detektionsmodul auch umgedreht erfolgen. Vorzugsweise sind bei dieser Ausführungsform bestehen somit die Bereiche der erfindungsgemäßen Vorrichtung, die sich im optischen Strahlengang befinden, aus transparenten bis hochtransparenten Materialien optischer Qualität. Hierfür eignen sich vorzugsweise Kunststoffe wie Polyproplylen oder Polyethylen in Stärken von z.B. 0,1 mm bis 1 mm.

Bei einem Biochipträger aus optisch nicht durchlässigen Materialien sind vorzugsweise sowohl Beleuchtung- als auch Detektionsmodul oberhalb des Biochipträgers, d.h. auf der Seite des Biochipträgers, die dem Reaktionsraum, also dem Innenraum der Wells, zugewandt ist, angeordnet.

Die Wells weisen ferner eine für die vorzugsweise optische Detektion ausreichende Planarität der Grundfläche auf, auf der sich das Mikroarray befindet. Dadurch wird eine einfache und streulichtfreie optische Detektion von oben oder von unten gewährleistet.

Bei Durchführung einer Fluoreszenzdetektion können die Teile der Wellwände, die sich nicht in Nachbarschaft des Sondenarrays befinden, auch aus gefärbten bzw. pigmentierten Kunststoffen bestehen, z.B. aus schwarzem Polypropylen. Dadurch können störende Hintergrundsignale verhindert werden.

Die vorliegende Anmeldung beschreibt weiterhin ein Verfahren zur Herstellung einer Vorrichtung für die parallele Durchführung von Mikroarray-Experimenten zum Nachweis einer spezifischen Wechselwirkung zwischen Target- und Sondenmolekülen auf einer Mikrotiterplatte, deren Wells jeweils ein einzelnes Mikroarray mit auf vorbestimmten Bereichen des Mikroarrays angeordneten Sondenmolekülen aufweisen, umfassend die folgenden Schritte:
a) Erzeugen von Mikroarrays mit auf vorbestimmten Bereichen des Mikroarrays angeordneten Sondenmolekülen, vorzugsweise in einem Verbund;
b) Überprüfen der Qualität der in Schritt a) erzeugten Mikroarrays;
c) Auswählen geeigneter einzelner Mikroarrays und ggf. Lösen der ausgewählten Mikroarrays aus dem Verbund;
d) Fixieren der in Schritt c) ausgewählten einzelnen Mikroarrays in Wells der Mikrotiterplatte; und/oder
e) ggf. Auffüllen freier Bereiche bzw. von Zwischenräumen bzw. von Leerräumen zwischen Mikroarray und Wänden der Wells.

Bei dem beschriebenen Verfahren werden Mikrotiterplatte und einzelne Mikroarrays separat voneinander bereitgestellt und in einem getrennten Schritt zu einer Vorrichtung für die parallele Durchführung von Mikroarray-Experimenten kombiniert, z.B. indem die Sondenarrays auf eine Grundfläche des Wells bzw. Reaktionsgefäßes geklebt werden. Der Vorteil des Verfahrens besteht darin, dass die Bioarrays, vorzugsweise im Verbund, z.B. auf einem Wafer, unabhängig von der Mikrotiterplatte und damit vom Biochipträger hergestellt werden können. Nach Herstellung der Arrays, z.B. im Verbund, kann eine Qualitätskontrolle der Arrays durchgeführt werden, wonach nur solche Mikroarrays für die Fixierung bzw. Assemblierung in der Mikrotiterplatte ausgewählt werden, die den Kriterien der Qualitätskontrolle entsprechen.

Da bei den derzeit etablierten Herstellungsverfahren für Bioarrays nie eine 100%ige Ausbeute an fehlerfreien Chips gewährleistet werden kann, weist das beschriebene Herstellungsverfahren den Vorteil auf, dass eine höhere Ausbeute an fehlerfreien Biochip-Trägem erreicht wird als bei herkömmlichen Verfahren, bei denen die Bioarrays entweder direkt auf dem Biochipträger bzw. der Mikrotiterplatte hergestellt werden oder aber ein Wafer mit mehreren Bioarrays als Boden einer Mikrotiterplatte dient.

Beispielsweise werden in Schritt a) des erfindungsgemäßen Verfahrens mehrere Mikroarrays, z.B. bevorzugt mindestens 50, mindestens 100, mindestens 150 oder mindestens 350, mindestens 114, mindestens 120 oder mindestens 397 Mikroarrays, im Verbund, z.B. auf einem Wafer, einer Glasplatte oder einem Objektträger erzeugt. Die Anzahl der Mikroarrays kann in Abhängigkeit der Dimensionen der Mikroarrays und der Trägerplatte beschränkt sein, z.B. auf etwa 80 Mikroarrays bei einem herkömmlichen Objektträger und auf etwa 416 Mikroarrays bei einer Glasplatte von 119,5 mm x 75 mm. Die Qualitätskontrolle in Schritt b) kann mit den Mikroarrays im Verbund, z.B. auf dem Wafer, durchgeführt wird. Die in Schritt c) ausgewählten Mikroarrays können sich im Verbund, z.B. auf dem Wafer, befinden und zum Fixieren in den Wells vereinzelt werden bzw. aus dem Verbund gelöst werden, z.B. durch Heraussägen aus dem Verbund.

Die Mikroarrays werden in Schritt d) des beschriebenen Herstellungsverfahrens im Wesentlichen stufenlos in Wells der Mikrotiterplatte integriert. Die im Wesentlichen stufenlose Integration erfolgt dabei insbesondere wie vorstehend für die erfindungsgemäße Vorrichtung beschrieben.

Die im Rahmen der vorliegenden Erfindung eingesetzten Mikroarrays mit an definierten Stellen immobilisierten Sonden können allgemein nach herkömmlich bekannten Verfahren erzeugt bzw. hergestellt werden. DNA-Chips werden vorzugsweise durch allgemein übliche Spotting-Verfahren oder durch spezielle ortsaufgelöste Synthese-Verfahren hergestellt. Für die Herstellung kommen auch Alternativ-Verfahren wie Synthese-Verfahren über eine lichtgeführte DNA-Synthese in Frage. Verfahren zur Herstellung von Sonden-Arrays bzw. Chips, speziell von DNA-Chips sind dem Fachmann bekannt und unter anderem in DE 197 06 570, EP 0 969 918 und WO 98/36827 beschrieben.

Vorzugsweise werden die Sonden-Arrays nach zwei prinzipiell unterschiedlichen Verfahren hergestellt.

Bei einer Methode werden separat synthetisierte Sonden, beispielsweise Oligonukleotide, mit Hilfe von Automaten, sog. Spottern, die das ortsspezifische Ablegen kleinster Flüssigkeitsmengen gewährleisten, auf Oberflächen aufgebracht und kovalent oder nicht kovalent mit dieser verknüpft. Das Verfahren arbeitet seriell. Jeder Spot wird individuell mit der Sonde bestückt.

Alternativ werden Sonden-Arrays durch ortsspezifische in situ-Synthese der Sonden, beispielsweise der Oligonukleotidsonden erzeugt. Die Synthese erfolgt parallel, beispielsweise im Wafer-Maßstab. Geeignete Reagenzien zur Aktivierung der Array-Oberfläche bzw. geeignete Schutzgruppen für die Sondensynthese auf der Array-Oberfläche sind dem Fachmann bekannt.

Die Immobilisierung von Molekülen auf der Array-Oberfläche kann entweder spezifisch oder unspezifisch erfolgen. Die spezifische Immobilisierung setzt eine Selektivität der Wechselwirkung bestimmter chemischer Funktionen des zu immobilisierenden Moleküls mit der Oberfläche des Substrats voraus. Ein Beispiel für eine spezifische, nicht kovalente Immobilisierung ist die Bindung von Biotin-markierter Nukleinsäure an ein mit Streptavitin beschichtetes Substrat. Amino-modifizierte Nukleinsäuren lassen sich spezifisch über die Reaktion der Aminogruppe mit einem Epoxid, einer Carboxy-Funktion oder einem Aldehyd immobilisieren. Vorzugsweise wird die Immobilisierung über eine endständige Phosphatgruppe der Sonde bzw. des Monomer-Bausteins einer Biopolymer-Sonde an einer aminierten Oberfläche durchgeführt.

Die ortsspezifische Immobilisierung erfolgt über eine Vielzahl von Mechanismen und chemischen Funktionen und kann sowohl kovalent als auch nicht kovalent sein. Beispiel hierfür ist die Immobilisierung von Nukleinsäuren auf einer mit Poly-L-Lysin modifizierten Substratoberfläche, aber auch die Immobilisierung von chemisch nicht modifizierten Nukleinsäuren auf epoxidierten, aminierten oder mit Aldehyd-Funktionen besetzten Substratoberflächen.

Für das Ablegen geringer Mengen Material an vorgesehenen Stellen auf einem Substrat zur Herstellung eines Sonden-Arrays, der in das erfindungsgemäße Reaktionsgefäß eingesetzt wird, können ebenfalls dem Fachmann bekannte Verfahren eingesetzt werden. Eine Reihe derartiger Verfahren ist beispielsweise in D.J. Lockhart, E.A. Winzeler; Genomics, gene expression and DNA arrays; Nature, 405, Seiten 827-836, 2000 beschrieben.

Die Erfindung schafft ferner eine Anordnung zur Durchführung und zur Analyse von Mikroarray-Experimenten zum Nachweis einer spezifischen Wechselwirkung zwischen Sonden- und Targetmolekülen. Diese Anordnung umfasst eine Mikrotiterplatte, wobei in Wells der Mikrotiterplatte jeweils ein einzelnes Mikroarray mit auf vorbestimmten Bereichen des Mikroarrays angeordneten Sondenmolekülen, insbesondere wie vorstehend beschrieben, integriert ist. Eine Detektorvorrichtung ist zum Erfassen einer spezifischen Wechselwirkung zwischen auf vorbestimmten Bereichen des Mikroarrays angeordneten Sondenmolekülen und Targetmolekülen eingerichtet.

Somit ist ein integriertes Analysesystem bereitgestellt, bei dem die Mikrotiterplatte und die Detektorvorrichtung zusammenwirkend vorgesehen sind. Mittels der Detektorvorrichtung können Hybridisierungsereignisse in den Wells zuverlässig detektiert werden.

Gemäß einer vorteilhaften Ausgestaltung der Anordnung ist die Mikrotiterplatte so ausgestaltet, dass die Wells im Bodenbereich im Wesentlichen keine Oberflächentopologie oder Erhabenheit aufweisen. Insbesondere ist die Mikrotiterplatte so ausgestaltet, wie es vorstehend im Rahmen der Beschreibung der erfindungsgemäßen Vorrichtung für die parallele Durchführung von Mikroarray-Experimenten ausgeführt ist.

Die Anordnung weist ferner eine Verarbeitungseinrichtung auf, die zum Verarbeiten einer mittels der Detektorvorrichtung erfassten spezifischen Wechselwirkung auf einem Mikroarray basierend auf einer extern selektiv vorgebbaren, validierten, Verarbeitungsanweisung eingerichtet ist. Einer solchen Verarbeitungs- oder Prozessierungseinrichtung kann somit von extern, insbesondere durch einen Benutzer, ein gewünschter Betriebsmodus der Anordnung vorgegeben werden. Der Anordnung wird als Verarbeitungsanweisung die Information bereitgestellt, unter welchen experimentellen Bedingungen, nämlich Art des verwendeten Mikroarrays, Art der zu verwendenden Wasch- und Pufferlösungen, Multiplexinggrad, Array-Layout, Zuordnungstabelle und Schwellwerttabelle, ein oder mehrere Mikroarray-Experimente auf der Mikrotiterplatte durchzuführen und/oder zu analysieren sind. Alternativ oder ergänzend kann der Anordnung als Verarbeitungsanweisung die Information bereitgestellt werden, welche Art von Untersuchung durchgeführt werden soll, zum Beispiel welche speziell ausgewählte, von der Anordnung durchführbare Untersuchung gewünscht wird (zum Beispiel eine Untersuchung, ob ein Patient, dessen Blutprobe untersucht wird, an Krankheit A, B oder C leidet). Somit kann extern eine benutzerspezifische Einstellung eines gewünschten Betriebsmodus der Anordnung vorgegeben werden, und zwar fest für alle in der Zukunft durchzuführenden Untersuchungen, oder lediglich auf die als nächstes durchzuführende Untersuchung bezogen. Um eine solche Auswahl zu treffen, kann ein Benutzer zum Beispiel eine Barcode-enthaltende Steckkarte in die Anordnung einführen oder die Mikrotiterplatte mit einem Barcode versehen sein, wobei in dem von der Anordnung lesbaren Barcode die Steuerinformation und/oder die Zuordnung beispielsweise zu einem Assay-Protokoll oder einem Array-Typ, welches in der Vorrichtung oder auch auf einem durch den Benutzer zugeführten Speichermedium enthalten sein kann. Alternativ kann der Benutzer beispielsweise über ein Menü eine Betriebsart der Vorrichtung auswählen. Oder ein Benutzer tippt über eine Tastatur eine Zahlenkombination ein, in der ein bestimmter gewünschter Betriebsmodus kodiert ist. Basierend auf einem solchen Code kann in der Anordnung eine entsprechende Steuerroutine aufgefunden werden. Von allen von der Anordnung ausführbaren Steuerroutinen (die zum Beispiel auf einem Speichermedium, zum Beispiel eine auf einer Festplatte gespeicherte Datenbank, der Anordnung gespeichert sein können) kann diejenige Steuerroutine eindeutig aufgefunden werden, die der benutzerseitig zugeführten Steuerinformation zugeordnet ist.

Unter Verarbeitungsanweisung kann einerseits verstanden werden, dass von extern der gesamte auszuführende Code zum Betreiben der Anordnung bezogen auf eine ausgewählte Anwendung enthalten ist. Dann wird von außen der Anordnung das gesamte Steuerprogramm zugeführt, so dass ein Speichern von Steuercode in der Anordnung entbehrlich ist.

Unter Verarbeitungsanweisung kann anderseits verstanden werden, dass von extern lediglich eine Art Passwort oder Adresse als Verarbeitungsanweisung bereitgestellt wird, wobei der zugeordnete auszuführende Code zum Betreiben der Anordnung bezogen auf eine ausgewählte Anwendung dann in der Anordnung selbst in Form einer Datenbank/Softwarebank enthalten ist. Dann wird von außen der Anordnung nur die Information zugeführt, welches Steuerprogramm ausgeführt werden soll, wobei der eigentliche Steuercode in der Anordnung gespeichert ist.

Unter validiert wird insbesondere verstanden, dass bei mehrfacher Ausführung eines bestimmten Experiments unter den jeweils gleichen Bedingungen ein jeweils gleiches bzw. definiertes Ergebnis erhalten wird.

Darüber hinaus stellt die Erfindung eine Anordnung zur Durchführung und zur Analyse von Mikroarray-Experimenten zum Nachweis einer spezifischen Wechselwirkung zwischen Sonden- und Targetmolekülen wie oben beschrieben bereit, welche Anordnung mindestens ein Reaktionsgefäß aufweist, in das ein Mikroarray mit auf vorbestimmten Bereichen des Mikroarrays angeordneten Sondenmolekülen integriert ist. Ferner enthält die Anordnung eine Detektorvorrichtung, die zum Erfassen einer spezifischen Wechselwirkung zwischen auf vorbestimmten Bereichen des Mikroarrays angeordneten Sondenmolekülen und Targetmolekülen eingerichtet ist. Eine Verarbeitungseinrichtung ist zum Verarbeiten der mittels der Detektorvorrichtung erfassten spezifischen Wechselwirkung basierend auf einer extern selektiv vorgebbaren, vorzugsweise validierten, Verarbeitungsanweisung eingerichtet.

Das Reaktionsgefäß ist insbesondere so ausgestaltet wie in der internationalen Patentanmeldung WO 03/059516 beschrieben.

Insbesondere weist das Reaktionsgefäß eine für ein Laborreaktionsgefäß typische Form und/oder typische Größe auf, wobei auf einer seiner Grundflächen ein Trägerelement mit darauf auf vorbestimmten Bereichen immobilisierten Sondenmolekülen angeordnet ist. Die Verwendung eines derartigen Reaktionsgefäßes für den Nachweis von spezifischen Wechselwirkungen zwischen molekularen Target- und Sondenmolekülen bietet den wesentlichen Vorteil, dass die Anschaffung von zusätzlichen Geräten bzw. einer zusätzlichen Ausstattung für die Durchführung der Nachweisreaktionen nicht erforderlich ist, da die üblicherweise in Laboren, insbesondere in biologischen Laboren verwendeten Geräte für Standard-Laborreaktionsgefäße, wie beispielsweise Tischzentrifugen und Pipetten, zum Einsatz kommen können. Ein weiterer Vorteil eines derartigen Reaktionsgefäßes ist, dass eine getrennte Inkubationskammer überflüssig ist, da das Reaktionsgefäß auch als Hybridisierungskammer dient. Zusätzlich wird die Oberfläche des Trägers mit den darauf immobilisierten Sondenmolekülen durch die für herkömmliche Laborreaktionsgefäße typische Deckelverriegelung, beispielsweise die Safe-Lock-Deckelverriegelung bei Eppendorf-Reaktionsgefäßen, vor Kontaminationen und anderen nachteiligen äußeren Einflüssen geschützt.

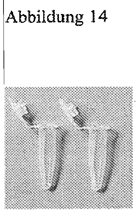

Unter Laborreaktionsgefäßen mit einer typischen Form und Größe werden im Rahmen der vorliegenden Erfindung Reaktionsgefäße verstanden, die als Einweg-Reaktionsgefäße, in der Standardausführung 1,5 ml fassend, in, insbesondere biologischen bzw. molekularbiologischen, Laboratorien üblicherweise verwendet werden. Derartige Laborreaktionsgefäße werden auch als Tubes und, nach dem bedeutendsten Hersteller, insbesondere als Eppendorf-Tubes oder "Eppis" (Hamburg, Deutschland) bezeichnet. So werden Laborreaktionsgefäße mit einer typischen Form und Größe von Eppendorf als Standard-Reaktionsgefäße oder Safe-Lock-Reaktionsgefäße angeboten. Selbstverständlich können im Rahmen der vorliegenden Erfindung auch Reaktionsgefäße von Herstellern wie Greiner (Frickenhausen, Deutschland), Millipore (Eschborn, Deutschland), Heraeus (Hanau, Deutschland) und BIOplastics (Landgraaf, Niederlande) sowie anderen Herstellern eingesetzt werden, die eine Form und Größe aufweisen, wie sie für Laborreaktionsgefäße insbesondere von Eppendorf typisch ist. Beispiele für Laborreaktionsgefäße mit einer typischen Form und Größe sind in Abbildung 14 gezeigt.

Unter Laborreaktionsgefäßen typischer Form und Größe werden im Rahmen der vorliegenden Erfindung insbesondere nicht Rundkolben oder andere Kolben wie Erlenmeyerkolben, Bechergläser oder Messzylinder verstanden.

Das Reaktionsgefäß unterscheidet sich vorzugsweise von den vorstehenden genannten Laborreaktionsgefäßen dadurch, dass auf einer seiner Grundflächen ein Trägerelement mit darauf auf vorbestimmten Bereichen immobilisierten Sondenmolekülen angeordnet ist. Ein derartiges Trägerelement mit darauf auf vorbestimmten Bereichen immobilisierten Sondenmolekülen wird im Folgenden auch als Chip oder Affinitätsmatrix bezeichnet. Die vorbestimmten Bereiche auf dem Träger werden im Folgenden auch als Array-Elemente bezeichnet.

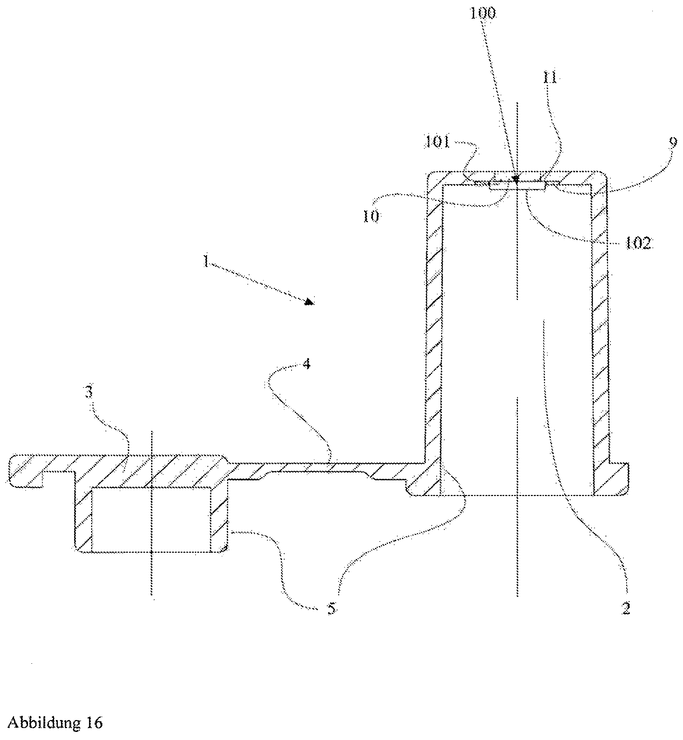

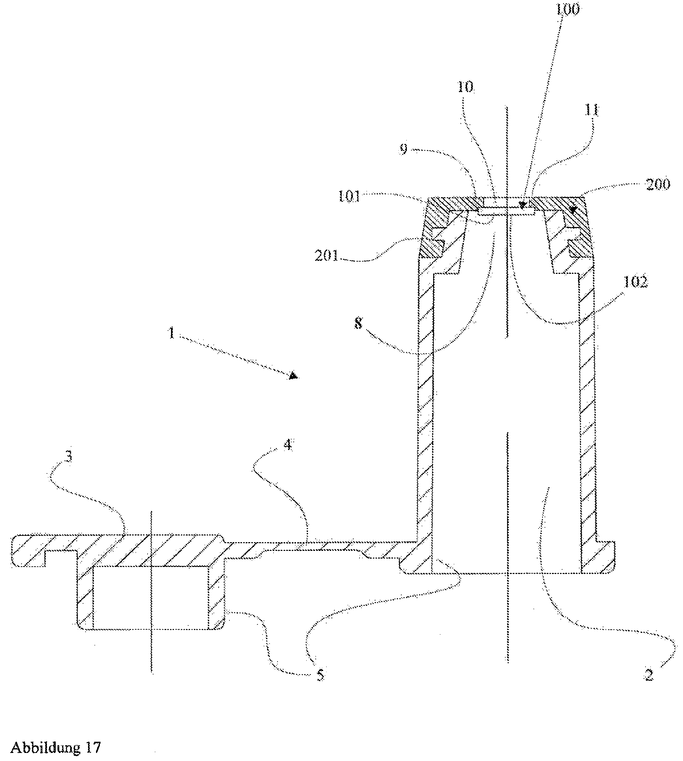

Trotz der Modifizierung eines herkömmlichen Laborreaktionsgefäßes durch Einbau eines derartigen Chips weist das Reaktionsgefäß eine für ein Laborreaktionsgefäß typische Form und/oder Größe auf. Das erfindungsgemäße Reaktionsgefäß weist somit eine rotationssymmetrische Form, insbesondere eine zylindrische bzw. im Wesentlichen zylindrische Form auf. Von den für herkömmliche Laborreaktionsgefäße typischen Formen und damit für ein Reaktionsgefäß im Rahmen der vorliegenden Erfindung denkbaren Formen ist ferner eine von der zylindrischen Grundform abweichende konische Form umfasst, wobei die Verjüngung vorzugsweise in Richtung der Affinitätsmatrix auftritt. Typische Formen sind ferner Kombinationen von zylindrischen bzw. im Wesentlichen zylindrischen Bereichen und konischen Bereichen (siehe u.a. Abbildungen 14-18). Aufgrund der für Laborreaktionsgefäße typischen Form und Größe ist ein bevorzugtes Reaktionsgefäß im Rahmen der vorliegenden Erfindung insbesondere mit üblichen Tischzentrifugen wie beispielsweise von Herstellern wie Eppendorf oder Heraeus kompatibel, d.h. das Reaktionsgefäß ist vorzugsweise zur Zentrifugation in üblichen Tischzentrifugen geeignet. Übliche maximale Außendurchmesser für Standard-Laborreaktionsgefäße und damit auch für ein bevorzugtes Reaktionsgefäß im Rahmen der vorliegenden Erfindung liegen im Bereich von 0,8 cm bis 2 cm, vorzugsweise 1,0 cm bis 1,5 cm und besonders bevorzugt 1,1 cm bis 1,3 cm. Weitere bevorzugte Außendurchmesser sind bis 0,9 cm, bis 1,2 cm, bis 1,4 cm, bis 1,6 cm und bis 1,7 cm. Die Höhe des bevorzugten Reaktionsgefäßes im Rahmen der vorliegenden Erfindung beträgt üblicherweise 1,5 cm bis 5,0 cm, vorzugsweise 2,0 cm bis 4,0 cm, besonders bevorzugt 2,5 cm bis 3,5 cm, und am meisten bevorzugt 2,8 cm bis 3,2 cm. Weitere bevorzugte Höhen sind bis 2,6 cm, bis 2,7 cm, bis 2,9 cm, bis 3,0 cm, bis 3,1 cm, bis 3,3 cm und bis 3,4 cm. In speziellen Ausgestaltungen kann die Höhe auch 1,0 cm oder mehr betragen. Das bevorzugte Reaktionsgefäß im Rahmen der vorliegenden Erfindung ist in üblichen Tischzentrifugen zentrifugierbar und kann somit beispielsweise in herkömmlichen Tischzentrifugen wie einer Standard-Tischzentrifuge mit Standard-Rotor von Eppendorf sowie auch in üblichen Racks und Haltern für Reaktionsgefäße wie beispielsweise einem Tube-Rack von Eppendorf eingesetzt werden. Zum Einbringen der zu untersuchenden Probe sowie anderer zur Durchführung der Nachweisreaktion erforderlicher Reagenzien in das Reaktionsgefäß können übliche Pipetten oder Spritzen wie beispielsweise variable und Fixvolumen-Pipetten von Eppendorf verwendet werden.

Unter einem Trägerelement bzw. Träger wird im Rahmen der vorliegenden Erfindung ein Festkörper verstanden, auf dem das Sonden-Array aufgebaut ist. Das Trägerelement mit den darauf angeordneten Sonden wird im Folgenden auch als Chip bezeichnet und kann bei speziellen Ausgestaltungen der vorliegenden Erfindung auch ein Grundelement umfassen, auf dem der eigentliche Chip angeordnet ist.

Das Trägerelement kann in dem Reaktionsgefäß angeordnet sein, indem es einfach in ein Laborreaktionsgefäß eingesetzt bzw. eingeklemmt wird, vorzugsweise indem die Chipfläche derart gestaltet ist, dass sie passgenau in ein Laborreaktionsgefäß, beispielsweise in dessen Deckel, eingesetzt bzw. eingeklemmt werden kann. Alternativ ist eine Grundfläche des Laborreaktionsgefäßes derart abgeflacht, dass das Trägerelement darauf angebracht werden kann. Sollten es technische Gründe erfordern, so kann der Träger bzw. der Chip auch in die Seitenwände des erfindungsgemäßen Reaktionsgefäßes eingebaut werden.

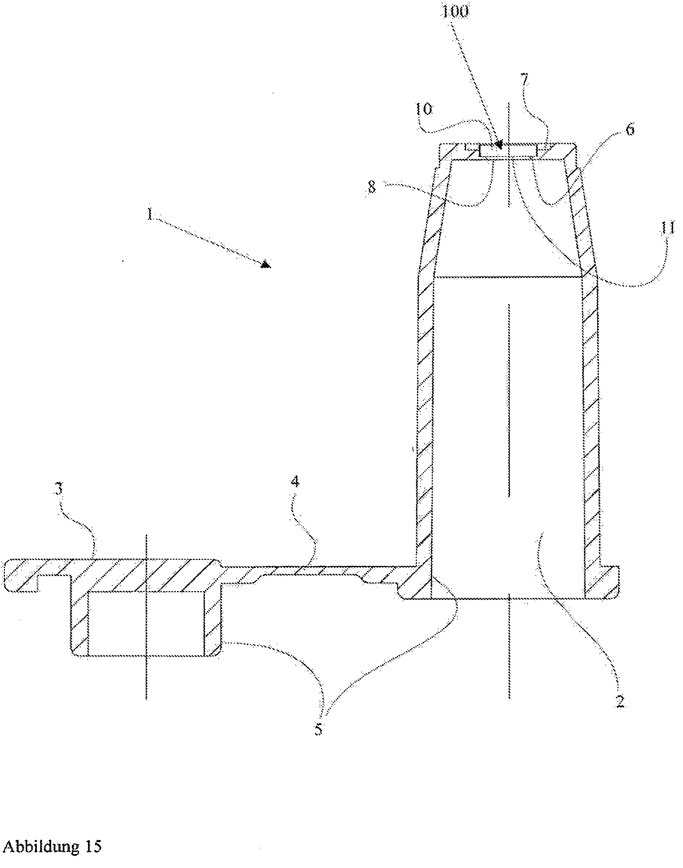

Bei einer vorteilhaften Ausgestaltung weist die Grundfläche, vorzugsweise der Boden des Laborreaktionsgefäßes jedoch eine Aussparung zur Aufnahme des Trägers auf. In diese Aussparung kann der Träger bzw. Chip beispielsweise von innen und/oder von außen eingeklebt und/oder eingeklemmt und/oder geschraubt und/oder geschweißt, insbesondere durch Laser-Schweißen, und/oder eingerastet werden. Bei diesen Ausgestaltungen weist das Reaktionsgefäß eine für ein Laborreaktionsgefäß typische Form und Größe und einen als Einfassung geformten Durchbruch zur Aufnahme der Affinitätsmatrizen, insbesondere von oberflächengebundenen Substanzbibliotheken auf. Beispiele für derartige Ausführungsformen des Reaktionsgefäßes sind in den Abbildungen 15 bis 18 angegeben. Neben den dort gezeigten Varianten sind selbstverständlich weitere Kombinationen der Art der Befestigung des Trägers denkbar.

Der Einbau des Trägers bzw. Chips von innen hat den Vorteil, dass der Träger bzw. Chip auch bei höherem Innendruck, z.B. bei Verwendung in einer Zentrifuge bzw. bei Erwärmung der Probenflüssigkeit auf Temperaturen nahe des Siedepunktes, im Reaktionsgefäß nicht aus seiner Befestigung nach außen gedrückt werden kann. Allerdings erfordert die Montage einen höheren Aufwand als der Einbau von außen.

Klemmverbindungen bzw. Gewinde bzw. Rasterungen sorgen für eine kraftschlüssige und flüssigkeitsundurchlässige Verbindung zwischen Reaktionsgefäß und Träger bzw. Chip. Durch derartige Varianten werden die Vorteile des Einsetzen des Trägers bzw. Chips von innen in das Reaktionsgefäß mit denen einer vereinfachten Montage vereint. Nachteilig wirkt sich eine weitere Verbindungsstelle, z.B. die Klemmverbindung sowie die höhere Anzahl an Bauteilen aus.

Bei der Herstellung eines wie vorstehend beschriebenen Reaktionsgefäßes wird üblicherweise von einem spritzgussgefertigten Standard-Laborreaktionsgefäß insbesondere von einem der vorstehend genannten Hersteller ausgegangen werden. Dieses wird an der Unterseite gekappt und dann in einer speziell dafür vorgesehenen Vorrichtung umgeschmolzen. Ein derartiges Verfahren eignet sich insbesondere für kleinere Stückzahlen. Bei großen Stückzahlen bietet es sich an, das Reaktionsgefäß direkt in einer der vorstehend genannten Ausgestaltungen spritzzugießen.

Um die Affinitätsmatrix von außen vor Dreck zu schützen, ist es vorteilhaft, auf die Unterseite des Reaktionsgefäßes eine Schutzfolie aufzuspannen bzw. aufzukleben, die kurz vor der Verwendung des Reaktionsgefäßes abgezogen wird.

Üblicherweise ist die Grundfläche, auf der das Trägerelement mit den darauf auf vorbestimmten Bereichen immobilisierten Sondenmolekülen angeordnet ist, der Boden des erfindungsgemäßen Reaktionsgefäßes.

Alternativ kann der Träger auch im Deckel des wie vorstehend beschriebenen Reaktionsgefäßes angebracht sein. Der Einbau des Trägerelements bzw. der Chipfläche in den Deckel des Reaktionsgefäßes ist insbesondere dann vorteilhaft, wenn die Affinitätsmatrix empfindlich gegenüber den Bedingungen bei einem oder mehreren der Reaktionsschritte zur Vorbereitung und/oder Durchführung der Nachweisreaktion reagiert. Derartige Reaktionsschritte können in dieser Ausgestaltung des Reaktionsgefäßes in dem aufrecht stehenden Reaktionsgefäß durchgeführt werden, wodurch die Affinitätsmatrix bzw. der Chip nicht mit den Reaktions- und Probenlösungen in Kontakt kommt und so geschützt wird. Zur Durchführung der Nachweisreaktion wird das Reaktionsgefäß dann auf den Deckel gedreht bzw. gestellt, so dass die Probe mit den oberflächengebundenen Sonden in Berührung kommt. Auf diese Weise wird die thermische und chemische Belastung der Affinitätsmatrix bzw. des Chips verringert.

Das Trägerelement des wie vorstehend beschriebenen Reaktionsgefäßes ist vorzugsweise im Bereich der Detektionsfläche optisch durchlässig und/oder oder nicht fluoreszierend. Unter Detektionsfläche ist der Bereich des Trägerelements zu verstehen, auf dem auf vorbestimmten Bereichen Sondenmoleküle immobilisiert sind. In einer bevorzugten Ausführungsform der Erfindung sind die Sondenmoleküle direkt auf dem Trägerelement aufgebracht, ohne dass das Trägerelement ein weiteres Grundelement umfasst.

In anderen bevorzugten Ausführungsformen sind die Sondenmoleküle auf einem vorzugsweise optisch durchlässigen und/oder nicht fluoreszierenden Chip aufgebracht, der wiederum fest mit einem Grundelement, das vorzugsweise mindestens in dem durch den Chip definierten Detektionsbereich optisch durchlässig und/oder nicht fluoreszierend ist, verbunden ist. Die Dimensionen des Chips sind dabei kleiner als die Dimensionen des Grundelements. In diesem Fall bilden der die Sondenmoleküle tragende Chip und das Grundelement zusammen das Trägerelement.

Bei einer bevorzugten Ausgestaltung des wie vorstehend beschriebenen Reaktionsgefäßes ist die der Detektionsfläche des Trägerelements gegenüberliegende Grundfläche in dem der Detektionsfläche entsprechenden Bereich ebenfalls optisch durchlässig und/oder nicht fluoreszierend.

Allgemein umfasst ein Sonden-Array gemäß der vorliegenden Erfindung einen Träger, der die Bildung von Arrays mit Sonden auf seiner Oberfläche erlaubt. Ein derartiger Träger kann unter anderem hergestellt werden aus Materialien, ausgewählt aus der Gruppe, bestehend aus Glas, Filtern, elektronischen Vorrichtungen, Polymeren, metallischen Materialien u.dgl. sowie beliebigen Kombinationen dieser Materialien.

Das Material des Behälters des Reaktionsgefäßes entspricht den üblicherweise für Laborreaktionsgefäße verwendeten Materialien und ist beispielsweise ausgewählt aus der Gruppe bestehend aus Glas, Glaskeramik, kunststoffbeschichtetem Glas und Kunststoffen bzw. organischen Polymeren wie Polypropylen, Polyethylen, Polystyrol, Polycarbonat, PVC, Polymethylmethacrylat, Silikonkunststoff, Kautschuk, Polytetrafluorethylen und/oder Nylon. Für spezielle Ausführungsformen sind als Materialien auch Metalle, insbesondere nicht rostende Stähle, Platin und/oder Aluminium, denkbar.

Das wie vorstehend beschriebene Reaktionsgefäß weist ferner vorzugsweise eine für ein Laborreaktionsgefäß typische Größe auf. Typische Füllvolumina liegen im Bereich von 100 µl bis 2,5 ml, können aber bei speziellen Ausgestaltungen auch höher oder niedriger sein. Besonders bevorzugt hat das Reaktionsgefäß ein für ein Standard-Eppendorf-Tube übliches Füllvolumen von bis zu 1,5 ml. Weitere bevorzugte Füllvolumina sind bis 0,4 ml, bis 0,5 ml, bis 0,7 ml, bis 1,0 ml oder bis 2,0 ml.

Ein Kernaspekt einer erfindungsgemäßen Anordnung ist wiederum das von außen bereitgestellte und aus einer Reihe von Möglichkeiten ausgewählte Vorgeben der Art und Weise der Steuerung und/oder der Auswertung eines Experiments seitens der Verarbeitungseinrichtung, was basierend auf der Verarbeitungsanweisung erfolgt.

Die vorstehend beschriebenen Anordnungen können mit einer Schnittstelleneinrichtung versehen sein, wobei mittels der Schnittstelleneinrichtung die Verarbeitungsanweisung extern vorgebbar ist. Eine solche Schnittstelleneinrichtung kann ein Steckplatz sein, in welches ein die Verarbeitungsanweisung enthaltendes Medium (zum Beispiel eine Magnetkarte oder ein Barcode) eingeführt werden kann, um der Anordnung die Verarbeitungsanweisung zuzuführen. Eine solche Schnittstelleneinrichtung kann alternativ eine Tastatur oder eine Touchscreen sein, mittels welcher eine gewünschte Verarbeitungsanweisung durch einen Benutzer eingegeben werden kann. Die Schnittstelleneinrichtung kann auch eine USB-Schnittstelle sein, über welche die Verarbeitungsanweisung übermittelt werden kann.

Die Schnittstelleneinrichtung kann insbesondere eine graphische Benutzeroberfläche ("Graphical user interface", GUI) sein, zum externen Vorgeben der Verarbeitungsanweisung durch einen Benutzer. Eine solche GUI kann zum Beispiel eine Tastatur und eine Computermaus aufweisen, mittels welchen über einen Bildschirm ein gewünschter Betriebsmodus eingestellt werden kann.

Alternativ kann die Schnittstelleneinrichtung zum Aufnehmen und Auslesen eines extern einführbaren Speichermediums eingerichtet sein, in welchem die Verarbeitungsanweisung gespeichert ist. Ein solches Speichermedium kann zum Beispiel eine Diskette, eine Magnetkarte, eine kontaktlose Chipkarte, ein RFID-Tag oder eine Barcode-enthaltende Einrichtung sein.

Die Detektorvorrichtung kann eine optische Detektionseinrichtung, insbesondere eine Kamera zum optischen Auslesen einer spezifischen Wechselwirkung umfassen. Alternativ zu einem optischen Auslesen kann auch ein elektrisches Ausleseverfahren eingesetzt werden, das zum Beispiel auf der Veränderung der elektrischen Eigenschaften (zum Beispiel der Impedanz) eines Analyten beruhen kann, die sich im Falle eines Hybridisierungsereignisses ändern können. Der Aufbau der Detektionsvorrichtung kann insbesondere ausgestaltet sein wie in der internationalen Patentanmeldung WO 03/059516 beschrieben.

Die Kamera kann eine CCD-Kamera ("charge coupled device"), d.h. eine ladungsgekoppelte Schaltung sein.

Insbesondere kann die Kamera in CMOS-Technologie gefertigt sein, weiter insbesondere als in Siliziumtechnik gefertigter monolithisch integrierter Schaltkreis. Dadurch ist eine Miniaturisierung der Anordnung ermöglicht.

Die Detektorvorrichtung kann eine Abbildungsoptik zwischen der Kamera und dem Mikroarray aufweisen. Eine solche Abbildungsoptik kann ein oder mehrere optische Elemente wie zum Beispiel Linsen, Blenden, Spiegel, Strahlteiler, etc. enthalten, um eine optimale Abbildung von Sensorereignissen auf die Kamera zu gewährleisten. Dadurch kann die Nachweissensitivität der Anordnung verbessert werden.

Die Detektorvorrichtung kann eine Lichtquelle umfassen, wobei die Lichtquelle insbesondere zum homogenen Beleuchten des Mikroarrays eingerichtet sein kann. Eine solche Lichtquelle kann aus der Gruppe bestehend aus einem Laser, einer Licht-emittierenden Diode (LED), einem Flächenstrahler und einer Hochdrucklampe ausgewählt sein.

Ferner kann eine Flüssigkeitszuführ-Einrichtung zum Einbringen einer Flüssigkeit in Wells der Mikrotiterplatte vorgesehen sein. Eine Flüssigkeitszuführ-Einrichtung kann zum Einbringen einer Flüssigkeit in das mindestens eine Reaktionsgefäß vorgesehen sein. Eine solche Flüssigkeitszuführ-Einrichtung kann insbesondere als Pipettiereinrichtung ausgebildet sein, die definierbare Mengen einer oder mehreren Flüssigkeiten zuführen und mischen kann, die z.B. für die Durchführung einer Hybridisierung oder eine PCR-Reaktion erforderlich sind, oder um Analyt-Flüssigkeit gezielt zuzuführen.
Derartige Flüssigkeitszuführ-Einrichtungen bzw. Liquid Handling-Vorrichtungen sind im dem Stand der Technik beschrieben und umfassen u.a. Dispensier- und Aspiriervorrichtungen sowie Vorratsbehälter für Waschlösungen, Nachweislösungen und Substrate, u.dgl. Die Vorratsbehälter können dabei nach einem herkömmlichen Verfahren temperiert werden. Die Vorratsbehälter sind insbesondere mittels Schläuchen mit einem vorzugsweise in xyz-Richtung beweglichen Probenverteilarm bzw. Kopf verbunden, welcher die parallele, z.B. mit einem Mehrkanaladapter, und/oder serielle Probenverteilung z.B. in einzelne Wells der erfindungsgemäßen Mikrotiterplatten-Vorrichtung übernimmt. Es ist jedoch auch denkbar, dass der Probenverteilkopf in weniger als drei Dimensionen beweglich ist und die Bewegung in den restlichen Dimensionen von Mikrotiterplatten und/oder Vorratsbehältern durchgeführt wird. Der Probenverteilkopf kann eine Düse oder Luftzufuhr enthalten. Damit kann (temperierte) Luft oder ein anderes geeignetes Gas auf die Arrays geblasen werden, falls ein Trocknungsschritt erforderlich ist.

Die Flüssigkeitszuführ-Einrichtung entnimmt vorzugsweise eine definierte und wählbare Flüssigkeit aus üblicherweise mehreren an in einem, ggf. temperierten, Vorratsbehälter bevorrateten Flüssigkeiten und überträgt diese in ein entsprechendes Well.

Ferner kann auch eine Einrichtung zur Flüssigkeitsabführung vorgesehen sein, die vorzugsweise eine definierte und wählbare Flüssigkeit, insbesondere die gesamte Flüssigkeit aus einem Well abführt und ggf. in einen Behälter, beispielsweise einen Abfallbehälter überführt. Derartige Flüssigkeitsabführ-Einrichtungen sind ebenfalls im Stand der Technik beschrieben.

Mit einer Temperatureinstelleinheit kann eine Temperatur von jedem der Wells der Mikrotiterplatte eingestellt werden. Eine Temperatureinstelleinheit kann auch zum Einstellen einer Temperatur in dem Reaktionsgefäß eingerichtet sein. Eine Temperatureinstelleinheit kann die Funktionalität des erfindungsgemäßen integrierten Systems zum Durchführen und zum Analysieren eines Experiments zusätzlich erweitern. Mittels gezielten Vorgebens einer Temperatur kann die Geschwindigkeit von physikalischen, chemischen und biochemischen Reaktionen und Wechselwirkungen exakt vorgegeben und optimiert werden. Insbesondere kann eine herkömmliche Temperiervorrichtung für Mikrotiterplatten eingesetzt werden, die vorzugsweise auch Temperaturgradienten und Temperaturstufen ermöglicht und besonders bevorzugt einen für die Zwecke der PCR erforderlichen Temperaturwechsel ermöglicht.

Mittels einer Bewegungseinrichtung ist oder sind die Detektorvorrichtung und/oder das oder die Mikroarrays und/oder die Flüssigkeitszuführ-Einrichtung und/oder die Flüssigkeitsabführ-Einrichtung und/oder die Temperatureinstelleinheit in einer beliebigen vorgebbaren Richtung bewegbar. Jede der genannten Komponenten kann bezüglich jeder jeweils anderen der Komponenten in beliebiger Richtung bewegt werden. Zum Beispiel kann die Detektionsvorrichtung gegenüber der Mikrotiterplatte in einer Ebene parallel zu der Mikrotiterplatte bewegt werden, um die einzelnen Sensorfelder zweidimensional abzuscannen. Ferner kann der Abstand zwischen der Detektionsvorrichtung und der Mikrotiterplatte mittels Bewegens verändert und so auf einen gewünschten Wert eingestellt werden.

In einer weiteren Ausführungsform ist die Detektorvorrichtung starr und die Mikrotiterplatte in einer Ebene parallel zur Detektionsvorrichtung bewegbar.

In einer weiteren Ausführungsform enthält die Mikrotiterplatte und/oder das oder die Mikroarrays, beispielsweise an einer Position zwischen den Wells oder an einem der Ränder der Mikrotiterplatte und/oder des oder der Mikroarrays, vorzugsweise einen Marker bzw. eine Markierung, beispielsweise eine wie nachstehend beschriebene detektierbare Einheit, eine Aussparung, eine Bohrung, ein Loch, insbesondere ein Durchgangsloch, ein reflektierendes Element, ein Fadenkreuz auf einem geeigneten Hintergrund und dergleichen. Der Marker gewährleistet eine exakte Positionierung der Mikrotiterplatte und/oder des oder der Mikroarrays relativ zum Detektor. Die Positionierung erfolgt bei dieser Ausführungsform vorzugsweise schrittweise, wobei in einem Schritt zunächst eine Detektion der Position des Markers erfolgt und anschließend das Detektionsergebnis, der Ist-Wert, mit einem Soll-Wert verglichen wird und entsprechend, falls erforderlich, eine Korrektur der Position der Mikrotiterplatte und/oder des oder der Mikroarrays relativ zum Detektor durchgeführt wird. Die Detektion des Markerelementes und die anschließende Korrektur der Position der Mikrotiterplatte und/oder des oder der Mikroarrays relativ zum Detektor erfolgt dabei vorzugsweise automatisch, beispielsweise gesteuert mit Hilfe einer geeigneten Software.

Ferner ist erfindungsgemäß ein Verfahren zum Verarbeiten von einer mittels einer Anordnung zur Durchführung und zur Analyse von Mikroarray-Experimenten erfassten spezifischen Wechselwirkung zwischen Targetmolekülen und auf vorbestimmten Bereichen eines Mikroarrays angeordneten Sondenmolekülen geschaffen, wobei bei dem Verfahren eine mittels eines Detektors erfasste spezifische Wechselwirkung basierend auf einer extern selektiv vorgegebenen Verarbeitungsanweisung verarbeitet wird, und die Verarbeitungsanweisung Informationen bereitstellt, unter welchen experimentellen Bedingungen, ausgewählt aus der Liste bestehend aus
- Art des verwendeten Mikroarrays;
- Art der zu verwendenden Wasch- und Pufferlösungen;
- Multiplexinggrad;
- Array-Layout;
- Zuordnungstabelle zur Zuordnung von auf einem vorbestimmten Bereich angeordneten Sondenspezies zu detektierten Signalen, zur Korrelation der Signale zueinander, und/oder zur Zuordnung der Signale zu der zu analysierenden Fragestellung; und
- Schwellwerttabelle, die angibt, ab welchem Messwert auf einem vorbestimmten Bereich ein detektiertes Signal als positives Signal eingestuft wird,
ein oder mehrere Mikroarray-Experimente in dem Reaktionsgefäß oder auf der Mikrotiterplatte durchzuführen und/oder zu analysieren sind.

Die vorliegende Anmeldung beschreibt weiterhin ein computerlesbares Speichermedium, in dem ein Programm zum Verarbeiten von einer mittels einer Anordnung zur Durchführung und zur Analyse von Mikroarray-Experimenten erfassten spezifischen Wechselwirkung zwischen Targetmolekülen und auf vorbestimmten Bereichen eines Mikroarrays angeordneten Sondenmolekülen gespeichert ist, wobei bei dem Programm, wenn es von einem Prozessor ausgeführt wird, das Verfahren mit den oben beschriebenen Merkmalen durchgeführt wird.

Die vorliegende Anmeldung beschreibt weiterhin ein Programm-Element, in dem ein Programm zum Verarbeiten von einer mittels einer Anordnung zur Durchführung und zur Analyse von Mikroarray-Experimenten erfassten spezifischen Wechselwirkung zwischen Targetmolekülen und auf vorbestimmten Bereichen eines Mikroarrays angeordneten Sondenmolekülen gespeichert ist. Bei dem Programm wird, wenn es von einem Prozessor ausgeführt wird, das Verfahren mit den oben beschriebenen Merkmalen durchgeführt.

Das erfindungsgemäße Verfahren kann somit sowohl mittels eines Computerprogramms, d.h. einer Software, als auch mittels einer oder mehrerer spezieller elektrischer Schaltungen, d.h. in Hardware, oder in beliebig hybrider Form, d.h. mittels Software-Komponenten und Hardware-Komponenten, realisiert werden.

Ein Kernaspekt dieses Verfahrens ist wiederum, dass eine mittels einer Detektorvorrichtung erfasste spezifische Wechselwirkung basierend auf einer extern selektiv vorgegebenen Verarbeitungsanweisung verarbeitet werden kann. Anders ausgedrückt betreibt und steuert das Verfahren eine erfindungsgemäße Anordnung derart, dass die Art und Weise des Betriebs der Anordnung und der Auswertung der gemessenen Daten von außen eingestellt und aus einer Mehrzahl von Optionen ausgewählt werden kann. Code für das Verfahren kann ein Benutzer auf einem Speichermedium der Anordnung zuführen, die ein solches Verfahren dann ausführt. Oder der Benutzer kennzeichnet mit der Verarbeitungsanweisung lediglich eindeutig, welches auf einem Speichermedium der Anordnung bereits enthaltene Steuerprogramm ausgeführt werden soll, indem eine Adresse, ein Flag, eine Identifikationsnummer oder eine sonstige Codierung als Verarbeitungsahweisung bereitgestellt wird, die der Anordnung eindeutig erkennen lässt, auf welches Steuerprogramm zugegriffen werden soll.

Basierend auf der extern selektiv vorgegebenen Verarbeitungsanweisung kann eine selektive Verarbeitung gemäß einem ausgewählten von einer Mehrzahl von möglichen Mikroarray-Experimenten durchgeführt wird. Die Anordnung kann in der Lage sein, eine bestimmte Anzahl unterschiedlicher Experimente auszuführen (zum Beispiel ein erstes Experiment zur Untersuchung einer Probe nach Krankheit A, ein zweites Experiment zur Untersuchung einer Probe nach Krankheit B und ein drittes Experiment zur Untersuchung einer Probe nach Krankheit C). Die Verarbeitungsanweisung kann die Information enthalten, welches spezielle Experiment nunmehr durchgeführt werden soll (zum Beispiel das erste Experiment zur Untersuchung einer Probe nach Krankheit A).

Basierend auf der extern selektiv vorgegebenen Verarbeitungsanweisung kann eine selektive Verarbeitung und Analyse gemäß mindestens einem ausgewählten experimentellen Parameter für das durchgeführte Mikroarray-Experiment durchgeführt werden. Mit anderen Worten kann die Verarbeitungsanweisung experimentell einstellbare Parameter, ausgewählt aus der Liste bestehend aus Art des verwendeten Mikroarrays, Art der zu verwendenden Wasch- und Pufferlösungen, Multiplexinggrad, Array-Layout, Zuordnungstabelle oder Schwellwerttabelle, vorgeben.
Basierend auf der extern selektiv vorgegebenen Verarbeitungsanweisung kann eine selektive validierte Verarbeitung gemäß einem speziellen Mikroarray-Experiment durchgeführt werden. Unter validiert wird insbesondere verstanden, dass bei mehrfacher Ausführung eines bestimmten Experiments unter den jeweils gleichen Bedingungen ein jeweils gleiches Ergebnis erhalten wird.

Die Bereitstellung der erfindungsgemäßen Anordnungen ermöglicht insbesondere (i) eine standardisierte Entwicklung von Mikroarray-basierten Tests, d.h. Multiparameteranalysen auf der Basis von oberflächengebundenen Substanzbibliotheken, (ii) eine standardisierte Validierung von Mikroarray-basierten Tests, (iii) eine einfache Durchführung bzw. Handhabung eines ggf, validierten Mikroarray-basierten Tests insbesondere an beliebigen Orten, und/oder (iv) die Durchführung einer unbeschränkten Zahl an, ggf. validierten, Mikroarray-basierten Tests auf einem Gerät.

Dies wird insbesondere durch Zusammenführung vorzugsweise aller Test- und Auswerte-Prozessschritte in einer Anordnung bzw. einem Gerät erreicht, welches ferner vorzugsweise durch einen einheitlichen testspezifischen Datensatz gesteuert wird.

Im Folgenden werden bevorzugte Ausführungsformen zur Bereitstellung bzw. Handhabung der erfindungsgemäßen Anordnungen zur Durchführung und zur Analyse von Mikroarray-Experimenten bzw. des erfindungsgemäßen computerlesbaren Speichermediums bzw. des erfindungsgemäßen Programm-Elements beschrieben:
Üblicherweise werden bei der Entwicklung eines Mikroarray-basierten Tests für die erfindungsgemäßen Anordnungen zur Durchführung und zur Analyse von Mikroarray-Experimenten die Anordnungen frei programmiert und eine Software-Auswertung manuell durchgeführt. Auf diese Weise wird ein testspezifischer Datensatz mit den Parametern zur Verarbeitung bzw. Prozessierung und Auswertung bzw. Analyse der bzw. der Array-Experimente erstellt. Der entwickelte Datensatz wird vorzugsweise zusammen mit den verwendeten Chemikalien, Mikroarrays, insbesondere im erfindungsgemäßen Mikrotiterplatten-Format, Assay-Bedingungen usw. validiert.

Für die Handhabung der erfindungsgemäßen Anordnungen wird üblicherweise einmalig dervalidierte Datensatz auf die erfindungsgemäße Anordnung überführt, z.B. mittels eines Speicherchips, ggf. mit USB-Anschluss. Die erfindungsgemäße Anordnung speichert diesen Datensatz vorzugsweise in einer Datenbank.

Nach Bestückung der erfindungsgemäßen Anordnung mit Mikroarrays, vorzugsweise im erfindungsgemäßen Mikrotiterplatten-Format AS, und den für die Reaktion erforderlichen Reagenzien, die vorzugsweise als Kit bereitgestellt werden - kann der, vorzugsweise diagnostische, Test durchgeführt werden. Die Durchführung erfolgt vorzugsweise automatisch.

Die Anordnung erkennt vorzugsweise anhand einer Identifikationsnummer der eingesetzten Mikroarrays, vorzugsweise im erfindungsgemäßen Mikrotiterplatten-Format, welchen Datensatz es zur Durchführung des Arraytests benötigt.

Für den Vertrieb eines Mikroarray-basierten Assays mit den erfindungsgemäßen Gegenständen ist folglich lediglich die, vorzugsweise einmalige, Ausstattung mit einem der durchzuführenden Experiment zugehörigen Datensatzes notwendig und anschließend, wie bei jedem Einparametertest üblich, die Zusendung eines Kits bestehend aus Mikroarrays, vorzugsweise im erfindungsgemäßen Mikrotiterplatten-Format, und notwendigen Chemikalien. Der Benutzer versieht nun die Anordnung mit den Bestandteilen des Kits, ggf. anhand einer dem Kit beigelegten Liste, fügt die zu analysierenden Proben hinzu und startet die Prozessierung. Die erfindungsgemäße Anordnung führt anhand des zugehörigen Datensatzes den Test inklusive Auswertung durch und liefert dem Benutzer, falls es sich um einen diagnostischen Test handelt, eine Diagnoseempfehlung.

Ein wie vorstehend erwähntes Kit kann insbesondere Hybridisierungspuffer wie z.B. 6xSSPE, 2xMES, 3DNA und/oder PBS; Blockierungsreagenzien wie z.B. Casein, Milchpulver, fötales Kälberserum, Heringssperma-DNA wobei diese Reagenzien vorzugsweise in einem geeigneten Puffer gelöst sind; Waschpuffer wie z.B. 2xSSC mit SDS bzw. Triton, 2xSSC, 0,2xSSC und/oder PBS; Enzympuffer wie die oben genannten Hybridisierungspuffer; Enzymsubstratlösungen wie z.B. TMB in einem geeigneten Puffer, z.B. Citratpuffer, für die enzymatische Präzipitation eines organischen Moleküls und/oder eine Silberlösung für die Silberfällung eines anorganischen Niederschlags; PCR-Mastermixe; Probenaufschlusslösungen; Denaturierungslösungen und/oder Renaturierungslösungen umfassen.

Die erfindungsgemäßen Anordnungen ermöglichen es durch die Kombination von Hardware, Software, Mikroarrays, vorzugsweise im erfindungsgemäßen Mikrotiterplatten-Format, komplexe Mehrparameter-Analysen, insbesondere diagnostische Analysen. automatisch durchzuführen. Dabei übernehmen die erfindungsgemäßen Anordnungen die Aufgaben des Probenmultiplexings, der Zuordnung von Analytdaten zu Ergebnissdaten, z.B. von Patientendaten zu Diagnosen, des Prozessierens der Proben und/oder der vollautomatischen Auswertung. Dabei können die erfindungsgemäßen Anordnungen unbeschränkt viele unterschiedliche analytische, insbesondere diagnostische, Fragestellungen bearbeiten. Die erfindungsgemäßen Anordnungen erkennen beispielsweise anhand einer Identifikationsnummer, wie einem Barcode, des Mikroarrays bzw. der erfindungsgemäßen Mikrotiterplatte mit darin angeordneten Mikroarrays automatisch die zu bearbeitende Fragestellung und führen die Analyse entsprechend durch. Die Zahl der Fragestellungen kann unbeschränkt erweitert werden. Die erfindungsgemäßen Anordnungen können selbstverständlich auch manuell zur Entwicklung von Tests, insbesondere diagnostischen Tests, betrieben werden.

Im Einzelnen können in den erfindungsgemäßen Anordnungen insbesondere eines oder mehrere der folgenden Merkmale realisiert sein:
- Automatische Erkennung der zu bearbeitenden Fragestellung:
   Die Mikroarrays bzw. die erfindungsgemäße Vorrichtung umfassend eine Mikrotiterplatte mit darin integrierten Mikroarrays sind mit einer Identifikationsnummer (ID) gekennzeichnet. Durch Einlesen dieser ID beispielsweise über einen Barcode wird in einer Datenbank das Protokoll zur Prozessierung des zugehörigen Tests geladen. Das Protokoll beinhaltet beispielsweise spezifische Eingabeparameter zum Test; den Multiplexinggrad; das Verzeichnis der oberflächengebundenen Substanzbibliothek, d.h. das Arraylayout; eine Zuordnungstabelle und/oder eine Schwellwerttabelle.
   Unter spezifischen Eingabeparameter werden z.B. Haltbarkeitsdaten der Hybridisierungs- und Waschlösungen, Batchnummern, Patienten-ID, Verdünnungen u dgl. verstanden. Ein Teil dieser spezifischen Eingabeparameter kann auch in einer Datenbank hinterlegt sein. Beispielweise kann der Vorratsbehälter der Waschlösungen mit einem Barcode ausgerüstet sein. Dieser wird beim Einstellen in das Gerät ausgelesen, der entsprechende Datensatz aus einer Datenbank ausgelesen und verwertet.
- Zuordnung zu diagnostischen Information:
   Die Software der erfindungsgemäßen Anordnung ist vorzugsweise in der Lage, die Daten der Patientenproben, vorzugsweise auf einer Patientenproben-Platte, mit den Daten eines mikroarrays bzw. der erfindungsgemäßen Vorrichtung umfassend eine Mikrotiterplatte mit darin integrierten Mikroarrays zu verknüpfen und somit Fehler bei der Zuordnung von Testergebnissen zu Patientenproben zu verhindern. Dies kann durch Einlesen einer ID auf der Patientenproben-Platte oder durch manuelle Eingabe erfolgen.
- Mulitplexing bzw. Multiplexinggrad:
   Es ist möglich Arrays mit unterschiedlichen analytischen Fragestellungen bereitzustellen. So können mit einer Patientenprobe verschiedene PCR's mit entsprechend verschiedenen Primersätzen in entsprechend verschiedenen Wells durchgeführt werden. In der erfindungsgemäßen Anordnung können dann die Proben in einem oder mehreren Wells der Mikrotiterplatte mit jeweils darin integrierten Mikroarrays inkubiert werden. Anschließend können die Analysedaten mittels einer Software zusammengefügt werden.

Beispielsweise kann zur Bestimmung des HLA-Typs eines Patienten in einer PCR-Mikrotiterplatte in fünf seperaten Wells der erfindungsgemäßen Vorrichtung je eine PCR-Reaktion mit je einem spezifischen Primersatz für die Genotypen HLA A,B,C,D,DR und DQ durchgeführt werden. Die Analyse der PCRs erfolgt anschließend in einem Well einer erfindungsgemäßen Mikrotiterplatte mit darin integrierten Mikroarrays, welche ein Mikroarray zur parallelen Analyse aller fünf Genotypen enthält. Die Zuordnung der fünf Wells der PCR-Mikrotiterplatte mit je einer Monoplex-PCR zu einer Multiplex-Analyse in einem Well der erfindungsgemäßen Mikrotiterplatte wird über eine entsprechende Zuordnungstabelle realisiert.
- Prozessierung:
   Alle Prozessierungs- bzw. Verarbeitungsschritte wie Probentransfer, Inkubation, Waschen, Färben etc. werden vorzugsweise automatisch in der erfindungsgemäßen Anordnung durchgeführt.
- Auswertung:
   Nach Abschluss der der Prozessierung werden die Wells der Mikrotiterplatte mit jeweils darin integrierten Mikroarrays vorzugsweise sequenziell über eine bildgebende Auswerteeinheit geführt. Die Grauwerte werden vorzugsweise automatisch von einer Software analysiert und anhand einer Zuordnungs- und Schwellwerttabelle ausgewertet. Die Ergebnisse werden dem Benutzer zur Verfügung gestellt und können ggf. über standardisierte Schnittstellen einem LIMS (*laboratory information management system*) zugeführt werden.
- Erweiterung der Datensätze:
   Durch Ergänzung einer Datenbank können beliebig viele Tests in die erfindungsgemäße Anordnung übernommen werden. Die Datenbank kann z.B. über einen sog. USB-Stick oder über das Internet ergänzt werden. Auf diesem Weg lassen sich Test auch modernisieren oder erweitern.
- Rückverfolgbarkeit:
   Durch den vorzugsweise computergesteuerten Betrieb lassen sich die jeweiligen Bedingungen für jeden durchgeführten Test rückverfolgen.

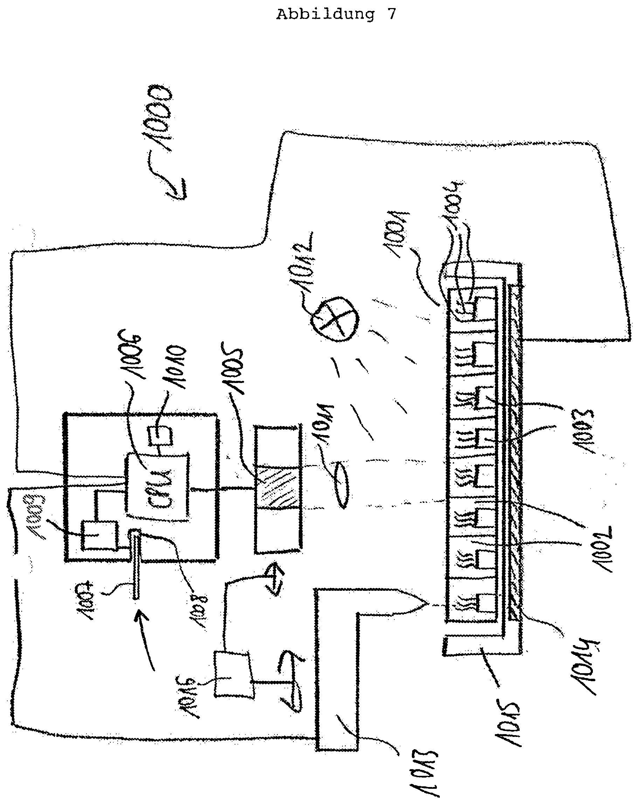

Im Weiteren wird Bezug nehmend auf Abbildung 7 eine Anordnung 1000 zur Durchführung und zur Analyse von Mikroarray-Experimenten zum Nachweis einer spezifischen Wechselwirkung zwischen Sonden- und Targetmolekülen gemäß einem Ausführungsbeispiel der Erfindung beschrieben.

Die Anordnung 1000 enthält eine Mikrotiterplatte 1001, wobei in Wells 1002 der Mikrotiterplatte 1001 jeweils ein einzelnes Mikroarray 1003 mit auf vorbestimmten Bereichen des Mikroarrays 1003 angeordneten Sondenmolekülen 1004 integriert ist. Eine CCD-Kamera 1005 ist als Detektorvorrichtung bereitgestellt und zum Erfassen einer spezifischen Wechselwirkung zwischen auf vorbestimmten Bereichen des Mikroarrays 1003 angeordneten Sondenmolekülen 1004 und Targetmolekülen (nicht gezeigt) eingerichtet.

Die Anordnung 1000 enthält ferner eine als Mikroprozessor 1006 ("central processing unit", CPU) ausgestaltete Verarbeitungseinrichtung, die zum Verarbeiten der mittels der CCD-Kamera 1005 erfassten spezifischen Wechselwirkung basierend auf einer extern selektiv vorgebbaren validierten Verarbeitungsanweisung eingerichtet ist. Die CPU 1006 steuert die Anordnung 1000 und verarbeitet detektierte Signale basierend auf der im Weiteren näher beschriebenen benutzerseitig oder werkseitig bereitgestellten Verarbeitungsanweisung.

Die Verarbeitungsanweisung ist der Anordnung 1000 mittels einer Magnetkarte 1007 bereitgestellt, welche Magnetkarte 1007 in eine Magnetkarten-Steckvorrichtung 1008 als Schnittstelleneinrichtung eingesteckt ist. Auf der Magnetkarte ist eine Identifikationsnummer gespeichert, welche eine Magnetkarten-Auslesevorrichtung 1009 ausliest. Diese Identifikationsnummer wird der CPU 1006 zugeführt, die ein damit identifiziertes Betriebsprogramm, das auf einer Festplatte 1010 gespeichert ist, ermittelt. Auf dieses Programm auf der Festplatte 1010 greift die CPU 1006 zu und wertet basierend auf darin enthaltenen Informationen die von der CCD-Kamera 1005 gemessenen Daten aus. Ferner kann die CPU 1006 den experimentellen Ablauf des Experiments und die Rahmenbedingungen des Experiments mittels des einschlägigen Betriebsprogramms steuern. Die Detektorvorrichtung weist eine Abbildungsoptik zwischen der CCD-Kamera 1005 und des Mikroarrays 1003 in Form einer Sammellinse 1011 auf.

Die Detektorvorrichtung umfasst ferner eine Leuchtdiode 1012 als Lichtquelle zum im Wesentlichen homogenen Beleuchten der Mikroarrays 1003.

Ferner ist eine mittels der CPU 1006 steuerbare Pipettiereinrichtung 1013 als Flüssigkeitszuführ-Einrichtung zum Einbringen einer Flüssigkeit in Wells 1002 der Mikrotiterplatte 1001 vorgesehen.

Darüber hinaus ist eine mittels der CPU 1006 steuerbare Thermostatisierungseinheit 1014 vorgesehen, integriert in einer Aufnahmevorrichtung 1015 zum Aufnehmen der Mikrotiterplatte 1001. Die Thermostatisierungseinheit 1014 ist zum Einstellen einer Temperatur von jedem der Wells 1002 der Mikrotiterplatte 1001 eingerichtet. Dieses Einstellen erfolgt basierend auf der Verarbeitungsanweisung.

Mittels einer Bewegungseinrichtung 1016 ist die CCD-Kamera 1005 bewegbar. Ferner ist mittels der Bewegungseinrichtung 1016 die Pipettiereinrichtung 1013 bewegbar.

Wenn die Magnetkarte 1007 in den Steckplatz 1008 eingeführt ist, liest das Lesegerät 1009 eine Verarbeitungsanweisung aus der Magnetkarte 1007 aus. Die CPU 1006 steuert basierend auf dieser extern selektiv bereitgestellten Information dann die Temperiereinrichtung 1014 und die Pipettiereinrichtung 1013, um ein Experiment gemäß der Verarbeitungsanweisung durchzuführen. Von der CCD-Kamera 1005 erfasste Messdaten wertet die CPU 1006 dann gemäß der Verarbeitungsanweisung aus.

Ein weiterer Aspekt der vorliegenden Erfindung betrifft die Verwendung einer wie vorstehend beschriebenen erfindungsgemäßen Vorrichtung bzw. der vorstehend beschriebenen erfindungsgemäßen Anordnungen in einem Verfahren zum Nachweis der spezifischen Wechselwirkung zwischen molekularen Sonden- und Targetmolekülen, das die folgenden Schritte umfasst:
a) Wechselwirkung des Targets mit den auf vorbestimmten Bereichen (Array-Elementen) des Mikroarrays angeordneten Sonden; und
b) Detektion der Wechselwirkung.

Üblicherweise werden die nachzuweisenden Targetmoleküle mit einem detektierbaren Marker versehen. Der Nachweis erfolgt bei dem erfindungsgemäßen Verfahren somit vorzugsweise dadurch, dass die gebundenen Targets mit mindestens einer Markierung versehen sind, die in Schritt b) detektiert wird.

Die Markierung, die an die Targets oder Sonden gekoppelt ist, ist vorzugsweise eine detektierbare Einheit oder eine über eine Ankergruppe an die Targets oder Sonden gekoppelte detektierbare Einheit. Hinsichtlich der Möglichkeiten der Detektion bzw. der Markierung ist das erfindungsgemäße Verfahren äußerst flexibel. So ist das erfindungsgemäße Verfahren mit einer Vielzahl physikalischer, chemischer oder biochemischer Detektionsverfahren kompatibel. Voraussetzung ist lediglich, dass die zu detektierende Einheit bzw. Struktur direkt an eine Sonde oder ein Target, beispielsweise ein Oligonukleotid gekoppelt bzw. über eine mit dem Oligonukleotid koppelbare Ankergruppe verknüpft werden kann.

Die Detektion der Markierung kann auf Fluoreszenz, Magnetismus, Ladung, Masse, Affinität, enzymatischer Aktivität, Reaktivität, einer Goldmarkierung u.dgl. beruhen. So basiert die Markierung vorzugsweise auf der Verwendung von Fluorophor-markierten Strukturen bzw. Bausteinen. In Verbindung mit der Fluoreszenz-Detektion kann die Markierung ein beliebiger an Targets oder Sonden während oder nach deren Synthese koppelbarer Farbstoff sein. Beispiele hierfür sind Cy-Farbstoffe (Amersham Pharmacia Biotech, Uppsala, Schweden), Alexa-Farbstoffe, Texas-Rot, Fluorescein, Rhodamin (Molecular Probes, Eugene, Oregon, USA), Lanthanide wie Samarium, Ytterbium und Europium (EG&G, Wallac, Freiburg, Deutschland).

Neben Fluoreszenz-Markern können im Rahmen der vorliegenden Erfindung als Markierung bzw. als Detektiereinheit, die mit den Targets bzw. Sonden gekoppelt ist, auch Lumineszenz-Marker, Metall-Marker, Enzym-Marker, radioaktive Marker und/oder polymere Marker eingesetzt werden.

Ebenso kann eine Nukleinsäure als Markierung (Tag) genutzt werden, die durch Hybridisierung mit einem markierten Reporter detektiert werden kann (Sandwich-Hybridisierung). Einsatz zum Nachweis des Tags finden diverse molekularbiologische Nachweisreaktionen wie Primer-Extension, Ligation und RCA.

Bei einer alternativen Ausführungsform des erfindungsgemäßen Verfahrens ist die detektierbare Einheit über eine Ankergruppe mit den Targets oder Sonden gekoppelt. Bevorzugt verwendete Ankergruppen sind Biotin, Digoxygenin u.dgl. Die Ankergruppe wird in einer anschließenden Reaktion mit spezifisch bindenden Komponenten, beispielsweise Streptavidin-Konjugaten oder Antikörper-Konjugaten umgesetzt, die selbst detektierbar sind oder eine detektierbare Reaktion auslösen. Bei Einsatz von Ankergruppen kann die Umsetzung der Ankergruppen in detektierbare Einheiten vor, während oder nach Zugabe der Probe umfassend die Targets bzw. ggf. vor, während oder nach der Spaltung einer selektiv spaltbaren Bindung in den Sonden erfolgen. Derartige selektiv spaltbare Bindungen in den Sonden sind z.B. in der internationalen Patentanmeldung WO 03/018838 beschrieben. Die Markierung kann erfindungsgemäß auch durch Wechselwirkung eines markierten Moleküls mit den Sonden-Molekülen erfolgen. Beispielsweise kann die Markierung durch Hybridisierung eines wie vorstehend beschrieben markierten Oligonukleotids mit einer Oligonukleotid-Sonde bzw. einem Oligonukleotid-Target erfolgen.

Weitere im Rahmen der vorliegenden Erfindung geeignete Markierungsverfahren und Nachweissysteme sind beispielsweise in Lottspeich und Zorbas, Bioanalytik, Spektrum Akademischer Verlag, Heidelberg, Berlin, 1998, Kapitel 23.3 und 23.4 beschrieben.

Bei einer besonders bevorzugten Ausführungsform des erfindungsgemäßen Verfahrens werden Nachweisverfahren eingesetzt, die im Ergebnis ein Addukt mit einem bestimmten Löslichkeitsprodukt, das eine Präzipitation zur Folge hat, liefern. Zur Markierung werden insbesondere Substrate bzw. Edukte eingesetzt, die in ein unter den üblichen Bedingungen eines Nachweisverfahrens schwer lösliches, üblicherweise gefärbtes Produkt umgesetzt werden können. Beispielsweise können bei dieser Markierungsreaktion Enzyme verwendet werden, die den Umsatz eines Substrats in ein schwer lösliches Produkt katalysieren. Reaktionen, die geeignet sind, um zu einem Niederschlag an Array-Elementen zu führen, sowie Möglichkeiten für die Detektion des Niederschlags sind beispielsweise in der internationalen Patentanmeldung WO 00/72018 und in der internationalen Patentanmeldung WO 02/02810 beschrieben. Insbesondere wird bei dem erfindungsgemäßen Nachweisverfahren wie in WO 02/02810 beschrieben der zeitliche Verlauf einer Niederschlagsbildung an den Array-Elementen detektiert.

Bei einer besonders bevorzugten Ausführungsform des erfindungsgemäßen Verfahrens sind die gebundenen Targets somit mit einer Markierung versehen, die die Reaktion eines löslichen Substrats bzw. Edukts zu einem schwer löslichen Niederschlag auf dem Array-Element katalysiert, an dem eine Sonden/Target-Wechselwirkung stattgefunden hat bzw. die als Kristallisationskeim für die Umwandlung eines löslichen Substrats bzw. Edukts zu einem schwer löslichen Niederschlag auf dem Array-Element wirkt, an dem eine Sonden/Target-Wechselwirkung stattgefunden hat.

Der Einsatz des erfindungsgemäßen Verfahrens erlaubt auf diese Weise die simultane qualitative und quantitative Analyse einer Vielzahl von Sonden/Target-Wechselwirkungen, wobei einzelne Array-Elemente mit einer Größe von ≤ 1000 µm, vorzugsweise von ≤ 100 µm und besonders bevorzugt von ≤ 50 µm realisiert werden können.

Die folgende Tabelle 1 gibt einen Überblick über eine Reihe von in Frage kommenden Reaktionen, die geeignet sind, um zu einem Niederschlag an Array-Elementen zu führen, an denen eine Wechselwirkung zwischen Target und Sonde erfolgt ist:

**Tabelle 1**

| Katalysator bzw. Kristallisationskeim | Substrat bzw. Edukt |
|---|---|
| Meerrettichperoxidase | DAB (3,3'-Diaminobenzidin) |
| | 4-CN (4-Chlor-1-Napthol) |
| | AEC (3-Amino-9-Ethylcarbazol) |
| | HYR (p-Phenylendiamin-HCl und Pyrocatechol) |
| | TMB (3,3',5,5'-Tetramethylbenzidin) |
| | Naphtol/Pyronin |
| Alkalische Phosphatase | Bromchlorindoylphosphat (BCIP) und Nitrotetrazoliumblau (NBT) |
| Glucoseoxidase | t-NBT und m-PMS (Nitrotetrazoliumblauchlorid und Phenazinmethosulfat) |
| Goldpartikel | Silbernitrat und Silbertartrat |

Der Nachweis und/oder die Detektion von Sonde/Target-Wechselwirkungen über unlösliche Präzipitate sind insbesondere in WO 02/02810 beschrieben.

Die optische Detektion von Sonde/Target-Wechselwirkungen, insbesondere von kinetisch verlaufenden Signalverstärkungsreaktionen, erfolgt vorzugsweise durch die Aufnahme von Modulationen bestimmter optischer Parameter, insbesondere von Transmission, Reflexion, Streuung, Beugung und Interferenz. So erfolgt der Nachweis der Gegenwart eines Niederschlags auf einem Array-Element bei einer Ausführungsform der vorliegenden Erfindung durch Reflexion, Absorption oder Diffusion eines Lichtstrahls, vorzugsweise eines Laserstrahls oder einer Leuchtdiode, durch den Niederschlag. Aufgrund einer granularen Form modifiziert der Niederschlag die Reflexion eines Lichtstrahls. Ferner führt der Niederschlag zu einer starken Lichtdiffusion, die durch herkömmliche Detektionsvorrichtungen aufgezeichnet werden kann. Falls der Niederschlag wie beispielsweise ein Silberniederschlag oder ein organischer Niederschlag als dunkle Oberfläche erscheint, kann auch die Absorption von Licht detektiert und aufgezeichnet werden.

Beispielsweise kann der Nachweis der durch die spezifische Reaktion verstärkten Bereiche mittels eines einfachen optischen Aufbaus im Durchlicht, d.h. Kontrast durch Abschattung, bzw. Auflicht, d.h. Kontrast durch Reflexion), erfolgen. Die detektierte Intensität des abgeschatteten Bereiches ist direkt proportional zur Belegungsdichte mit Markierungen wie beispielsweise Gold-Partikeln oder Enzymen und dem Keimbildungszustandes der Partikel.

Ebenfalls bevorzugt erfolgt die Detektion von Niederschlagsbildungen auf der Detektionsfläche bzw. dem Träger im Dunkelfeld, d.h. es werden Änderungen der Streuungseigenschaften der Detektionsfläche bzw. des Trägers detektiert.

Ferner ist bei sämtlichen vorstehend beschriebenen Ausführungsformen des erfindungsgemäßen Verfahrens eine Voramplifikation des zu analysierenden Materials nicht erforderlich. Von dem aus Bakterien, Blut oder anderen Zellen extrahierten Probenmaterial können gezielte Teilbereiche mit Hilfe einer PCR (Polymerase-Kettenreaktion) insbesondere in Anwesenheit der erfindungsgemäßen Vorrichtung bzw. des Substanzbibliothekenträgers wie in DE 102 53 966 beschrieben amplifiziert und an den Träger hybridisiert werden. Dies stellt eine wesentliche Vereinfachung des Arbeitsaufwands dar.

Die folgenden Beispiele dienen der Erläuterung der Erfindung und sollen in nicht einschränkender Weise ausgelegt werden.

### Beispiele

### Beispiel 1: Herstellung einer erfindungsgemäßen Vorrichtung für die parallele Durchführung von Mikroarray-Experimenten

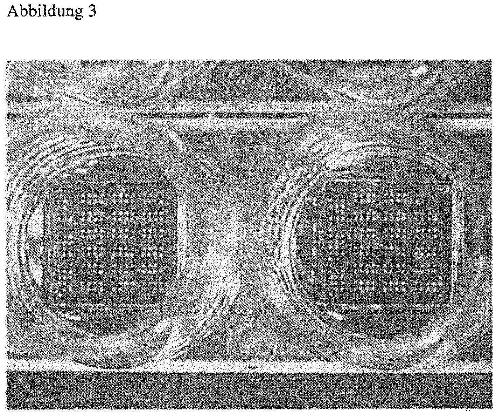

In diesem Beispiel werden transparente 8-well ELISA-Strips (d.h. Strips mit acht miteinander verbundenen Einzelgefäßen) der Firma Greiner Bio-one (Art.Nr. 762070) aus Polystyrol mit kreisförmiger planer Bodengrundfläche und einem Befüllvolumen von 50-350 µl pro Well als Grundkörper zur Herstellung der Gefäße mit integriertem Sondenarray eingesetzt. Die Bodengrundfläche weist dabei einen Durchmesser von ca. 6,5 mm auf. Jedes der acht Wells der Anordnung besitzt ein eigenes Sondenarray. Die in den einzelnen Wells mit zylinderförmiger Geometrie eingebrachten Sondenarrays weisen Außenabmessungen von 4,5 mm x 4,5 mm mit einer aktiven, mit der jeweiligen Substanzbibliothek belegten Fläche von 4,2 mm x 4,2 mm auf (siehe Abbildung 3).

Das Einbringen der acht Sondenarrays in die einzelnen Wells der Vorrichtung erfolg durch positionsgenaues Einkleben an der Bodengrundfläche der Wells. Dazu wird mit Hilfe einer Druckluft-Spritze, die feinstes Dosieren erlaubt, eine geringe Menge eines Klebers des Typs NOA76 (Norland, New Jersey, USA) auf die nicht-aktive Seite des Arrayträgers aufgebracht. Anschließend werden die Arrays in das Well gesetzt und für 3 s angepresst. Der so hergestellte AT-Strip wird zur weiteren Fixierung der Sondenarrays auf mit der Bodengrundfläche der Wells 7 s mit Licht einer Wellenlänge von etwa 300 bis 450nm (z.B. Sol 2, Dr. Hoenle AG, Deutschland; Licht mit einer Wellenlänge kleiner 300nm wird durch geeignete Filter gefiltert) gehärtet.
Anschließend werden mit Hilfe der Druckluft-Spritze die freien Flächen zwischen Biochip und Wand des Well mit NOA76-Kleber aufgefüllt und nochmals 1 min unter Lichteinwirkung wie oben beschrieben gehärtet.

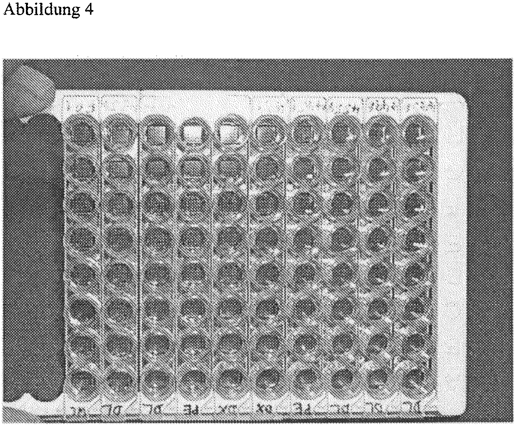

Die fertigen AT-Strips können in Standard-Mikrotiterplatten-Rahmen der Abmessungen 127,76 mm x 85,48 mm (z.B. Greiner, Bio-one) eingesetzt werden, die die einfache Handhabung der Strips in Standardgeräten für Mikrotiterplatten erlauben. In einen solchen Standard-Mikrotiterplatten-Rahmen passen dabei zwölf der 8-Well-AT-Strips (siehe Abbildung 4).

### Beispiel 2: Serologischer Test mit einer erfindungsgemäßen Vorrichtung für die parallele Durchführung von Mikroarray-Experimenten

Die Arrays der erfindungsgemäßen Strips in diesem Beispiel bestehen aus einer Bibliothek aus Antikörpern in einer Anordnung von 19 x 19 Spots; die Bibliothek besteht aus zwei verschiedenen Antikörpern (human IgG und Anti-human IgG) in jeweils neun unterschiedlichen Konzentrationen, drei Kontroll-Antikörpern und den für die Auswertung und Analyse erforderlichen Biotin-Markermolekülen.

Antikörper und Markermoleküle werden mit Hilfe eines Nadel-Spottingverfahrens auf eine Glassubstratoberfläche in Objekträger-Standardformat aufgebracht, die Antikörper befinden sich dazu in einem mit 20 mM Trehalose versehenen PBS-Puffer. Das Spottingverfahren gewährleistet die parallele Herstellung von bis zu 80 einzelnen Glaschips auf dem Objektträger. Nach dem Spotten wird das Glassubstrat in 80 einzelne Chips der Größe 4,5 mm x 4,5 mm mit einer fertigen Antikörperbibliothek auf jedem Chip vereinzelt.

Nach dem in Beispiel 1 beschriebenen Einbau der Sondenarrays in die Strip-Grundkörper werden die Strips einem ELISA-ähnlichen Test unterworfen. Dazu werden die Antikörperbibliotheken zunächst mit einem primären Antikörper (humanes Serum) inkubiert, gewaschen und dann mit einem sekundären Antikörper, der zugleich biotin-markiert ist, versetzt.

Zum kolorimetrischen Nachweis wird ein Streptavidin-Meerrettichperoxidase-Konjugat inkubiert und eine TMB-Lösung zugegeben: Über die spezifische Interaktion des primären Antikörpers an alle Flächen des Sondenarrays mit Anti-human IgG und Bindung des sekundären biotinylierten Antikörpers an den primären lässt sich über ein präzipitatives Nachweisverfahren mit HRP-Meerrettichperoxidase//TMB ein spezifischen Arraymuster mit Präzipitat an den Stellen des humanen IgG detektieren.

Die Tests wurden nach folgendem Protokoll durchgeführt:
1. Waschen der Sondenarrays in dem Strip mit PBS-Tween für 5 min bei 23°C
2. Blockierungsreaktion mit 2% BSA in PBS-Tween
3. Inkubation des primären Antikörpers für 1 h bei Raumtemperatur
4. 3 x Waschen mit PBS-Tween für 5 min bei 23°C
5. Inkubation des sekundären Antikörpers für 30 min bei Raumtemperatur
6. Inkubation eines Streptavidin-Meerrettichperoxidase-Konjugates (N200, Pierce, USA) in PBS für 30 min bei 30°C
7. 2 x Waschen mit PBS-Tween für 5 min bei 23°C
8. 1 x Waschen mit PBS für 5 min bei 23°C
9. Entfernen der Waschlösung
10. Nachweisreaktion durch Zugabe von 100 µl TMB-Lösung (71-00-64, KPL, USA) je well
11. Inkubation 10 min
12. Absaugen der TMB-Lösung
13. Zugabe von 200 µl Wasser

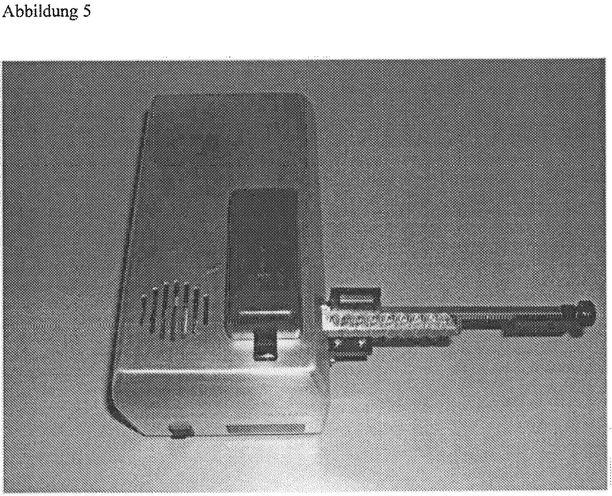

Die Bildaufnahme der spezifischen Präzipitatmuster auf den Sondenarrays im erfindungsgemäßen Strip erfolgt mit Hilfe eines modifizierten AT-Readers (Clondiag Chip Technologies GmbH, Jena, Deutschland). In diesen wurde zusätzlich ein Linearführungsmodul zur definierten Verschiebung der erfindungsgemäßen Strips eingebaut, der das manuelle Anfahren der 8 Well-Positionen ermöglicht (siehe Abbildung 5).

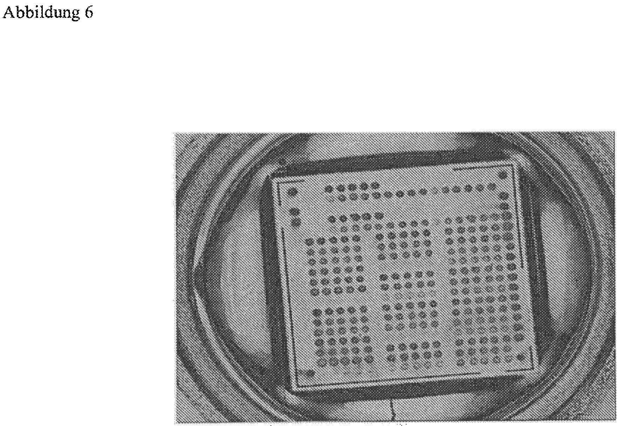

Eine beispielhafte Aufnahme eines wie vorstehend beschreiben mit TMB gefärbten Chips in einem Well eines Array-Strips ist in Abbildung 6 dargestellt.

### Beispiel 3: Proteinassay

Mit der erfindungsgemäßen Vorrichtung können automatisch bis zu 96 unterschiedliche Proben in maximal 12 Array-Strips (CLONDIAG chip technologies GmbH, Jena, Deutschland), einem genetischen oder serologischen Test untersucht werden.

Im vorliegenden Beispiel wird ein Array-Strip für einem serologischen, ELISA-ähnlichen Test eingesetzt. Die Mikroarrays in den einzelnen Wells des Array-Strips enthalten eine Bibliothek aus immobilisierten Antikörpern in einer Anordnung von 19 x 19 Spots; die Bibliothek besteht aus zwei verschiedenen Antikörpern (human IgG und Anti-human IgG) in jeweils neun unterschiedlichen Konzentrationen und Biotin-Markermolekülen.

Der Ablauf des Assays besteht zunächst in der Inkubation der Bioarrays mit humanem Serum. Dabei bindet das im humanen Serum enthaltene IgG gegen den auf dem Array immobilisierten Anti-human IgG. Nach einem Waschschritt zur Entfernung unspezifisch gebundener Protein von der Oberfläche des Bioarrays wird ein biotinylierter sekundärer Antikörper, welcher seinerseits an human IgG bindet, mit dem Biochip zur Reaktion gebracht. Dabei bindet dieser Antikörper sowohl gegen das auf dem Array immobilisierte human IgG, als auch gegen das am Anti-human IgG gebundene human IgG aus dem humanen Serum. Nach erneuten Waschschritten wird ein Streptavidin-Meerrettich-Peroxidase-Konjugat zugegeben. Dieses Konjugat wiederum bindet an die Biotin-Markierung der Marker auf dem Array sowie des zweiten Antikörpers. Anschließend wird mit Hilfe einer enzymatisch katalysierten Reaktion an den Stellen, da denen das Konjugat gebunden hat, ein Niederschlag ausgefällt, welcher dann seinerseits durch eine Bildaufnahme dokumentiert wird. Im folgenden ist der Ablauf des Assays genauer beschrieben.

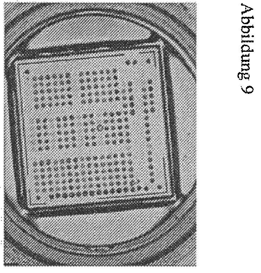

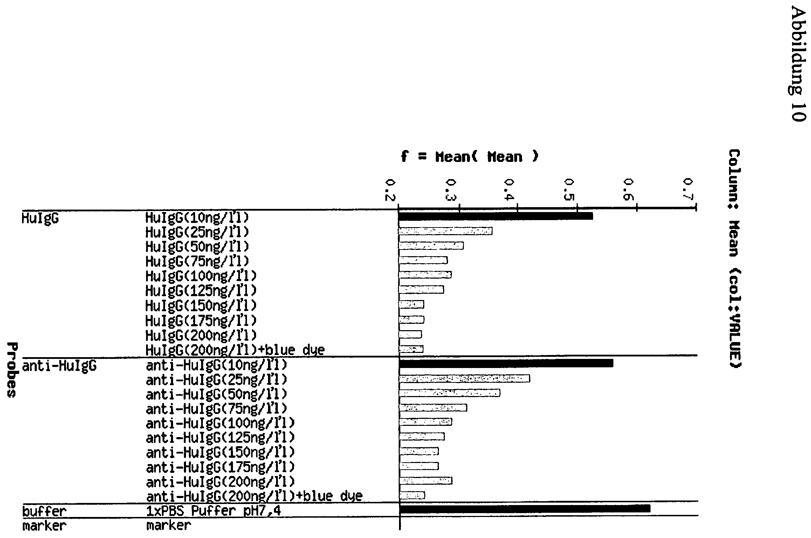

Der Testablauf erfolgt unter Nutzung der erfindungsgemäßen Vorrichtung für alle 8 Wells des Array-Strips automatisiert:
1. Vorbereitung des Gerätes
   - Zunächst werden die beiden in der erfindungsgemäßen Vorrichtung (im Folgenden "Gerät") befindlichen Spitzenblöcke mit je 96 Pipettenspitzen (Cybio AG, Jena, Deutschland) aufgefüllt.
   - Ein Array-Strip wird in einen handelsüblichen Mikroplattenrahmen (z.B. Greiner Bio-one) eingelegt und diese in die dafür vorgesehene Position des Gerätes eingesetzt.
   - Die weiteren, für den Assay benötigten Reagenzien Blockierungspuffer (PBS-0,01%Tween mit 2% BSA (Sigma, Deutschland)), die fertige Stammlösung des biotinylierten sekundären Antikörpers (goat-anti-human IgG, B-1140, Sigma, Deutschland, Verdünnung 1:10.000), die fertige Stammlösung des Konjugates (poly-HRP, N200, Pierce, Deutschland, Verdünnung 1:10.000), die fertige TMB-Färbelösung (TrueBlue, KPL, USA) sowie die benötigten Waschpuffer PBS (155mM NaCl, 3.77mM NaH2PO4, 17.75mM Na2HPO4, pH 7.4) und PBS-0,01%Tween werden in die entsprechenden Wells der im Gerät befindlichen DeepWell-Platten (z.B. UNIPLATE 10000, 734-2558, VWR, Deutschland) eingefüllt.
   - Das für den Assay benötigte Protokoll wird in das für die Steuerung des Gerätes zuständige Programm des angeschlossenen Computers geladen.
2. Vorbereitung der Probenplatte
   - In die ersten 8 wells einer Standard 96er Mikrotiterplatte (z.B. Greiner Bio-one) wird jeweils 100µl einer 1:12 Verdünnung von humanem Serum in PBS-0,01% Casein (Sigma, Deutschland) gegeben.
   - Die so vorbereitete Platte wird in die entsprechend vorgesehene Position Gerätes eingesetzt.
   - Über die PC-Einheit wird eine Liste der belegten Positionen in der Masterplatte mit den Proben, hier überall humanes Serum, erstellt.
3. Die Abdeckung des Gerätes wird geschlossen und der Programmablauf an der zugehörigen PC-Einheit gestartet. Die nachfolgend aufgeführten Schritte dienen der Verdeutlichung des vom Gerät automatisch ohne weiteren Benutzereingriff durchgeführten Arbeitsablaufes.
   1. Konditionierung: Aufnehmen einer Pipettenspitze und serielles Befülllen aller 8 Wells des Array-Strips mit je 200 µl des Waschpuffers PBS-0,01%Tween. Waschen des Array-Strips für 5 min bei 23°C unter Agitation.
   2. Absaugung des Waschpuffers aus allen 8 Wells des Array-Strips, anschliessendes Waschen der Absaugvorrichtung in der Reinigungsfontaine des Gerätes.
   3. Blockierungsreaktion: Aufnehmen einer Pipettenspitze und serielles Befülllen 8 Wells des Array-Strips mit je 100 µl des Blockierungspuffers. Inkubation für 5 min bei 23°C unter Agitation.
   4. Absaugung des Blockierunsgpuffers aus allen 8 Wells des Array-Strips, anschließendes Waschen der Absaugvorrichtung in der Reinigungsfontaine des Gerätes.
   5. Übertragen der je 100µl Serum in Puffer aus der Proben-Mikrotiterplatte in die entsprechenden Wells des Array-Strips. Dazu wird eine Pipettenspitze aufgenommen, die erste Probe aus der Proben-Mikrotiterplatte angesaugt und in das erste Well des Array-Strips piepttiert. Anschließend wird die verwendete Pipettenspitze abgeworfen, eine neue aufgenommen und die nächste Probe ins nächste Well des Array-Strips übertragen. Dieser Vorgang wiederholt sich, bis alles 8 Proben übertragen sind.
   6. Inkubation für 1 h bei Raumtemperatur und unter Agitation.
   7. Absaugen des Probenlösung aus allen 8 Wells des Array-Strips, anschließendes Waschen der Absaugvorrichtung in der Reinigungsfontaine des Gerätes.
   8. 3maliges Waschen aller 8 Wells des Array-Strips mit je 200 µl PBS-0,01%Tween für 5 min bei 23°C unter Agitation. Für jeden Waschschritt wird eine neue Pipettenspitze verwendet.
   9. Inkubation sekundärer Antikörper: Aufnehmen einer Pipettenspitze und serielles Befüllen aller 8 Wells des Array-Strips mit je 100 µl des sekundären Antikörpers. Inkubieren für 30 min bei Raumtemperatur unter Agitation.
   10. Absaugen des sekundären Antikörpers aus allen 8 Wells des Array-Strips, anschließendes Waschen der Absaugvorrichtung in der Reinigungsfontaine des Gerätes.
   11. Konjugation: Aufnehmen einer neuen Pipettenspitze und Befülllen aller 8 Wells des Array-Strips mit je 100 µl des Streptavidin-Meerrettich-Peroxidase-Konjugates. Inkubation für 30 min bei 30°C unter Agitation.
   12. Absaugen des Konjugates aus allen 8 Wells des Array-Strips, anschließendes Waschen der Absaugvorrichtung in der Reinigungsfontaine des Gerätes.
   13. 2maliges Waschen aller 8 Wells des Array-Strips mit je 200 µl PBS-0,01%Tween für 5 min bei 23°C unter Agitation. Für jeden Waschschritt wird eine neue Pipettenspitze verwendet.
   14. 2maliges Waschen aller 8 Wells des Array-Strips mit je 200 µl PBS für 5 min bei 23°C unter Agitation. Für jeden Waschschritt wird eine neue Pipettenspitze verwendet.
   15. Absaugen der letzten Waschlösung aus allen 8 Wells des Array-Strips, anschließendes Waschen der Absaugvorrichtung in der Reinigungsfontaine des Gerätes.
   16. Färbung: Aufnehmen einer Pipettenspitze und serielles Befülllen aller 8 Wells des Array-Strips mit je 100 µl der TMB-Färbelösung. Inkubieren für 10 min bei Raumtemperatur unter Agitation.
   17. Bildaufnahme aller 8 Wells des Array-Strips (siehe Abbildung 9).
   18. Rechnergesteuerte Auswertung und Präsentation des Ergebnisses (siehe Abbildung 10).

### Beispiel 4: DNA-Assay

Mit der erfindungsgemäßen Vorrichtung können automatisch bis zu 96 unterschiedliche Proben in maximal 12 Array-Strips (CLONDIAG chip technologies GmbH, Jena, Deutschland), einem genetischen oder serologischen Test untersucht werden.

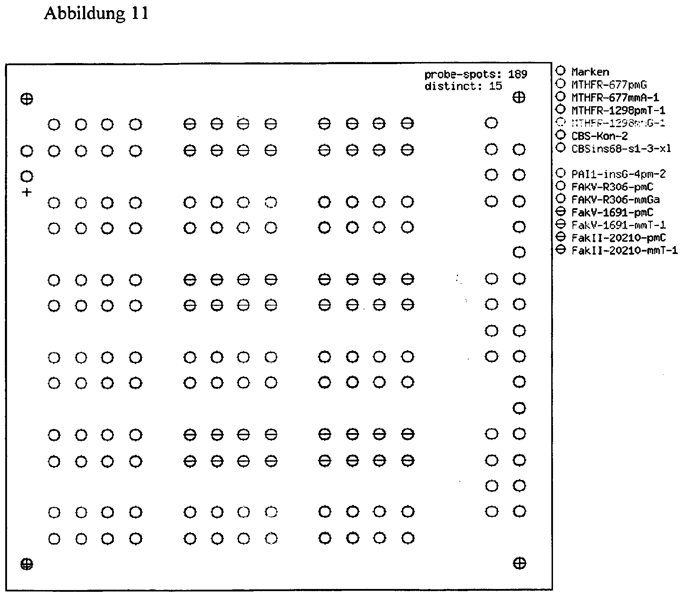

Im vorliegenden Beispiel wird ein Array-Strip für einen Genotyping-Assay zur Bestimmung der genetischen Prädisposition eines Patienten für Thrombose eingesetzt. Die Mikroarrays in den einzelnen Wells des Array-Strips enthalten eine Bibliothek aus immobilisierten Oligonukleotiden in einer Anordnung von 19 x 19 Spots; die Bibliothek besteht aus einem Set von 12 verschiedenen Sonden für die Genotypisierung, jede 12fach redundant, 2 Kontrollsonden (ebenfalls jeweils 12fach redundant) sowie Biotin-Markermolekülen. Alle Oligonukleotide werden von Ogham Diagnostics, Münster, Deutschland bezogen. Abbildung 11 zeigt schematisch die Belegung des Arrays.

Der Assay besteht zunächst in der Inkubation der Bioarrays im Array-Strip mit biotinmarkierten perfect-match-Oligonukleotiden in einem geeigneten Puffer. Dabei binden die biotinylierten Oligos entsprechend ihrer Sequenz an den entsprechenden Sonden des Bioarrays. Nach nachfolgenden Waschschritten wird ein Streptavidin-Meerrettich-Peroxidase-Konjugat zugegeben. Dieses Konjugat bindet an die Biotin-Markierung der Marker auf dem Array sowie an der am Bioarray gebundenen biotinylierten Oligos. Anschließend wird mit Hilfe einer enzymatisch katalysierten Reaktion an den Stellen, da denen das Konjugat gebunden hat, ein Niederschlag ausgefällt, welcher dann seinerseits durch eine Bildaufnahme dokumentiert wird.

Im Folgenden ist der Ablauf des Assays genauer beschrieben.

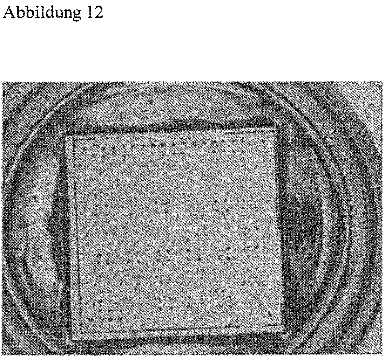

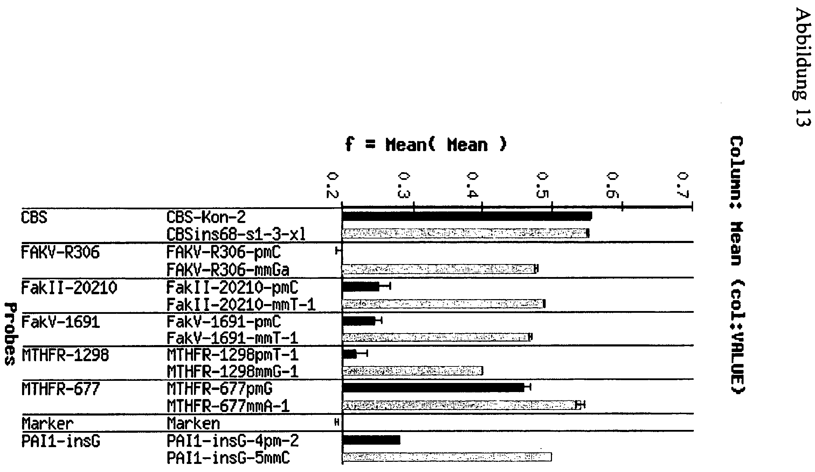

Der Testablauf erfolgt unter Nutzung der erfindungsgemäßen Vorrichtung für alle 8 Wells des Array-Strips analog Beispiel 1 automatisiert:
1. Vorbereitung des Gerätes
   - Zunächst werden die beiden in der erfindungsgemäßen Vorrichtung (im Folgenden "Gerät") befindlichen Spitzenblöcke mit je 96 Pipettenspitzen (Cybio AG, Jena, Deutschland) aufgefüllt.
   - Ein entsprechendes Array-Strip wird in einen handelsüblichen Mikroplattenrahmen (z.B. Greiner Bio-one) eingelegt und diese in die dafür vorgesehene Position des Gerätes eingesetzt.
   - Die weiteren, für den Assay benötigten Reagenzien Blockierungspuffer 2xMES (200 mM MES, 2M NaCl, 40 mM EDTA, 0,1 % Cetyldimethylethylammoniumbromid) mit 2% Milchpulver (Sigma, Deutschland), die fertige Stammlösung des Konjugates (poly-HRP, N200, Pierce, Deutschland, Verdünnung 1:10.000 in 2xMES), die fertige TMB-Färbelösung (TrueBlue, KPL, USA) sowie die benötigten Waschpuffer 2xSSC (0,3M NaCl, 0,03M Na-Citrat, pH7,0), 2xSSC-0,01%Triton und 0,2xSSC werden in die entsprechenden Wells der im Gerät befindlichen DeepWell-Platten (z.B. UNIPLATE 10000, 734-2558, VWR, Deutschland) eingefüllt.
   - Das für den Assay benötigte Protokoll wird in das für die Steuerung des Gerätes zuständige Programm des angeschlossenen Computers geladen.
2. Vorbereitung der Probenplatte
   - In die ersten 8 wells einer Standard 96er Mikrotiterplatte (z.B. Greiner Bio-one) wird jeweils 100µl einer Lösung gegeben, welche einen perfect-match-Oligonukleotid-Mix (Ogham, Münster, Deutschland) in einer Konzentration von je c=10pM in 2xMES(200 mM MES, 2M NaCl, 40 mM EDTA, 0,1 % Cetyldimethylethylammoniumbromid)
   - Die so vorbereitete Platte wird in die entsprechend vorgesehene Position Gerätes eingesetzt.
   - Über die PC-Einheit wird eine Liste der belegten Positionen in der Masterplatte mit den Proben erstellt.
3. Die Abdeckung des Gerätes wird geschlossen und der Programmablauf an der zugehörigen PC-Einheit gestartet. Die nachfolgend aufgeführten Schritte dienen der Verdeutlichung des vom Gerät automatisch ohne weiteren Benutzereingriff durchgeführten Arbeitsablaufes.
4. Konditionierung des Array-Strips für 5 min bei 23°C unter Agitation mit je 200µl 2xMES.
5. Absaugen des Konditionierungspuffers
6. Übertragen der je 100µl Oligomix in Puffer aus der Proben-Mikrotiterplatte in die entsprechenden Wells des Array-Strips.
7. Inkubation für 1 h bei 50°C unter Agitation.
8. Absaugen des Probenlösung
9. Waschen der Array-Strips mit je 200µl 2xSSC-0,01%Triton, 2xSSC, 0,2xSSC
10. Konjugation mit je 100 µl des Streptavidin-Meerrettich-Peroxidase-Konjugates für 15 min bei 30°C unter Agitation.
11. Absaugen des Konjugates
12. 2maliges Waschen des Array-Strips mit je 200 µl 2xSSC-0,01%Triton für 5 min bei RT unter Agitation.
13. Waschen des Array-Strips mit je 200 µl 2xSSC und anschließend 0,2xSSC für 5 min bei 20°C unter Agitation.
14. Absaugen der letzten Waschlösung
15. Färbung: Zugabe von je 100 µl der TMB-Färbelösung. Inkubation für 10 min bei RT.
16. Bildaufnahme aller 8 Wells des Array-Strips (siehe Abbildung 12).
17. Rechnergesteuerte Auswertung und Präsentation des Ergebnisses (siehe Abbildung 13).

### Abbildungen

Abbildung 1 zeigt eine herkömmliche Mikrotiterplatte.
Abbildung 2 zeigt einen herkömmlichen Gefäßstreifen.
Abbildung 3 zeigt ausschnittsweise die Anordnung von Chips in Wells eines Gefäßstreifens bzw. Elisa-Strips.
Abbildung 4 zeigt einen Standard-Mikrotiterplatten-Rahmen mit zehn 8-Well-AT-Strips.
Abbildung 5 zeigt einen modifizierten AT-Reader mit Linearführungsmodul (CLONDIAG chip technologies GmbH, Jena, Deutschland).
Abbildung 6 zeigt die Aufnahme eines mit Tetramethylbenzidin gefärbten Chips in einem Well eines Array-Strips.
Abbildung 7 zeigt eine Anordnung zur Durchführung und zur Analyse von Mikroarray-Experimenten zum Nachweis einer spezifischen Wechselwirkung zwischen Sonden- und Targetmolekülen gemäß einem Ausführungsbeispiel der Erfindung.

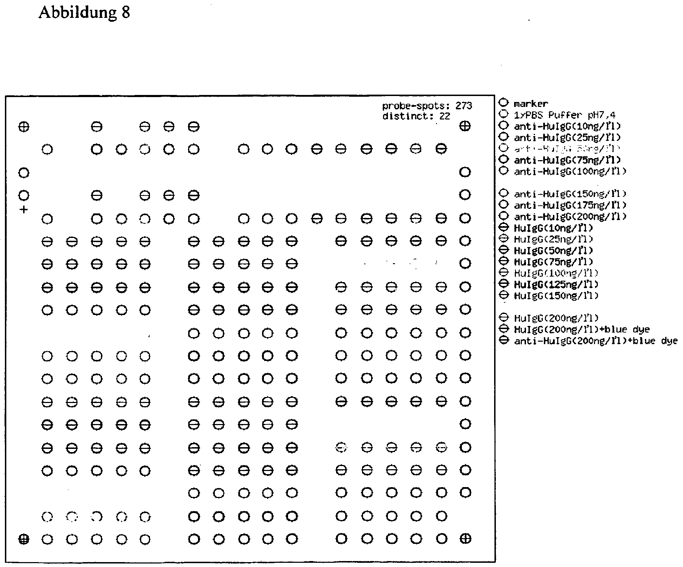

Abbildung 8 zeigt die Belegung der Mikroarrays in den Wells des Array-Strips gemäß Beispiel 3.
Abbildung 9 zeigt ein exemplarisches Foto eines Wells des Array-Strips gemäß Beispiel 3 nach erfolgter Reaktion.
Abbildung 10 ist eine Darstellung des Ergebnisses eines Assays gemäß Beispiel 3.
Abbildung 11 zeigt die Belegung der Mikroarrays in den Wells des Array-Strips gemäß Beispiel 4.
Abbildung 12 zeigt ein exemplarisches Foto eines Wells des Array-Strips gemäß Beispiel 4 nach erfolgter Reaktion.
Abbildung 13 ist eine Darstellung des Ergebnisses eines Assays gemäß Beispiel 4.
Abbildung 14 zeigt ein Foto zweier Standard - Reaktionsgefäße aus Polypropylen mit 1,5 ml Füllvolumen.
Abbildung 15 zeigt eine Ausführungsform, in der in den Boden eines Reaktionsgefäßes (2) ein Durchbruch bzw. eine Aussparung (8) mit einer Auflagefläche (6) eingearbeitet ist, auf die die Affinitätsmatrix (100) von außen aufgelegt werden kann. Die Affinitätsmatrix (100) wird verklebt, indem der Klebstoff in einen dafür vorgesehenen Klebrand (7) gegeben wird.
Abbildung 16 zeigt eine Ausführungsform, in der in den Boden eines Reaktionsgefäßes (2) ein Durchbruch (10) mit einer Auflagefläche (11) eingearbeitet ist, auf die die Affinitätsmatrix (100) von innen aufgelegt werden kann. Die Affinitätsmatrix (100) wird verklebt, indem der Klebstoff in einen dafür vorgesehenen Klebrand (9) gegeben wird.
Abbildung 17 zeigt eine Ausführungsform, in der der Boden eines Reaktionsgefäßes (2) mit einer Klemmverbindung (201) versehen ist. Auf diese Klemmverbindung (201) kann ein Chipträger (200) flüssigkeitsdicht gedrückt werden. Der Chipträger weist einen Durchbruch (10) auf, in den auf einer dafür vorgesehenen Auflagefläche die Affinitätsmatrix (100) gelegt und dann verklebt werden kann.

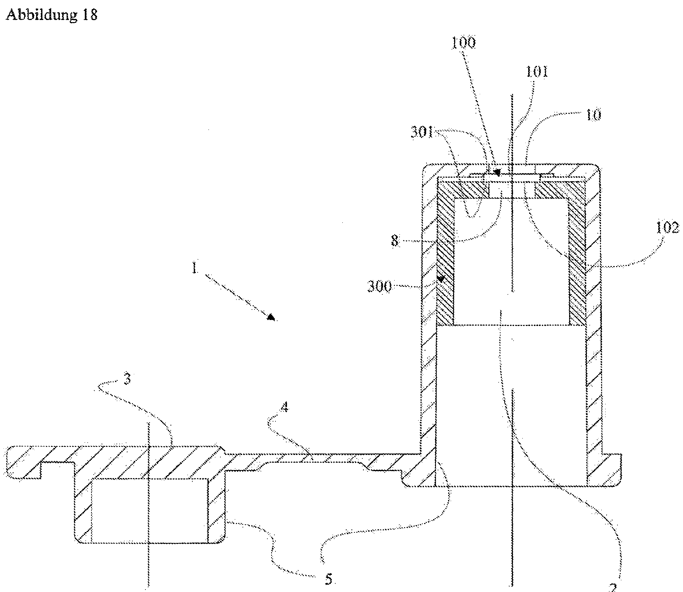

In der in Abbildung 18 gezeigten Ausführungsform wird die Affinitätsmatrix (100) zwischen dem Reaktionsgefäß (2) und einer Klemmhülse (300) flüssigkeitsdicht verklemmt, so dass eine Verklebung nicht unbedingt notwendig ist.

## Patentansprüche

1. Anordnung zur Durchführung und zur Analyse von Mikroarray-Experimenten zum Nachweis einer spezifischen Wechselwirkung zwischen Sonden- und Targetmolekülen, umfassend:
- einen Detektor, eingerichtet zum Erfassen einer spezifischen Wechselwirkung zwischen auf vorbestimmten Bereichen eines Mikroarrays angeordneten Sondenmolekülen und Targetmolekülen;
- eine Verarbeitungseinrichtung, eingerichtet zum Verarbeiten der mittels der Detektorvorrichtung erfassten spezifischen Wechselwirkung basierend auf einer extern selektiv vorgebbaren, validierten, Verarbeitungsanweisung, welche Informationen bereitstellt, unter welchen experimentellen Bedingungen, ausgewählt aus der Liste bestehend aus Art des verwendeten Mikroarrays, Art der zu verwendenden Wasch- und Pufferlösungen, Multiplexinggrad, Array-Layout, Zuordnungstabelle zur Zuordnung von auf einem vorbestimmten Bereich angeordneten Sondenspezies zu detektierten Signalen, zur Korrelation der Signale zueinander, und/oder zur Zuordnung der Signale zu der zu analysierenden Fragestellung, und Schwellwerttabelle, die angibt, ab welchem Messwert auf einem vorbestimmten Bereich ein detektiertes Signal als positives Signal eingestuft wird, ein oder mehrere Mikroarray-Experimente in dem Reaktionsgefäß oder auf der Mikrotiterplatte durchzuführen und/oder zu analysieren sind; und
- eine Schnittstelleneinrichtung, wobei mittels der Schnittstelleneinrichtung die Verarbeitungsanweisung extern vorgebbar ist.

2. Anordnung nach Anspruch 1, wobei die Anordnung ein Gerät ist.

3. Anordnung nach Anspruch 1 oder 2, ferner umfassend mindestens ein Reaktionsgefäß, in das ein Mikroarray mit auf vorbestimmten Bereichen des Mikroarrays angeordneten Sondenmolekülen integriert ist oder eine Mikrotiterplatte, wobei in Wells der Mikrotiterplatte jeweils ein einzelnes Mikroarray mit auf vorbestimmten Bereichen des Mikroarrays angeordneten Sondenmolekülen integriert ist.

4. Anordnung nach Anspruch 3, wobei in Wells der Mikrotiterplatte jeweils ein einzelnes Mikroarray mit auf vorbestimmten Bereichen des Mikroarrays angeordneten Sondenmolekülen im Wesentlichen stufenlos integriert ist.

5. Anordnung nach Anspruch 3 oder 4,
wobei die Wells jeweils eine Aufnahme oder Aussparung aufweisen, in der die Mikroarrays fixiert sind.

6. Anordnung nach einem der Ansprüche 3 bis 5,
wobei die Mikroarrays klebend, klickend, klemmend und/oder magnetisch fixiert sind, wobei ein zur klebenden Fixierung eines Mikroarrays auf der Grundfläche eines Wells verwendeter Klebstoff optional Leerräume zwischen dem Mikroarray und den Seitenwänden des Wells im Wesentlichen vollständig auffüllt.

7. Anordnung nach einem der Ansprüche 3 bis 6,
wobei die Mikrotiterplatte eine lineare Anordnung von acht bis zwölf Wells oder eine zweidimensionale Anordnung von beliebigen Vielfachen davon ist, wobei die Mikrotiterplatte optional eine zweidimensionale Anordnung von 8 x 12 Wells oder 16 x 24 Wells ist.

8. Anordnung nach einem der Ansprüche 3 bis 7,
wobei die Wells eine rechteckige, quadratische und/oder kreisförmige Grundfläche aufweisen.

9. Anordnung nach einem der Ansprüche 3 bis 8,
wobei die Mikroarrays einen Träger aus einem optisch nicht durchlässigen Material umfassen.

10. Anordnung nach einem der vorhergehenden Ansprüche,
wobei die Schnittstelleneinrichtung eine graphische Benutzeroberfläche ist, zum externen Vorgeben der Verarbeitungsanweisung durch einen Benutzer, wobei die Schnittstelleneinrichtung optional zum Aufnehmen und Auslesen eines extern einführbaren Speichermediums eingerichtet ist, in welchem die Verarbeitungsanweisung gespeichert ist.

11. Anordnung nach einem der vorhergehenden Ansprüche,
wobei der Detektor eine Kamera zum optischen Auslesen einer spezifischen Wechselwirkung umfasst, wobei die Kamera optional eine CCD-Kamera ist, die optional in CMOS-Technik hergestellt ist, und wobei der Detektor weiter optional eine Abbildungsoptik zwischen der Kamera und dem Mikroarray aufweist.

12. Anordnung nach einem der vorhergehenden Ansprüche,
wobei der Detektor eine Lichtquelle umfasst, wobei die Lichtquelle optional zum homogenen Beleuchten des Mikroarrays eingerichtet ist, wobei die Lichtquelle optional ausgewählt ist aus der Gruppe bestehend aus einem Laser, einer Licht-emittierenden Diode, einem Flächenstrahler und einer Hochdrucklampe.

13. Anordnung nach einem der Ansprüche 3 bis 12,
mit einer Flüssigkeitszuführ-Einrichtung zum Einbringen einer Flüssigkeit in das mindestens eine Reaktionsgefäß oder in Wells der Mikrotiterplatte.

14. Anordnung nach einem der Ansprüche 3 bis 13,
mit einer Temperatureinstelleinheit, die zum Einstellen einer Temperatur in dem Reaktionsgefäß oder von jedem der Wells der Mikrotiterplatte eingerichtet ist.

15. Anordnung nach Anspruch 13 oder 14,
mit einer Bewegungseinrichtung, mittels welcher der Detektor und/oder das oder die Mikroarrays und/oder die Flüssigkeitszuführ-Einrichtung und/oder die Flüssigkeitsabführ-Einrichtung und/oder die Temperatureinstelleinheit in einer beliebigen vorgebbaren Richtung bewegbar ist oder sind, wobei optional das oder die Mikroarrays und/oder die Mikrotiterplatte einen Marker zur Positionskorrektur aufweist.

16. Anordnung nach einem der vorhergehenden Ansprüche, ferner umfassend eine Aufnahmeeinrichtung zum Aufnehmen einer Mikrotiterplatte.

17. Verfahren zum Verarbeiten von einer mittels einer Anordnung nach einem der Ansprüche 1 bis 16 zur Durchführung und zur Analyse von Mikroarray-Experimenten erfassten spezifischen Wechselwirkung zwischen Targetmolekülen und auf vorbestimmten Bereichen eines Mikroarrays angeordneten Sondenmolekülen,
wobei bei dem Verfahren eine mittels eines Detektors erfasste spezifische Wechselwirkung basierend auf einer extern selektiv vorgegebenen Verarbeitungsanweisung verarbeitet wird, und die Verarbeitungsanweisung Informationen bereitstellt, unter welchen experimentellen Bedingungen, ausgewählt aus der Liste bestehend aus Art des verwendeten Mikroarrays, Art der zu verwendenden Wasch- und Pufferlösungen, Multiplexinggrad, Array-Layout, Zuordnungstabelle zur Zuordnung von auf einem vorbestimmten Bereich angeordneten Sondenspezies zu detektierten Signalen, zur Korrelation der Signale zueinander, und/oder zur Zuordnung der Signale zu der zu analysierenden Fragestellung, und Schwellwerttabelle, die angibt, ab welchem Messwert auf einem vorbestimmten Bereich ein detektiertes Signal als positives Signal eingestuft wird, ein oder mehrere Mikroarray-Experimente in dem Reaktionsgefäß oder auf der Mikrotiterplatte durchzuführen und/oder zu analysieren sind.

18. Verfahren nach Anspruch 17,
wobei basierend auf der extern selektiv vorgegebenen Verarbeitungsanweisung eine selektive Verarbeitung gemäß einem ausgewählten von einer Mehrzahl von möglichen Mikroarray-Experimenten und/oder gemäß mindestens einem ausgewählten experimentellen Parameter für das durchgeführte Mikroarray-Experiment und/oder gemäß einem speziellen Mikroarray-Experiment durchzuführen ist.

19. Verwendung einer Anordnung nach einem der Ansprüche 1 bis 16 in einem Verfahren zum Nachweis der spezifischen Wechselwirkung zwischen Sonden- und Targetmolekülen, das die folgenden Schritte umfasst:
a) Wechselwirkung eines Targets mit auf vorbestimmten Bereichen (Array-Elementen) des Mikroarrays angeordneten Sonden; und
b) Detektion der Wechselwirkung.

## Claims

1. Arrangement for conducting and analyzing microarray experiments for detecting a specific interaction between probe molecules and target molecules, comprising:
- a detector device configured for recording a specific interaction between probe molecules arranged on predetermined regions of the microarray and target molecules;
- a processing device configured for processing the specific interaction recorded by means of the detector device on the basis of an externally selectively predeterminable, validated, processing instruction, which provides information, under which experimental conditions, selected from a list comprised of type of microarray used, type of wash solution and buffer solution to be used, degree of multiplexing, array layout, assignment table for assignment of probe species arranged on a predetermined region to detected signals, for correlation of the signals to each other, and/or for assignment of the signals to the problem to be analyzed, and threshold table, which denotes from which measured value on in a predetermined region a detected signal is viewed as positive signal, one or multiple microarray experiments in the reaction tube or on the microtiter plate are to be conducted and/or are to be analyzed; and
- an interface means, wherein the processing instruction can be predetermined externally by means of said interface means.

2. Arrangement according to claim 1, wherein the arrangement is a device.

3. Arrangement according to claim 1 or 2, comprising at least one reaction tube in which a microarray having probe molecules arranged on predetermined regions of the microarray is integrated or a microtiter plate, in wells of which there is each an individual microarray integrated having probe molecules arranged on predetermined regions thereof.

4. Arrangement according to claim 3, wherein in the wells of the microtiter plate there is each an individual microarray essentially continuously integrated having probe molecules arranged on predetermined regions thereof.

5. Arrangement according to claim 3 or 4,
wherein the wells each have a recess or notch in which the microarray is fixed.

6. Arrangement according to any of claims 3 to 5,
wherein the microarrays are fixed in an adhesive, clicking, clamping and/or magnetic manner, wherein optionally an adhesive used for adhesively fixing a microarray on the base of a well occupies empty spaces between the microarray and the side walls of the well essentially completely.

7. Arrangement according to any of claims 3 to 6,
wherein the microtiter plate is a linear arrangement of eight to twelve wells or a two-dimensional arrangement of arbitrary multiples thereof, wherein the microtiter plate can optionally be a two-dimensional arrangement of 8 x 12 wells or 16 x 24 wells.

8. Arrangement according to any of the claims 3 to 7,
wherein the wells have a rectangular, square and/or circular base.

9. Arrangement according to any of the claims 3 to 8,
wherein the microarrays comprise a support element made of an optically transparent material.

10. Arrangement according to any of the preceding claims,
wherein the interface means is a graphical user interface for externally predetermining the processing instruction by a user, wherein the interface means is optionally provided for receiving and reading out a storage medium in which the processing instruction is stored and which can be externally inserted.

11. Arrangement according to any of the preceding claims,
wherein the detector device comprises a camera for optically reading out a specific interaction wherein said camera is optionally a CCD camera, which is optionally produced according to CMOS technique, and wherein the detector device has optionally an imaging optics located between the camera and the microarray.

12. Arrangement according to any of the preceding claims,
wherein the detector device comprises a light source, wherein the light source is optionally for homogenously illuminating the microarray, wherein the light source is optionally selected from the group consisting of a laser, a light-emitting diode, a surface emitter and a high-pressure lamp.

13. Arrangement according to any of claims 3 to 12,
having a liquid supply device for introducing a liquid into the at least one reaction tube or in wells of the microtiter plate.

14. Arrangement according to any of claims 3 to 13,
having a temperature adjusting unit configured for adjusting a temperature in the reaction tube or in each of the wells of the microtiter plate.

15. Arrangement according to claim 13 or 14,
having a moving device by means of which the detector device and/or the microarray(s) and/or the liquid supply device and/or the liquid discharge device and/or the temperature adjusting device is/are movable in any predeterminable direction, wherein optionally the microarray(s) and/or the microtiter plate has/have a marker for position correction.

16. Arrangement according to any of the preceding claims,
further comprising a supporting device for supporting a microtiter plate.

17. Method for processing a specific interaction between target molecules and probe molecules arranged on predetermined regions of a microarray that has been recorded by means of an arrangement according to any of the claims 1 to 16 for conducting and analyzing microarray experiments,
wherein in the method a specific interaction recorded by means of a detector device is processed on the basis of an externally selectively predetermined processing instruction, which provides information, under which experimental conditions, selected from a list comprised of type of microarray used, type of detergent- and buffer solution to be used, degree of multiplexing, array layout, assignment table for assignment of probe species arranged on a predetermined region to detected signals, for correlation of the signals to each other, and/or for assignment of the signals to the problem to be analyzed, and threshold table, which denotes, from which measured value on in a predetermined region a detected signal is viewed as positive signal, one or multiple microarray experiments in the reaction tube or on the microtiter plate are to be conducted and/or are to be analyzed.

18. A method according to claim 17,
wherein a selective processing according to a microarray experiment selected from a plurality of possible microarray experiments and/or according to at least one selected experimental parameter for the conducted microarray experiment and/or according to a specific microarray experiment is to be conducted on the basis of the externally selectively predetermined processing instruction.

19. Use of an arrangement according to any of claims 1 to 16 in a method for detecting the specific interaction between probe molecules and target molecules, comprising the following steps:
a) interaction of a target with probes arranged on predetermined regions (array elements) of the microarray; and
b) detection of said interaction.

## Revendications

1. Agencement pour l'exécution et pour l'analyse d'expériences de microéchantillons pour la mise en évidence d'une interaction spécifique entre des molécules sondes et des molécules cibles, comprenant :
- un détecteur, configuré pour saisir une interaction spécifique entre des molécules sondes disposées sur des zones prédéterminées d'un microéchantillon et des molécules cibles ;
- un dispositif de traitement, configuré pour traiter l'interaction spécifique saisie au moyen du dispositif détecteur sur la base d'une instruction de traitement validée spécifiable par sélection externe, qui met à disposition des informations renseignant dans quelles conditions expérimentales, sélectionnées à partir de la liste constituée par la nature du microéchantillon utilisé, la nature des solutions de lavage et de tampon utilisées, le degré de multiplexage, la configuration d'échantillon, le tableau de correspondance pour la correspondance d'espèces de sondes disposées sur une zone prédéterminée par rapport à des signaux détectés, pour la mise en corrélation des signaux entre eux, et/ou pour la correspondance des signaux par rapport à la problématique à analyser, et le tableau de valeurs seuils indiquant à partir de quelle valeur de mesure sur une zone prédéterminée un signal détecté est classé comme signal positif, une ou plusieurs expériences de microéchantillons sont à exécuter et/ou analyser dans le récipient de réaction ou sur la plaque de microtitrage ; et
- un dispositif d'interface, sachant que, moyennant le dispositif d'interface, l'instruction de traitement est spécifiable par voie externe.

2. Agencement selon la revendication 1, sachant que l'agencement est un appareil.

3. Agencement selon la revendication 1 ou 2, comprenant en outre au moins un récipient de réaction dans lequel un microéchantillon avec des molécules sondes disposées sur des zones prédéterminées du microéchantillon est intégré ou une plaque de microtitrage, sachant que respectivement un seul microéchantillon avec des molécules sondes disposées sur des zones prédéterminées du microéchantillon est intégré dans des puits de la plaque de microtitrage.

4. Agencement selon la revendication 3, sachant que respectivement un seul microéchantillon avec des molécules sondes disposées sur des zones prédéterminées du microéchantillon est intégré de manière sensiblement continue dans des puits de la plaque de microtitrage.

5. Agencement selon la revendication 3 ou 4,
sachant que les puits présentent respectivement un logement ou évidement dans lequel les microéchantillons sont fixés.

6. Agencement selon l'une des revendications 3 à 5,
sachant que les microéchantillons sont fixés de manière collante, encliquetante, bloquante et/ou magnétique, sachant qu'une colle utilisée pour la fixation collante d'un microéchantillon sur la surface de base d'un puits remplit facultativement, de manière sensiblement complète, des vides entre le microéchantillon et les parois latérales du puits.

7. Agencement selon l'une des revendications 3 à 6,
sachant que la plaque de microtitrage est un agencement de huit à douze puits ou un agencement bidimensionnel de multiples quelconques de ceux-ci, sachant que la plaque de microtitrage est facultativement un agencement bidimensionnel de 8 x 12 puits ou 16 x 24 puits.

8. Agencement selon l'une des revendications 3 à 7,
sachant que les puits présentent une surface de base rectangulaire, carrée et/ou circulaire.

9. Agencement selon l'une des revendications 3 à 8,
sachant que les microéchantillons comprennent un support composé d'un matériau optiquement non transparent.

10. Agencement selon l'une des revendications précédentes,
sachant que le dispositif d'interface est une interface utilisateur graphique, pour la spécification externe de l'instruction de traitement par un utilisateur, sachant que le dispositif d'interface est facultativement configuré pour recevoir et lire un support mémoire à insertion externe dans lequel l'instruction de traitement est mémorisée.

11. Agencement selon l'une des revendications précédentes,
sachant que le détecteur comprend une caméra pour la lecture optique d'une interaction spécifique, sachant que la caméra est facultativement une caméra CCD qui est facultativement fabriquée en technique CMOS, et sachant que le détecteur présente en outre facultativement une optique d'imagerie entre la caméra et le microéchantillon.

12. Agencement selon l'une des revendications précédentes,
sachant que le détecteur comprend une source lumineuse, sachant que la source lumineuse est facultativement configurée pour l'éclairage homogène du microéchantillon, sachant que la source lumineuse est facultativement sélectionnée dans le groupe constitué par un laser, une diode électroluminescente, un projecteur et une lampe haute pression.

13. Agencement selon l'une des revendications 3 à 12,
comprenant un dispositif d'amenée de liquide pour l'apport d'un liquide dans l'au moins un récipient de réaction ou dans des puits de la plaque de microtitrage.

14. Agencement selon l'une des revendications 3 à 13,
comprenant une unité de réglage de température qui est configurée pour régler une température dans le récipient de réaction ou de chacun des puits de la plaque de microtitrage.

15. Agencement selon la revendication 13 ou 14,
comprenant un dispositif de déplacement au moyen duquel le détecteur et/ou le ou les microéchantillons et/ou le dispositif d'amenée de liquide et/ou le dispositif d'évacuation de liquide et/ou l'unité de réglage de température peut ou peuvent être déplacés dans une direction spécifiable quelconque, sachant que, facultativement, le ou les microéchantillons et/ou la plaque de microtitrage présentent un marqueur pour la correction de position.

16. Agencement selon l'une des revendications précédentes, comprenant en outre un dispositif de réception destiné à recevoir une plaque de microtitrage.

17. Procédé pour le traitement d'une interaction spécifique saisie au moyen d'un agencement selon l'une des revendications 1 à 16 pour l'exécution et pour l'analyse d'expériences de microéchantillons entre des molécules cibles et des molécules sondes disposées sur des zones prédéterminées d'un microéchantillon,
sachant que, lors du procédé, une interaction spécifique saisie au moyen d'un détecteur est traitée sur la base d'une instruction de traitement spécifiée par sélection externe, et l'instruction de traitement met à disposition des informations renseignant dans quelles conditions expérimentales, sélectionnées à partir de la liste constituée par la nature du microéchantillon utilisé, la nature des solutions de lavage et de tampon utilisées, le degré de multiplexage, la configuration d'échantillon, le tableau de correspondance pour la correspondance d'espèces de sondes disposées sur une zone prédéterminée par rapport à des signaux détectés, pour la mise en corrélation des signaux entre eux, et/ou pour la correspondance des signaux par rapport à la problématique à analyser, et le tableau de valeurs seuils indiquant à partir de quelle valeur de mesure sur une zone prédéterminée un signal détecté est classé comme signal positif, une ou plusieurs expériences de microéchantillons sont à exécuter et/ou analyser dans le récipient de réaction ou sur la plaque de microtitrage.

18. Procédé selon la revendication 17,
sachant que, sur la base de l'instruction de traitement spécifiée par sélection externe, un traitement sélectif est à exécuter selon une expérience sélectionnée parmi une pluralité d'expériences de microéchantillons possibles et/ou selon au moins un paramètre expérimental sélectionné pour l'expérience de microéchantillons exécutée et/ou selon une expérience de microéchantillons spéciale.

19. Utilisation d'un agencement selon l'une des revendications 1 à 16 dans un procédé pour la mise en évidence de l'interaction spécifique entre des molécules sondes et des molécules cibles, lequel comprend les étapes suivantes :
a) interaction d'une cible avec des sondes disposées sur des zones prédéterminées (éléments d'échantillon) du microéchantillon ; et
b) détection de l'interaction.
